# EUROPÄISCHE PATENTSCHRIFT

(11) **EP 3 568 507 B1**
(45) Veröffentlichungstag und Bekanntmachung des Hinweises auf die Patenterteilung: **23.09.2020**
(21) Anmeldenummer: 18728512.7
(22) Anmeldetag: 18.04.2018
(51) Int. Cl.: C25B 3/04, C25B 11/03, C25B 11/04

(54) **HERSTELLUNG VON DENDRITISCHEN ELEKTROKATALYSATOREN ZUR REDUKTION VON CO2 UND/ODER CO**
PRODUCTION OF DENDRITIC ELECTROCATALYSTS FOR THE REDUCTION OF CO2 AND/OR CO
FABRICATION D'ÉLECTROCATALYSEURS DENDRITIQUES POUR LA RÉDUCTION DE CO2 ET/OU CO

(30) Priorität: 19.05.2017 DE 102017208518
(43) Veröffentlichungstag der Anmeldung: 20.11.2019
(73) Patentinhaber: Siemens Aktiengesellschaft, 80333 München (DE)
(72) Erfinder: KRAUSE, Ralf, 91074 Herzogenaurach (DE); RELLER, Christian, 32425 Minden (DE); SCHMID, Bernhard, 91058 Erlangen (DE); SCHMID, Günter, 91334 Hemhofen (DE)
(86) Internationale Anmeldenummer: PCT/EP2018/059868
(87) Internationale Veröffentlichungsnummer: WO 2018/210515

(56) Entgegenhaltungen:
- WO-A1-2016/134952
- WO-A2-2012/125053
- US-A1- 2013 048 506
- US-A1- 2016 215 404
- US-A1- 2017 073 825

## Beschreibung

Die vorliegende Erfindung betrifft ein Verfahren zur Herstellung einer Gasdiffusionselektrode umfassend ein Metall M, das ausgewählt ist aus Ag, Au, Cu und Mischungen und/oder Legierungen davon, eine entsprechend hergestellte Gasdiffusionselektrode, eine Elektrolysezelle mit dieser Gasdiffusionselektrode, und ein Verfahren zur Elektrolyse von CO und/oder CO₂.

### Stand der Technik

Der hierin beschriebene Stand der Technik basiert auf dem den Erfindern bekannten Wissen und stellt nicht unbedingt den aus der Literatur bekannten Stand der Technik dar, sodass sich in der nachfolgenden Beschreibung des Stands der Technik auch Passagen befinden können, die nicht nur der zitierten Literatur entnommen werden können, sondern auch auf Weiterentwicklungen der Erfinder basieren können und somit nicht zwangsläufig allgemeinen Stand der Technik darstellen.

Aktuell wird ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Durch diese Freisetzung in die Atmosphäre wird der Großteil an Kohlenstoffdioxid entsorgt, was z.B. bei einem Braunkohlekraftwerk bis zu 50000 Tonnen pro Tag betragen kann. Kohlenstoffdioxid gehört zu den sogenannten Treibhausgasen, deren negative Auswirkungen auf die Atmosphäre und das Klima diskutiert werden. Eine technische Herausforderung ist es, aus CO₂ Wertprodukte herzustellen. Da Kohlenstoffdioxid thermodynamisch sehr niedrig liegt, kann es nur schwierig zu wiederverwertbaren Produkten reduziert werden, was die tatsächliche Wiederverwertung von Kohlenstoffdioxid bisher in der Theorie beziehungsweise in der akademischen Welt belassen hat.

Ein natürlicher Kohlenstoffdioxid-Abbau erfolgt beispielsweise durch Fotosynthese. Dabei wird in einem zeitlich und auf molekularer Ebene räumlich in viele Teilschritte aufgegliederten Prozess Kohlenstoffdioxid zu Kohlehydraten umgesetzt. Dieser Prozess ist so nicht einfach großtechnisch adaptierbar. Eine Kopie des natürlichen Fotosyntheseprozesses mit großtechnischer Fotokatalyse ist bisher nicht ausreichend effizient.

Eine Alternative stellt die elektrochemische Reduktion des Kohlenstoffdioxids dar. Systematische Untersuchungen der elektrochemischen Reduktion von Kohlenstoffdioxid sind noch ein relativ junges Entwicklungsfeld. Erst seit wenigen Jahren gibt es Bemühungen, ein elektrochemisches System zu entwickeln, das eine akzeptable Kohlenstoffdioxidmenge reduzieren kann. Forschungen im Labormaßstab haben gezeigt, dass zur Elektrolyse von Kohlenstoffdioxid bevorzugt Metalle als Katalysatoren einzusetzen sind. Aus der Veröffentlichung Electrochemical CO₂ reduction on metal electrodes von Y. Hori, veröffentlicht in: C. Vayenas, et al. (Eds.), Modern Aspects of Electrochemistry, Springer, New York, 2008, pp. 89-189, sind beispielhaft Faraday Effizienzen (FE) an unterschiedlichen Metallkathoden zu entnehmen, von denen beispielhaft einige in Tabelle 1 gezeigt sind.

**Tabelle 1: Faraday Effizienzen für die Umwandlung von CO2 in verschiedene Produkte an verschiedenen Metallelektroden**

| Elektrode | CH₄ | C₂H₄ | C₂H₅OH | C₃H₇OH. | CO | HCOO⁻ | H₂ | Total |
|---|---|---|---|---|---|---|---|---|
| Cu | 33.3 | 25.5 | 5.7 | 3.0 | 1.3 | 9.4 | 20.5 | 103.5 |
| Au | 0.0 | 0.0 | 0.0 | 0.0 | 87.1 | 0.7 | 10.2 | 98.0 |
| Ag | 0.0 | 0.0 | 0.0 | 0.0 | 81.5 | | 12.4 | 94.6 |
| Zn | 0.0 | 0.0 | 0.0 | 0.0 | 79.4 | | 9.9 | 95.4 |
| Pd | 2.9 | 0.0 | 0.0 | 0.0 | 28.3 | 2.8 | 26.2 | 60.2 |
| Ga | 0.0 | 0.0 | 0.0 | 0.0 | 23.2 | 0.0 | 79.0 | 102.0 |
| Pb | 0.0 | 0.0 | 0.0 | 0.0 | 0.0 | 97.4 | 5.0 | 102.4 |
| Hg | 0.0 | 0.0 | 0.0 | 0.0 | 0.0 | 99.5 | 0.0 | 99.5 |
| In | 0.0 | 0.0 | 0.0 | 0.0 | 2.1 | 94.9 | 3.3 | 100.3 |
| Sn | 0.0 | 0.0 | 0.0 | 0.0 | 7.1 | 88.4 | 4.6 | 100.1 |
| Cd | 1.3 | 0.0 | 0.0 | 0.0 | 13.9 | 78.4 | 9.4 | 103.0 |
| Tl | 0.0 | 0.0 | 0.0 | 0.0 | 0.0 | 95.1 | 6.2 | 101.3 |
| Ni | 1.8 | 0.1 | 0.0 | 0.0 | 0.0 | 1.4 | 88.9 | 92.4 |
| Fe | 0.0 | 0.0 | 0.0 | 0.0 | 0.0 | 0.0 | 94.8 | 94.8 |
| Pt | 0.0 | 0.0 | 0.0 | 0.0 | 0.0 | 0.1 | 95.7 | 95.8 |
| Ti | 0.0 | 0.0 | 0.0 | 0.0 | 0.0 | 0.0 | 99.7 | 99.7 |

In Tabelle 1 sind Faraday Effizienzen FE (in [%]) von Produkten angegeben, die bei der Kohlenstoffdioxid-Reduktion an verschiedenen Metallelektroden entstehen. Die angegebenen Werte gelten hierbei für eine 0,1 M Kaliumhydrogencarbonatlösung als Elektrolyt.

Wird Kohlenstoffdioxid beispielsweise an Silber-, Gold-, Zink-, Palladium-, und Galliumkathoden nahezu ausschließlich zu Kohlenstoffmonoxid reduziert, entstehen an einer Kupferkathode eine Vielzahl an Kohlenwasserstoffen als Reaktionsprodukte.

So würden beispielsweise an einer Silberkathode überwiegend Kohlenmonoxid und wenig Wasserstoff entstehen. Die Reaktionen an Anode und Kathode können mit folgenden Reaktionsgleichungen dargestellt werden:

| | |
|---|---|
| Kathode: | 2 CO₂ + 4 e⁻ + 4H⁺ → 2 CO + 2 H₂O |
| Anode: | 2 H₂O → O₂ + 4 H⁺ + 4 e⁻ |

Von besonderem wirtschaftlichem Interesse ist beispielsweise die elektrochemische Erzeugung von Kohlenstoffmonoxid, Ethylen oder Alkoholen. Weitere Beispiele möglicher Produkte sind nachfolgend gezeigt:

| | |
|---|---|
| Kohlenmonoxid: | CO₂ + 2 e⁻ + H₂O → CO + 2 OH⁻ |
| Ethylen: | 2 CO₂ + 12 e⁻ + 8 H₂O → C₂H₄ + 12 OH |
| Methan: | CO₂ + 8 e⁻ + 6 H₂O → CH₄ + 8 OH⁻ |
| Ethanol: | 2 CO₂ + 12 e⁻ + 9 H₂O → C₂H₅OH + 12 OH⁻ |
| Monoethylenglykol: | 2 CO₂ + 10 e⁻ + 8 H₂O → HOC₂H₄OH + 10 OH |

Die Reaktionsgleichungen zeigen, dass für die Erzeugung von Ethylen aus CO₂ beispielsweise 12 Elektronen übertragen werden müssen. Die stufenweise Reaktion von CO₂ verläuft über eine Vielzahl von Oberflächenintermediaten (-CO₂⁻, -CO, =CH₂, -H,). Für jedes dieser Intermediate sollte eine starke Wechselwirkung mit dem Katalysatoroberfläche bzw. den aktiven Zentren gegeben sein, sodass eine Oberflächenreaktion (bzw. Weiterreaktion) zwischen den entsprechenden Adsorbaten ermöglicht wird. Die Produktselektivität ist somit direkt von der Kristallfläche bzw. deren Wechselwirkung mit den Oberflächenspezies abhängig.

So konnte beispielweise durch Experimente an einkristalllinen Hochindexflächen (Cu 711, 511) [s. Journal of Molecular Catalysis A Chemical 199(1):39-47, 2003] eine erhöhte Ethylenselektivität gezeigt werden. Materialien, die über eine hohe Anzahl kristallographischen Stufen bzw. über Oberflächendefekte verfügen, weisen ebenfalls erhöhte Ethylenselektivitäten auf, wie in C. Reller, R. Krause, E. Volkova, B. Schmid, S. Neubauer, A. Rucki, M. Schuster, G. Schmid, Adv. Energy Mater. 2017, 1602114, und DE102015203245-A1 gezeigt. Zwischen der Nanostruktur des Katalysatormaterials und der Ethylenselektivität besteht somit ein enger Zusammenhang. Für die selektive Erzeugung des Produktes Kohlenmonoxid sind bereits rein-Silberkatalysatoren verfügbar, die industriellen Anforderungen genügen. Für die selektive Elektroreduktion von CO₂ zu Ethylen bzw. Alkoholen sind jedoch derzeit keine Katalysatoren bekannt, die diesen Anforderungen entsprechen.

Neben der Eigenschaft, Ethylen selektiv zu bilden, sollte das Material auch bei hohen Umsatzraten (Stromdichten) seine Produktselektivität beibehalten, bzw. die vorteilhafte Struktur der Katalysatorzentren erhalten bleiben. Aufgrund der hohen Oberflächenmobilität von Kupfer sind die erzeugten Defekte bzw. Nanostrukturen jedoch üblicherweise nicht langzeitstabil, sodass bereits nach kurzer Zeit von 60 min eine Degradation des Elektrokatalysators zu beobachten ist. Das Material verliert durch die strukturelle Veränderung die Eigenschaft, Ethylen zu bilden. Zudem variieren bei angelegter Spannung an strukturierten Oberflächen die Potentiale leicht, sodass an gewissen Stellen auf engem Raum gewisse Intermediate bevorzugt gebildet werden, die dann an etwas anderer Stelle weiterreagieren können. Wie Untersuchungen der Erfinder hierbei gezeigt haben, sind Potentialvariationen deutlich unterhalb von 50 mV signifikant.

Bisher sind aus dem Stand der Technik keine langzeitstabilen Katalysatorsysteme bekannt, die bei hoher Stromdichte >100 mA/cm² CO2 elektrochemisch zu Ethylen reduzieren können.

Technisch relevante Stromdichten können üblicherweise unter Verwendung von Gasdiffusionselektroden erzielt werden. Dies ist aus dem bestehenden Stand der Technik beispielsweise für großtechnisch betriebene Chloralkalielektrolysen bekannt. Bekannte Cu-basierte Gasdiffusionselektroden zur Erzeugung von Kohlenwasserstoffen auf der Basis von CO2 sind beispielsweise den Arbeiten von R. Cook, J. Electrochem. Soc., Vol. 137, No. 2, 1990, S. 607-608, zu entnehmen, worin ein nasschemisches Verfahren basierend auf einer PTFE 30B (Suspension)/Cu(OAc)2/ Vulkan XC 72 Mischung erwähnt wird. Die Methode beschreibt, wie anhand von drei Beschichtungszyklen eine hydrophobe leitfähige Gastransportschicht und anhand von drei weiteren Beschichtungen eine katalysatorbeinhaltende Schicht aufgetragen werden. Nach jeder Schicht erfolgt eine Trocknungs-Phase (325°C) mit anschließendem statischen Pressvorgang (1000- 5000 Psi). Für die erhaltenen Elektrode wurde eine Faraday Effizienz von >60% und eine Stromdichte von >400 mA/cm² angegeben. Reproduktionsexperimente belegen, dass das beschriebene statische Pressverfahren nicht zu stabilen Elektroden führt. Es wurde ebenfalls ein nachteiliger Einfluss des zugemischten Vulkan XC 72 festgestellt, sodass ebenfalls keine Kohlenwasserstoffe erhalten wurden.

Um die Anzahl an Strukturdefekten zu erhöhen, bietet sich eine Nanostrukturierung des Katalysatormaterials an. Es wurde beobachtet, dass isolierte Kupfer-Nanocluster, die beispielsweise bei oxid-geträgerten Kupferkatalysatoren vorhanden sind, zu einer verstärkten Bildung des Intermediats CO führen können, jedoch nicht bzw. nur im geringen Maße die gewünschte Weiterreaktion zu Ethylen ermöglichen. Werden hingegen dendritische bzw. zusammenhängende Nanostrukturen erzeugt, können die Intermediate an der Oberfläche stabilisiert werden und zu Ethylen weiterreagieren. Die erzeugten Kupfer-Nanodendrite können ebenfalls oxidstabilisiert sein.

Die Erzeugung von derartigen Kupferdendriten ist auf dem Syntheseweg mit den aus dem Stand der Technik bekannten Synthesemethoden nicht erzielbar, da das Kristallwachstum im Reduktionsprozess des Prekursoroxids während der Aktivierung mit Wasserstoff zu langsam abläuft, sodass meist isolierte Kupfer-Cluster bzw. solide Partikel erhalten werden. Chemische Reduktionsmethoden mit N₂H₄ oder NaBH₄ führen ebenfalls zu sphärischen Primärpartikeln, die im weiteren Reaktionsverlauf agglomerieren. Die erhaltenen Katalysatoren führen in der Elektrolyse ihrerseits zu einer verstärkten Bildung von CO.

Ein anisotropisches Kristallwachstum wird generell mit diesen Methoden unter der Verwendung von "capping agents" wie z.B. Ethylendiamin erhalten. Die erzeugten Cu-Nanodrähte weisen jedoch kaum Strukturdefekte auf, da das Kristallwachstum vergleichsweise langsam stattfindet.

Die WO 2016/134952 A1 betrifft ein Verfahren zur Herstellung einer Elektrode, bei der eine Schicht umfassend einen Cu⁺/Cu⁻ enthaltenden Katalysator auf ein Nicht-Kupfer-Substrat abgeschieden wird, eine Elektrode umfassend ein Nicht-Kupfer-Substrat und eine Beschichtung umfassend einen Cu⁺/Cu⁻ enthaltenden Katalysator, sowie eine Elektrolysezelle umfassend die Elektrode.

Der WO 2012/125053 A2 ist ein Verfahren zur selektiven elektrochemischen Umsetzung von Kohlendioxid in Kohlenwasserstoffe zu entnehmen.

In der US 2016/215404 A1 ist eine katalytische Kupferelektrode ausgewählt aus der Gruppe, umfassend Kupfer-Nanoschwamm, Kupfer-Aerogel und Kupfer-Nanopartikel, beschrieben.

Die US 2017/073825 A1 offenbart einen Katalysator zur CO₂-Reduktion, wobei ein leitfähiges Material in einer wässrigen Lösung umfassend eine Goldquelle eingetaucht wird und ein Strom oder eine Spannung angelegt wird, wodurch der Katalysator gebildet wird.

In der US 2013/048506 A1 ist ein elektrolytisches Zellsystem zur Umsetzung von Kohlendioxid zu Kohlenwasserstoff gezeigt, umfassend eine erste Elektrode mit einem Substrat, welches darauf eine metallische poröse dendritische Struktur angewandt hat.

Es besteht daher ein Bedarf an einem Herstellungsverfahren für langzeitstabile Gasdiffusionselektroden mit guter Faraday Effizienz für gewünschte Produkte sowie entsprechenden Gasdiffusionselektroden. Der eingesetzte Elektrokatalysator in der Gasdiffusionselektrode sollte idealer Weise eine hohe Faraday Effizienz bei hoher Stromdichte für ein entsprechendes Zielprodukt ermöglichen. Industriell relevante Elektrokatalysatoren sollten darüber hinaus ebenfalls langzeitstabil sein.

### Zusammenfassung der Erfindung

Die Erfinder haben herausgefunden, dass langzeitstabile Gasdiffusionselektroden zum Einsatz bei der Elektrolyse von CO₂ und/oder CO umfassend vorteilhafte dendritische Strukturen zur Erzeugung gewünschter Produkte erhalten werden können, wenn als Ausgangsmaterial bei der Herstellung ein solches verwendet wird, welches mindestens eine Erdalkalimetall-Kupfer-, Erdalkali-Silber- und/oder Erdalkali-Gold-Phase umfasst. Das hier beschriebene Synthesekonzept ermöglicht insbesondere die Herstellung von Elektrokatalysatoren mit einer niedrigen Überspannung sowie einer erhöhten Selektivität für Ethylen und Alkohole. Das erfindungsgemäße Verfahren ermöglicht insbesondere eine Herstellung sehr reiner Katalysatoren, die keine nachteiligen Verunreinigungen an anderen Übergangsmetallen aufweisen. Hierbei ist es nicht ausgeschlossen, dass auch Reste der Legierungsbestandteile der Erdalkalimetalle im Katalysator oder einer gebildeten Elektrode verbleiben, welche ggf. auch zu Carbonaten wie Erdalkalicarbonaten reagieren können und oberflächlich gebildet werden können.

In einem ersten Aspekt betrifft die vorliegende Erfindung eine Gasdiffusionselektrode umfassend ein Metall M, das ausgewählt ist aus Ag, Au, Cu und Mischungen und/oder Legierungen davon, wobei die Gasdiffusionselektrode dendritische und amorphe Strukturen umfasst, wobei die Gasdiffusionselektrode Dendriten umfasst, welche Erdalkalimetall-Kupfer-, Erdalkali-Silber- und/oder Erdalkali-Gold-Phasen enthalten, wobei die Gasdiffusionselektrode herstellbar ist durch ein Verfahren, umfassend
- Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial;
- Abtrennen, Waschen und ggf. Trocknen des Katalysatormaterials; und
- Verarbeiten des Katalysatormaterials zu einer Gasdiffusionselektrode.

Ebenfalls offenbart ist ein Verfahren zur Herstellung einer erfindungsgemäßen Gasdiffusionselektrode, umfassend
- Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial;
- Abtrennen, Waschen und ggf. Trocknen des Katalysatormaterials; und
- Verarbeiten des Katalysatormaterials zu einer Gasdiffusionselektrode.

Darüber hinaus ist eine Elektrolysezelle offenbart, umfassend eine erfindungsgemäße Gasdiffusionselektrode, bevorzugt als Kathode, eine Anode und ggf. mindestens eine Membran und/oder mindestens ein Diaphragma zwischen der Kathode und Anode.

Beschrieben ist eine Elektrolyseanlage, umfassend eine erfindungsgemäße Gasdiffusionselektrode oder eine erfindungsgemäße Elektrolysezelle.

Weiterhin ist die vorliegende Erfindung auf ein Verfahren zur Elektrolyse von CO₂ und/oder CO gerichtet, wobei eine erfindungsgemäße Gasdiffusionselektrode als Kathode verwendet wird, oder wobei eine erfindungsgemäße Elektrolysezelle verwendet wird.

Auch beschrieben ist ein Katalysatormaterial umfassend ein Metall M, das ausgewählt ist aus Ag, Au, Cu und Mischungen und/oder Legierungen und/oder Salzen davon, wobei das Katalysatormaterial dendritische und amorphe Strukturen umfasst.

Weitere Aspekte der vorliegenden Erfindung sind den abhängigen Ansprüchen und der detaillierten Beschreibung zu entnehmen.

### Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
Figuren 1 bis 6 zeigen Phasendiagramme für Systeme von Cu, Ag und Au mit beispielhaften Erdalkalimetallen.
Figur 7 zeigt eine schematische Darstellung einer bestimmten Ausführungsform einer erfindungsgemäßen Gasdiffusionselektrode.
Figur 8 zeigt eine exemplarische Darstellung eines möglichen Aufbaus einer Elektrolysezelle gemäß einer Ausführungsform der vorliegenden Erfindung.
Figur 9 zeigt eine zweite exemplarische Darstellung eines möglichen Aufbaus einer Elektrolysezelle gemäß einer Ausführungsform der vorliegenden Erfindung.
Figur 10 zeigt eine dritte exemplarische Darstellung eines möglichen Aufbaus einer Elektrolysezelle gemäß einer Ausführungsform der vorliegenden Erfindung.
Figur 11 zeigt eine weitere exemplarische Darstellung eines möglichen Aufbaus einer Elektrolysezelle gemäß einer Ausführungsform der vorliegenden Erfindung.
Figur 12 zeigt eine Ausgestaltung einer beispielhaften Elektrolyseanlage zur CO₂-Reduktion.
Figuren 13 und 14 zeigen weitere beispielhafte Ausgestaltungen einer erfindungsgemäßen Elektrolyseanlage zur CO₂-Reduktion.
Figuren 15 bis 42 zeigen Daten von Ergebnissen in den Beispielen und Vergleichsbeispielen der vorliegenden Erfindung.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Gasdiffusionselektroden (GDE) sind Elektroden, in denen flüssige, feste und gasförmige Phasen vorliegen, und wo insbesondere ein leitender Katalysator eine elektrochemische Reaktion zwischen der flüssigen und der gasförmigen Phase katalysiert.

Als hydrophob wird im Rahmen der vorliegenden Erfindung wasserabweisend verstanden. Hydrophobe Poren und/oder Kanäle sind erfindungsgemäß also solche, welche Wasser abweisen. Insbesondere sind hydrophoben Eigenschaften erfindungsgemäß mit Stoffen bzw. Molekülen mit unpolaren Gruppen assoziiert.

Als hydrophil wird im Gegensatz hierzu die Fähigkeit zur Wechselwirkung mit Wasser und anderen polaren Stoffen verstanden.

In der Anmeldung beziehen sich Mengenangaben auf Gew.%, soweit es nicht anderweitig angegeben oder aus dem Zusammenhang ersichtlich ist. In der erfindungsgemäßen Gasdiffusionselektrode ergänzen sich die Gew.%-Anteile auf 100 Gew.%.

Der Normaldruck ist 101325 Pa = 1,01325 bar.

In einem ersten Aspekt betrifft die vorliegende Erfindung ein Verfahren zur Herstellung einer erfindungsgemäßen Gasdiffusionselektrode, umfassend
- Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial;
- Abtrennen, Waschen und ggf. Trocknen des Katalysatormaterials; und
- Verarbeiten des Katalysatormaterials zu einer Gasdiffusionselektrode.

In der erfindungsgemäßen Gasdiffusionselektrode können Cu, Ag und/oder Au, insbesondere Cu, als leitendes Metall wie auch als Katalysator dienen, weshalb sie beim Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon, enthalten sind. Ein besonders vorteilhaftes Erdalkalimetall ist hierbei zur Erzeugung der Gasdiffusionselektrode Mg, jedoch können langzeitstabile Gasdiffusionselektroden auch mit Ca, Sr und/oder Ba erhalten werden. Es ist erfindungsgemäß nicht ausgeschlossen, dass Mischungen der Erdalkalimetalle im Ausgangsmaterial vorhanden sind. Gemäß bestimmten Ausführungsformen umfasst das Ausgangsmaterial jedoch nur ein Erdalkalimetall.

Auch sind Ausgangsmaterialien möglich, in denen Mischungen von Kupfer, Silber und/oder Gold vorhanden sind, jedoch werden gemäß bestimmten Ausführungsformen Ausgangsmaterialien verwendet, in denen nur eines von Kupfer, Silber und/oder Gold vorhanden ist.

Die Bereitstellung des Ausgangsmaterials ist nicht besonders beschränkt, und das Ausgangsmaterial kann beispielsweise in Form von Partikeln, Pulvern, etc. bereitgestellt werden.

Eine Legierung mit den Erdalkalimetallen, beispielsweise Cu-Mg, weist gegenüber anderen Legierungen wie beispielsweise mit A1, Zr, Zn, z.B. Cu-Al, Cu-Zr, CuZn, den Vorteil auf, dass keine säurestabilen intermetallischen Phasen existieren (z.B. Al₂Cu), die bei der Elektroreduktion von CO₂ eine unerwünschte Wasserstoffbildung hervorrufen können. Entsprechend können beim Einbringen des Ausgangsmaterials in eine Lösung mit einem pH von weniger als 5 und Reagieren zu einem Katalysatormaterial vorteilhaft Dendriten durch das Herauslösen des Erdalkalimetalls erzeugt werden. Durch das Erdalkalimetall, z.B. Magnesium, als Template gelingt es, dieses Material herzustellen. Mit dem erfindungsgemäßen Verfahren sind Morphologien zugänglich, die nicht nur die thermodynamischen Minimumsflächen (111, 100) beinhalten.

Die Menge an Erdalkalimetall im Ausgangsmaterial ist nicht besonders beschränkt. Gemäß bestimmten Ausführungsformen umfasst das Ausgangsmaterial das Erdalkalimetall in einer Menge von 1 bis 99 At.%, z.B. 12 bis 98,5 At.%, bevorzugt 55 bis 98 At.%, weiter bevorzugt 60 bis 95 At.%, noch weiter bevorzugt 62 bis 90 At.%, z.B. 65 bis 90 At.%, z.B. 65 bis 80 At.%, wobei gemäß bestimmten Ausführungsformen der Rest des Ausgangsmaterials im Wesentlichen durch das Metall M gebildet ist. Für die Reaktion können also Elementzusammensetzungen über den gesamten Bereich des Phasendiagrams ausgewählt werden, z.B. 1 At.% Mg - 99 At.% Mg, vorzugsweise ein Bereich von 90 At.% Mg - 65 At.% Mg. Die eingesetzte Legierung hat vorzugsweise einen Gehalt an Metall M, beispielsweise Kupfergehalt, von 35 At.%, und einen Erdalkalimetallgehalt von 65 At.%, z.B. Mg.

Gemäß bestimmten Ausführungsformen weist das Ausgangsmaterial mindestens eine Phase auf, die ausgewählt ist aus Mg₂Cu, CaCu₅, SrCu₅, CuSr, BaCu, BaCu₁₃, Ca₂Ag₉, Ca₂Ag₇, CaAg₂, Ca₅Ag₃,MgAg, Mg₂₅Ag₈, SrAg₅, SrAg₂, SrAg, Sr₃Ag₂, BaAg₅, BaAg₂, BaAg, CaAu₅, CaAu₃, CaAu₂,CaAu, Ca₅Au₄, Ca₇Au₃, MgAu, Mg₂Au, Mg₃Au, SrAu₅, SrAu₂, SrAu, Sr₃Au₂, Sr₇Au₃, Sr₉Au, BaAu₅, BaAu₂, Ba₃Au₂, BaAu und Mischungen davon, bevorzugt Mg₂Cu, Mg₂₅Ag₈ und/oder Mg₂Au, weiter bevorzugt Mg₂Cu, wobei M ausgewählt ist aus Ag, Au, Cu und Mischungen und/oder Legierungen davon, bevorzugt Cu. Mit diesen Phasen können vorteilhafte dendritische Strukturen in der Gasdiffusionselektrode gebildet werden. Gemäß bestimmten Ausführungsformen besteht das Ausgangsmaterial im Wesentlichen aus einer Phase, die ausgewählt ist aus Mg₂Cu,CaCu₅, SrCu₅, CuSr, BaCu, BaCu₁₃, Ca₂Ag₉, Ca₂Ag₇, CaAg₂, Ca₅Ag₃, MgAg, Mg₂₅Ag₈, SrAg₅, SrAg₂, SrAg, Sr₃Ag₂, BaAg₅, BaAg₂, BaAg, CaAu₅, CaAu₃, CaAu₂, CaAu,Ca₅Au₄, Ca₇Au₃, MgAu, Mg₂Au, Mg₃Au, SrAu₅, SrAu₂, SrAu, Sr₃Au₂, Sr₇Au₃, Sr₉Au, BaAu₅, BaAu₂, Ba₃Au₂, BaAu und Mischungen davon, bevorzugt Mg₂Cu, Mg₂₅Ag₈ und/oder Mg₂Au, weiter bevorzugt Mg₂Cu wobei M ausgewählt ist aus Ag, Au, Cu und Mischungen und/oder Legierungen davon, wobei noch andere Phasen im Ausgangsmaterial vorhanden sein können. Eine vorteilhafte Ausgangslegierung besteht beispielsweise hauptsächlich aus der intermetallischen Lavesphase Mg₂Cu. Es können sich hierbei jedoch ebenfalls Spuren der Lavesphase Cu₂Mg finden. Neben den stabilen intermetallischen Phasen Cu₂Mg und Mg₂Cu ist eine dritte metastabile Cu₃Mg Phase bekannt, die durch schnelles Quenchen einer Schmelze erhalten werden kann. Durch Rascherstarrung kann ebenfalls eine amorphe Legierung mit einem Magnesiumgehalt von 14,5 At.% erhalten werden, in der die Nahordnung der Cu-Atome denen der vorteilhaften Mg₂Cu-Phase entspricht und die ebenfalls für die Synthese der Kupferdendrite verwendet werden kann.

Geeignete Phasen können beispielsweise einfach unter Zuhilfenahme von Phasendiagrammen bestimmt werden.

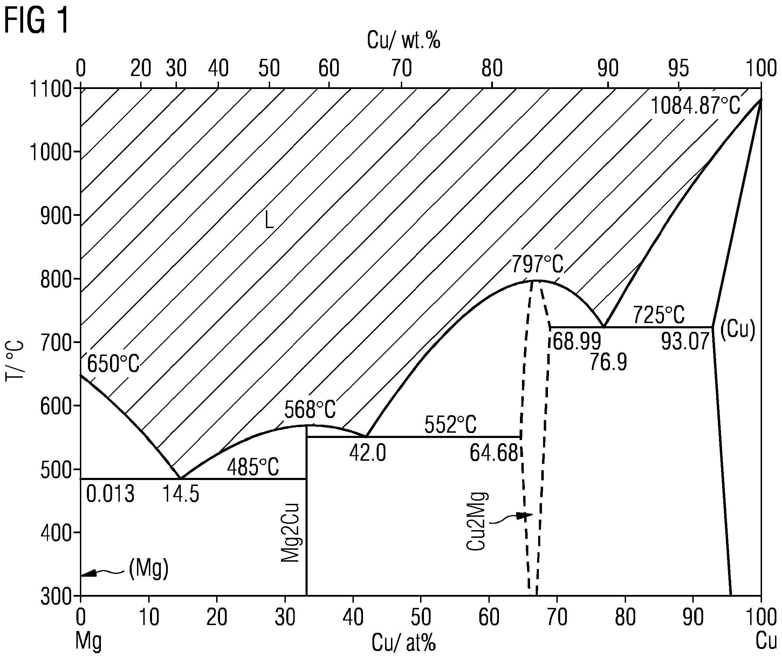

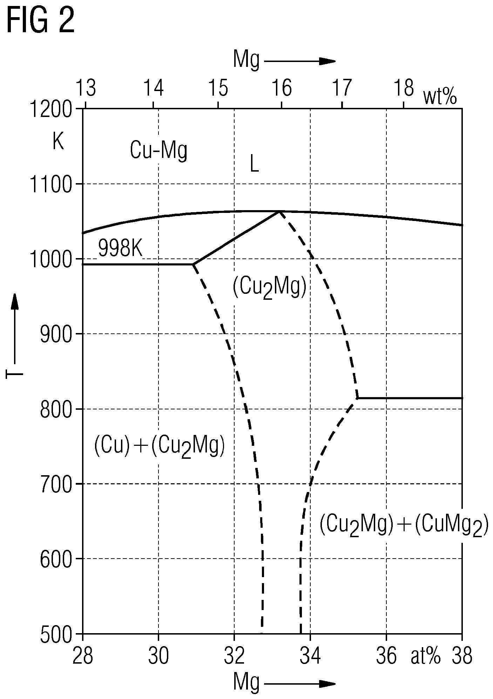

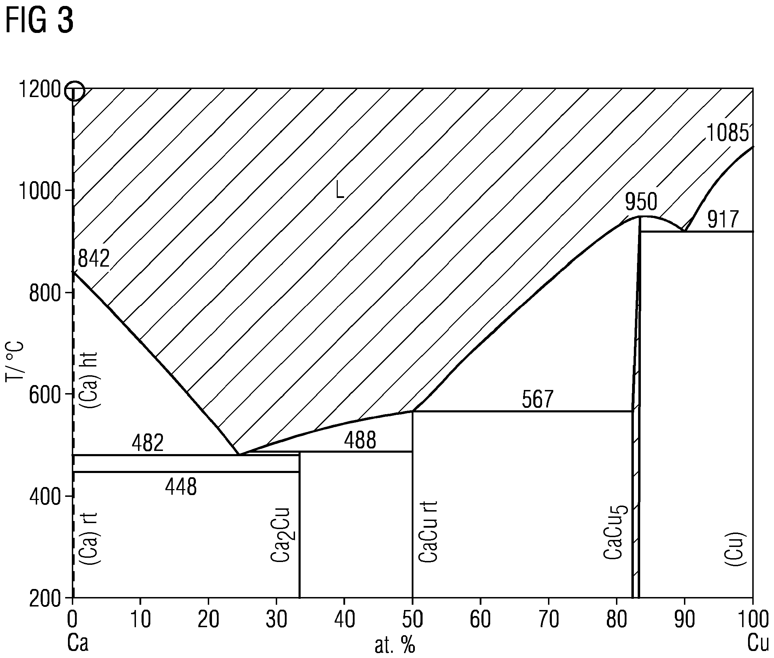

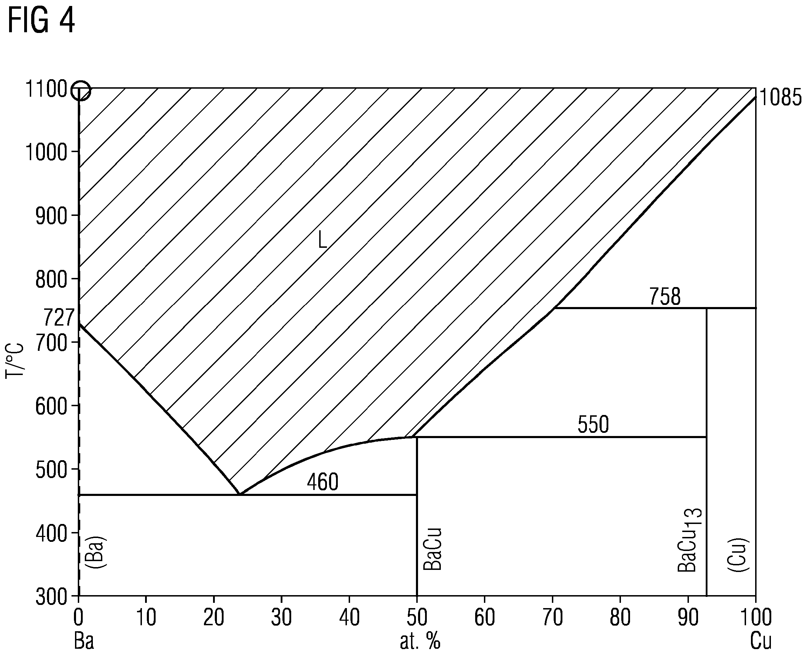

So zeigt beispielsweise Fig. 1 ein Phasendiagram für das System Cu-Mg, und Fig. 2 den Homogenitätsbereich von Cu₂Mg im Detailbereich von 28-38 At.% Mg [beide entnommen aus (B. Predel: Phase Equilibria, Crystallographic, Thermodynamic Data of Binary Alloys, Landolt Börnstein, NEW Series IV/5 Springer Berlin, Heidelberg 1991-1998)
So sind beispielsweise neben dem System Cu-Mg auch Cu-Ca-, Cu-Ba-Legierungen als Ausgangsmaterial denkbar, jedoch sind diese schwerer darstell- und verarbeitbar. Die entsprechenden Phasendiagramme sind beispielhaft in Fig. 3 und Fig. 4 gezeigt, wobei Fig. 3 das Phasendiagramm für Cu-Ca zeigt (http://materials.springer.com/isp/phasediagram/docs/c_0900536), und Fig. 4 das Phasendiagramm für Cu-Ba (Okamoto, Hiroaki, Ba-Cu Binary Phase Diagram 0-100 at.% Cu, Springer Materials, Berlin Heidelberg 2012.

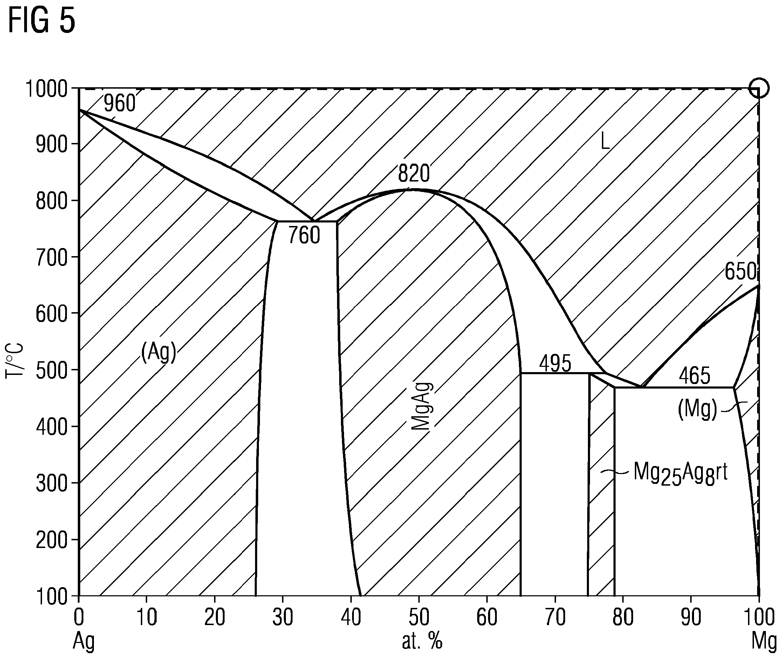

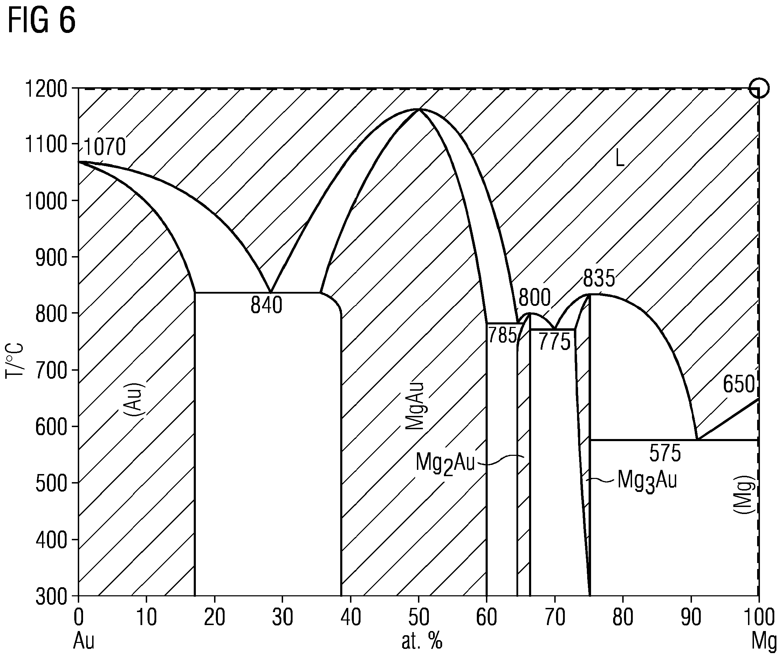

Neben Cu sind auch für Ag und Au geeignete Phasen als Ausgangsmaterial bekannt, wobei hier beispielhaft Phasendiagramme für das System Ag-Mg in Fig. 5 und für das System Au-Mg in Fig. 6 gezeigt sind. (G. Zanicchi, R. Marazza, O. Fabrichnaya and MSIT ®, G. MSI Eureka in Springer Materials, 2002.;

Inorganic Solid Phases, Springer Materials, Springer, Heidelberg (ed.), 2016.)

Gemäß bestimmten Ausführungsformen wird das Ausgangsmaterial als Pulver mit einer Partikelgröße von weniger als 500 µm, bevorzugt weniger als 350 µm, z.B. 200 µm oder weniger, beispielsweise 100 µm oder weniger, bevorzugt < 75 µm, und/oder >200 nm, z.B. >500nm, ggf. auch 10 µm oder mehr, bereitgestellt. Gemäß bestimmten Ausführungsformen können Partikel mit einer gröberen Körnungen von 75 µm - 200 µm verwendet werden, beispielsweise in einem Anteil von 50-95 Gew.%wt% bevorzugt, 85-95 Gew.%, bezogen auf das Ausgangsmaterial. Die Partikelgröße kann hierbei beispielsweise mikroskopisch mittels Bildanalyse, durch Laserbeugung und/oder dynamische Lichtstreuung bestimmt werden. Weiterhin haben die Partikel des Ausgangsmaterials/- legierung gemäß bestimmten Ausführungsformen eine hohe Reinheit ohne Fremdmetallspuren.

Das Einbringen des Ausgangsmaterials in eine Lösung mit einem pH von weniger als 5 und reagieren zu einem Katalysatormaterial ist erfindungsgemäß nicht beschränkt. Hierdurch kann das Reagieren des Erdalkalimetalls und die Bildung der Katalysatorstruktur für die Gasdiffusionselektrode erfolgen.

Die Lösung mit einem pH von weniger als 5, bevorzugt weniger als 4, weiter bevorzugt weniger als 3, noch weiter bevorzugt von weniger als 2, z.B. von weniger als 1 bzw. stark sauer ist erfindungsgemäß nicht besonders beschränkt, und kann eine Lösung einer Säure in einem geeigneten Lösungsmittel, z.B. Wasser, sein. Die Säure ist hierbei nicht besonders beschränkt, wobei beispielsweise das Anion der Säure mit dem Erdalkalimetall eine lösliche Verbindung im Lösungsmittel, also beispielsweise ein wasserlösliches Salz, bildet, sodass das verbleibende Material leicht abgetrennt werden kann. Eine geeignete Säure ist beispielsweise wässrige Salzsäure, Essigsäure, etc.

Während der Säurebehandlung der Legierung erfolgt ein rasches Herauslösen des Erdalkalimetalls, z.B. von Magnesiumatomen, aus dem Metallgitter des Metalls M, sodass zunächst eine Raneyartige Struktur, z.B. Raney-Kupferstruktur, entsteht.

Ein beispielhafter Auflösungsprozess ist wie folgt für ein Cu-Mg-System:

Cu₂Mg + 2HCl → 2Cu +MgCl₂ +H₂

CuMg₂ + 4HCl → Cu + 2MgCl₂+ 2H2

Mg+2HCl → MgCl₂ + H₂

Das anschließende Abtrennen, Waschen und ggf. Trocknen des Katalysatormaterials ist nicht besonders beschränkt. Beispielsweise kann es abfiltriert und mit Wasser, z.B. bidestilliertem Wasser, gewaschen werden, wobei jegliches andere Abtrennen und auch Waschen mit anderen Lösungsmitteln möglich ist.

Gemäß bestimmten Ausführungsformen wird das Katalysatormaterial nach dem Abtrennen, Waschen und ggf. Trocknen des Katalysatormaterials kalziniert bzw. teilweise oxidiert. Gemäß bestimmten Ausführungsformen wird das Ausgangsmaterial beim Einbringen des Ausgangsmaterials in eine Lösung mit einem pH von weniger als 5 und Reagieren zu einem Katalysatormaterial nicht komplett reagiert, insbesondere wenn das Katalysatormaterial nach dem Abtrennen, Waschen und ggf. Trocknen des Katalysatormaterials kalziniert wird. Dies kann beispielsweise durch die Reaktionszeit, abhängig vom Metall M und dem Erdalkalimetall sowie der verwendeten Säure, etc., geeignet eingestellt werden. So kann beispielsweise die Abbruchzeit bei einem pH von 1 oder weniger 10s betragen, und eine schwächere Säure kann zum Optimieren der Abbruchzeit verwendet werden. So kann bei einer Halbierung der Säurestärke gewöhnlich die Abbruchzeit um etwa den Faktor 2 verlängert werden.

Das Kalzinieren ist hierbei nicht besonders beschränkt und kann beispielsweise an Luft oder im O₂/Argon-Gasstrom und/oder unter Anwesenheit von S, Se, H₂S, H₂Se, PH₃, etc. beispielsweise für eine Dotierung, erfolgen. Es kann hierbei auch eine thermische Behandlung erfolgen.

Die erzeugten Oxidprekursoren können je nach Methode im Anschluss direkt in einem H₂/Ar Gasstrom reduziert werden. Der Aktivierungsschritt kann auch im Nachhinein elektrochemisch erfolgen. Um die elektrische Leitfähigkeit der aufgebrachten Schicht vor der elektrochemischen Aktivierung zu verbessern, können auch teilweise Oxidprekursoren und aktivierten Prekursoren gemischt werden.

Es ist erfindungsgemäß ebenfalls nicht ausgeschlossen, dass die fertig kalandrierte Elektrode einer nachträglichen Kalzinierung / thermischen Behandlung unterworfen wird, bevor die elektrochemische Aktivierung durchgeführt wird.

Gemäß bestimmten Ausführungsformen wird beim Einbringen des Ausgangsmaterials weiter mindestens eine Verbindung von Cu, Ag und/oder Au, bevorzugt von Cu⁺, Ag⁺ und/oder Au⁺, eingebracht. Diese ist hierbei nicht besonders beschränkt und kann beispielsweise Salze und/oder Komplexe der Metalle umfassen. Beispielhafte Verbindungen werden auch nachstehend in Verbindung mit der erfindungsgemäßen Gasdiffusionselektrode beschrieben. Auch kann eine solche Verbindung nach dem Abtrennen, Waschen und ggf. Trocknen und ggf. Kalzinieren eingebracht werden, bevor das Katalysatormaterial zu einer Gasdiffusionselektrode verarbeitet wird.

Findet die Säurebehandlung in Anwesenheit von gelösten Metallionen, z.B. Kupferionen, statt, kann zusätzlich zu der Erzeugung einer defektreichen Raneystruktur ein simultanes Aufwachsen von dedritischen Kupferstrukturen erfolgen. Bei diesem Prozess können gebildete Wasserstoffblasen, z.B. aus der Säure, als Templat für das Kupferwachstum dienen. Ein entsprechender Effekt wurde bereits bei der elektrochemischen Abscheidung von Kupfer bei hohen Potentialen nachgewiesen. Für diesen Ansatz ist ebenfalls eine erdalkalimetallreiche, z.B. magnesiumreiche, Phase, z.B. Mg₂Cu, vorteilhaft. So weist Mg₂Cu ein deutlich stärkeres Hydrolyseverhalten als Cu₂Mg auf, da die Bindungsstärke der Cu-Cu Bindung deutlich geringer ist. Ein Hydrolyseverhalten kann hier beispielsweise schon in reinem Wasser beobachtet werden [Materials Letters 2008, 62, 19, S. 3331-3333].

Gemäß bestimmten Ausführungsformen wird ein Metalloxid des Metalls M in der Oxidationsstufe +I des Metalls gebildet. Die Herstellung unter der Anwesenheit von Luftsauerstoff ist dafür beispielsweise ausreichend. Eine Durchführung der Synthese unter Inertgas ist somit nicht vorteilhaft. Durch das Vorhandensein des Metalls M in der Stufe +I in Form eines Oxids kann die Katalysatorstruktur stabilisiert werden. Neben strukturellen Aspekten fördert insbesondere eine dünne Schicht an Cu₂O auf der Oberfläche des Katalysatormaterials die Ethylenselektivität des Katalysators.

Gemäß bestimmten Ausführungsformen wird beim Einbringen des Ausgangsmaterials weiter mindestens ein Trägermaterial eingebracht, das ausgewählt ist aus Metalloxiden, bevorzugt Al₂O₃, z.B. γ-Al₂O₃, MgO, TiO₂, Y₂O₃, ZrO₂ und Mischungen davon, bevorzugt TiO₂, wobei der Anteil des Trägermaterials im Katalysatormaterial bevorzugt 2 bis 40 Gew.% beträgt, weiter bevorzugt 3 bis 30 Gew.%, noch weiter bevorzugt 5 bis 10 Gew.%. Auch dieses kann beim Einbringen des Ausgangsmaterials und/oder nach dem Abtrennen, Waschen und ggf. Trocknen und ggf. Kalzinieren eingebracht werden.

Durch das Trägermaterial können hierbei Mischoxide mit dem Erdalkalimetall gebildet werden, welche die Gasdiffusionselektrode und/oder das Katalysatormaterial weiter stabilisieren können. So werden beispielsweise, wenn Mg im Material vorhanden ist, bei Zusatz von TiO₂ Oxide wie Mg₂TiO₄ ins Metall M, z.B. Kupfer, integriert und nicht nur beigemischt. Diese können zusätzlich die für eine Katalyse wichtige Oxidationsstufe +I des Metalls M, z.B. Cu⁺, stabilisieren.

Als nachteilig hat sich hier jedoch bei Cu als Metall M die Herstellung unter der Anwesenheit eines gelösten Salzes des Metalls M, also eines Kupfersalzes, gezeigt, da durch die Imprägnierung eine Bildung geträgerter Cu-Clustern erfolgt, die eine Faraday Effizienz >45% für CO aufweisen können.

Die geträgerten Katalysatoren, also mit dem Trägermaterial, weisen bevorzugt einen Oxidgehalt von 3 bis 35 Gew.%, z.B. 4-30 Gew.% auf. Vorzugsweise liegt dieser im Bereich von 5-10 Gew.%, z.B. bei etwa 10 Gew.%. Es wurde beobachtet, dass bei der Synthese auch ein geringer Anteil (<2%) eines inversen Spinells, z.B. eines Mg₂TiO₄ Spinells, entstehen kann.

Bevorzugt ist eine in situ Stabilisierung der Struktur, z.B. für Cu das Erreichen der Kupfer-Perkolationsbarriere, sodass eine elektrische Leitfähigkeit des Materials gegeben ist. Es ist erfindungsgemäß nicht ausgeschlossen, dass ein Teil des im Katalysator vorkommenden Metalls M, z.B. Kupfer, als Metall-(I)-Oxid, z.B. Kupfer-(I)-Oxid, vorliegt. Das Vorkommen von Metall-(II)-Oxid, z.B. Kupfer-(II)-Oxid wird bevorzugt vermieden, sodass dieses einen Anteil von maximal 5 Gew.%, bevorzugt weniger von 2 Gew.%, weiter bevorzugt von weniger als 1 Gew.% ausmacht, bezogen auf das Katalysatormaterial, und bevorzugt im Wesentlichen nicht im Katalysatormaterial vorkommt. Durch die Oxidträgerung kann eine erhöhte Stabilität des Katalysators (z.B. mit 10 Gew.% TiO₂) bei Stromdichten >250mA/cm² erhalten werden.

Das Verarbeiten des Katalysatormaterials zu einer Gasdiffusionselektrode ist erfindungsgemäß nicht besonders beschränkt.

Gemäß bestimmten Ausführungsformen umfasst das Verarbeiten des Katalysatormaterials zu einer Gasdiffusionselektrode die folgenden Schritte:
- Herstellung einer Mischung umfassend das Katalysatormaterial und mindestens einen Binder,
- Auftragen der Mischung umfassend das Katalysatormaterial und mindestens einen Binder auf ein Substrat, bevorzugt in Form eines Flächengebildes, und
- trockenes oder angefeuchtetes Aufwalzen der Mischung auf den Träger zum Bilden einer Schicht; oder
- Auftragen des Katalysatormaterials auf ein Substrat, bevorzugt in Form eines Flächengebildes, und
- trockenes oder angefeuchtetes Aufwalzen des Katalysatormaterials auf den Träger zum Bilden einer Schicht. Des Weiteren kann eine non-solvent-casting Methode als Rolle zu Rolle Prozess, etc., verwendet werden, der aus dem Stand der Technik bekannt ist.

So ein Auftragen des Katalysatormaterials auf ein Substrat, bevorzugt in Form eines Flächengebildes, und ein trockenes oder angefeuchtetes Aufwalzen des Katalysatormaterials auf den Träger zum Bilden einer Schicht erfolgt, kann darauf auch eine weitere Schicht mit einem Binder und dem Katalysatormaterial gebildet werden. Andererseits kann auch bei der Herstellung einer Mischung umfassend das Katalysatormaterial und mindestens einen Binder, dem Auftragen der Mischung umfassend das Katalysatormaterial und mindestens einen Binder auf ein Substrat, bevorzugt in Form eines Flächengebildes, und dem trockenes oder angefeuchtetes Aufwalzen der Mischung auf den Träger zum Bilden einer Schicht, auf diese Schicht eine weitere Schicht umfassend das Katalysatormaterial und optional einen Binder, ggf. in geringerer Menge als in der zuerst aufgetragenen Schicht, aufgebracht werden. Es können also auch mehrschichtige Gasdiffusionselektroden gebildet werden. Die mehreren Schichten können auch gleichzeitig auf dem Substrat gebildet werden, indem die entsprechenden Materialien konsekutiv auf das Substrat aufgebracht werden.

Gemäß bestimmten Ausführungsformen wird beim erfindungsgemäßen Herstellungsverfahren ein Trockenkalandrierverfahren verwendet, bei dem beispielsweise eine Mischung aus Binder, z.B. einem kaltfließendem Polymer, z.B. vorzugweise PTFE, dem jeweiligen Pulver des Metalls M bzw. des Katalysatorpulvers und ggf. des Pulvers eines Trägermaterials hergestellt wird, z.B. in einer Intensivmischvorrichtung bzw. im Labormaßstab mit einer Messermühle (IKA). Zur Herstellung der Mischung kann beispielsweise eine Messermühle verwendet werden, wobei die Mischdauer beispielsweise 60 - 200 s, vorzugsweise 90-150 s dauern kann. Die Mischprozedur kann beispielsweise auch der folgenden Vorgehensweise folgen: 30sec Mahlen/Mischen und 15sec Pause für insgesamt 6 min, bezogen auf die Messermühle mit 50g Gesamtbeladung. Eine Grundschicht kann beispielsweise aus Pulvermischungen aus einem Metall M, z.B. einem Cu-Pulver, mit einer Korngröße von 100-160µm mit Binder, z.B. 10-15 Gew.% PTFE Dyneon TF 1750, oder 7-10 Gew.% Dyneon TF 2021, hergestellt werden.

Gemäß bestimmten Ausführungsformen umfasst der Binder ein Polymer, beispielsweise ein hydrophiles und/oder hydrophobes Polymer, beispielsweise ein hydrophobes Polymer, z.B. PTFE. Hierdurch kann eine geeignete Einstellung der vorwiegend hydrophoben Poren bzw. Kanäle erzielt werden.

Das gemischte Pulver kann nach dem Mischvorgang eine leicht klebrige Konsistenz erreichen. Je nach Pulvermenge bzw. gewähltem Polymer bzw. Kettenlänge bzw. Ionenaustauschermaterial kann die Mischdauer auch variieren, bis dieser Zustand erreicht wird.

Gemäß bestimmten Ausführungsformen liegt das Katalysatormaterial für die Herstellung der Mischung in Form von Partikeln bzw. Katalysatorpartikeln vor, welche beispielsweise eine einheitliche Partikelgröße zwischen 1 und 80 µm, bevorzugt 2 bis 50 µm, weiter bevorzugt zwischen 3-5 µm haben. Die Partikelgröße kann hierbei beispielsweise mikroskopisch mittels Bildanalyse, durch Laserbeugung und/oder dynamische Lichtstreuung bestimmt werden. Weiterhin haben die Katalysatorpartikel und/oder Legierungspartikel gemäß bestimmten Ausführungsformen eine hohe Reinheit ohne Fremdmetallspuren. Durch geeignete Strukturierung, ggf. mit Hilfe der Promotoren, wie oben beschrieben, kann eine hohe Selektivität und Langzeitstabilität erzielt werden.

Gemäß bestimmten Ausführungsformen kann auch ein Ionenaustauschermaterial in eine oder mehrere Schichten der GDE eingebracht werden oder zusammen mit dem Material auf eine kommerziell erhältliche GDE. Beispielsweise kann ein Ionomer wie z.B. 20%ige alkoholische Suspension oder eine 5% Suspension aus einem Anionenaustauscherionomer (As 4 Tokuyama) verwendet werden. Darüber hinaus ist beispielsweise die Verwendung von Typ 1 und Typ 2 Anionenaustauscherharzen möglich.

Durch geeignete Einstellung der Partikelgrößen von Metall M, Binder und ggf. weiterer Materialien, z.B. Trägermaterial, Ionenaustauschermaterial, etc., können die Poren und/oder Kanäle, also die hydrophoben und hydrophilen Poren und/oder Kanäle, der GDE gezielt eingestellt werden für den Durchlass an Gas und/oder Elektrolyt und somit für die katalytische Reaktion.

Das Auftragen einer ersten und weiteren Mischung(en) ist nicht besonders beschränkt und kann beispielsweise durch Aufstreuen, Aufsieben, Rakeln, etc. erfolgen.

Die erhaltene Pulvermischung kann also beispielsweise im Anschluss auf den Träger, z.B. ein Metallnetz, z.B. mit einer Maschenweite von >0.5mm<1.0mm und einem Drahtdurchmesser von 0.1-0.25 mm, in geeigneter Schüttdicke aufgestreut bzw. ausgesiebt werden. Damit das Pulver nicht durch das Netz rieselt, kann die Rückseite des Netzes mit einer Folie versiegelt werden. Die vorbereitete Schicht kann beispielsweise dann mit Hilfe einer Zweirollenwalzeinrichtung (Kalander) verdichtet werden.

Das Aufwalzen ist nicht besonders beschränkt und kann auf geeignete Weise erfolgen. Ggf. können hierzu die jeweiligen Mischungen angefeuchtet werden, beispielsweise zu einer Feuchte von 20 Gew.% oder weniger, z.B. 5, 4, 3, 2, 1 oder weniger Gew.%, bezogen auf die jeweilige Mischung. Ein Einwalzen der Mischung bzw. Masse (Partikel) in die Struktur des Substrats, beispielsweise eine Netzstruktur, ist gemäß bestimmten Ausführungsformen ausdrücklich erwünscht, um eine hohe mechanische Stabilität der Elektrode und gute elektrische Kontaktierung zu gewährleisten.

Infolge dessen ist es auch bei der Auftragung mehrerer Schichten bevorzugt, dass die Mischungen für die Schichten einzeln auf das Substrat aufgetragen werden und dann insgesamt aufgewalzt werden, um eine bessere Haftung zwischen den Schichten zu erzielen.

Die mechanische Beanspruchung des Binders, beispielsweise von Kunststoffpartikeln, durch den Walzprozess führt zur Vernetzung des Pulvers durch die Ausbildung von Binderkanälen, beispielsweise PTFE-Fibrillen. Das Erreichen dieses Zustandes ist besonders wichtig, um eine geeignete Porosität bzw. mechanische Stabilität der Elektrode zu garantieren. Die Hydrophobizität kann über den jeweiligen Gehalt an Binder, z.B. Polymer und ggf. Ionentransportmaterial und/oder Trägermaterial, etc. bzw. über die physikalischen Eigenschaften des Metalls M bzw. des Katalysatorpulvers eingestellt werden.

Der Grad der Fibrillierung des Binders, beispielsweise PTFE, (Strukturparameter ζ) korreliert direkt mit der aufgebrachten Scherrate, da sich der Binder, beispielsweise ein Polymer, als scher-verdünnendes (pseudoplastisches) Fluid beim Auswalzen verhält. Nach der Extrusion weist die erhaltene Schicht durch die Fibrillierung einen elastischen Charakter auf. Diese Strukturänderung ist irreversibel, sodass sich dieser Effekt durch weiteres Auswalzen nicht mehr nachträglich verstärken lässt, sondern die Schicht durch das elastische Verhalten bei weiterer Einwirkung von Scherkräften beschädigt wird. Eine besonders starke Fibrillierung kann nachteilig zu einem schichtseitigen Zusammenrollen der Elektrode führen, so dass zu hohe Gehalte an Binder vermieden werden sollten.

Eine Temperierung der Walzen beim Aufwalzen kann den Fließprozess zusätzlich unterstützen. Der bevorzugte Temperaturbereich der Walzen liegt zwischen Raumtemperatur, z.B. 20 - 25°C, und 200°C, z.B. 20 - 200°C, z.B. 20 - 150°C, vorzugsweise zwischen 25 und 100°C, z.B. zwischen 40 und 100°C, bzw. vorzugsweise zwischen 60-80°C betragen.

Gemäß bestimmten Ausführungsformen wird das Walzen bzw. Kalandrieren bei einer Walzendrehzahl zwischen 0,3 bis 3 U/min, bevorzugt 0,5-2 U/min durchgeführt. Gemäß bestimmten Ausführungsformen liegt die Flussrate bzw. Vorschubgeschwindigkeit (der GDE in Länge pro Zeit, beispielsweise beim Kalandrieren) Q im Bereich von 0,04 bis 0,4 m/min, bevorzugt 0,07 bis 0,3m/min.

Für ein trockenes Aufwalzen ist es bevorzugt, dass der Wassergehalt beim Walzen beispielsweise maximal der Raumfeuchte entspricht. Beispielsweise ist der Gehalt an Wasser und Lösungsmitteln beim Aufwalzen kleiner als 5 Gew.%, bevorzugt kleiner als 1 Gew.%, und beispielsweise auch 0 Gew.%.

Gemäß bestimmten Ausführungsformen ist der Träger ein Netz, z.B. umfassend das Metall M, mit einer Maschenweite w von 0,3 mm < w < 2,0 mm, bevorzugt 0,5 mm < w < 1,4 mm und einem Drahtdurchmesser x von 0,05 mm < x < 0,5 mm, bevorzug 0,1 mm ≤ x ≤ 0,25 mm.

Gemäß bestimmten Ausführungsformen liegt die Schütthöhe y der ersten Mischung auf dem Träger beim Auftragen im Bereich von 0,2 mm < y < 3,0 mm, bevorzugt 0,3 mm ≤ y ≤ 2,0 mm. Bei mehreren Schichten kann jede Schicht eine entsprechende Schütthöhe y haben, wobei sich die Schütthöhen aller Schichten bevorzugt jedoch zu nicht mehr als 3,0 mm, bevorzugt nicht mehr als 2 mm, weiter bevorzugt zu nicht mehr als 1,5 mm, addieren. Besonders bevorzugt sind Schichtdicken unterhalb 1 mm, z.B. unterhalb 0,5 mm.

Gemäß bestimmten Ausführungsformen erfolgt das Aufwalzen durch einen Kalander. Gemäß bestimmten Ausführungsformen kann somit das erfindungsgemäße Verfahren durch einen Kalandrierprozess erfolgen, wobei andere Herstellungsprozesse jedoch nicht ausgeschlossen sind. Der Walzprozess selbst ist dadurch gekennzeichnet, dass sich vor der Walze ein Reservoir an Material bildet. Gemäß bestimmten Ausführungsformen beträgt die Spaltbreite beim Aufwalzen H₀ die Höhe des Trägers + 40% bis 50% der Gesamtschütthöhe Hf der Mischungen der verschiedenen Schichten, beispielsweise der Schütthöhe y der ersten Mischung, wenn nur diese verwendet wird, oder entspricht nahezu der Dicke des Netzes +0.1-0.2mm Zustellung. Das Verhältnis zwischen Austrittsdicke H und Spaltbreite H₀ sollte bevorzugt im Bereich von 1.2 liegen.

Das Material kann alternativ auch, z.B. als Suspension, auf eine kommerziell erhältliche Gasdiffusionselektrode (GDE) (z.B. Freudenberg C2, Sigracet 35 BC) aufgetragen und darin eingearbeitet werden.

Besonders aktive C₂H₄-entwickelnde Elektroden können beispielsweise erhalten werden, wenn das Katalysatormaterial auf eine bereits bestehende Elektrode ohne einen zusätzlichen Binders aufgesiebt wird und mit diesem verbunden wird.

Nachfolgend sind beispielhaft konkrete Verfahren zur Herstellung einer Gasdiffusionselektrode mit zweischichtigem und einschichtigem Aufbau dargelegt.

Herstellung einer Gasdiffusionselektrode mit zweischichtigem Aufbau:
Um eine fortschreitende Durchflutung der für den Gastransport benötigten hydrohoben Bereiche der GDE zu verhindern, kann ein zweischichtiger Aufbau verwendet werden. Dazu kann beispielsweise auf das Substrat als Stromverteiler eine hydrophobe Grundschicht, z.B. mit 15 Gew.% PTFE und 85 Gew.% Pulver des Metalls M, z.B. Cu oder Ag, hergestellt werden, auf die eine weitere Schicht aufgebracht wird. Die extrudierte Grundschicht sollte dabei bevorzugt eine Dicke von 50 - 500 µm aufweisen, vorzugsweise 100 - 400 µm. Die Grundschicht kann beispielsweise durch eine sehr hohe Leitfähigkeit, z.B. <7 mOhm/cm, gekennzeichnet sein und eine hohe Porosität von z.B. 50-70 % und einen hydrophoben Charakter aufweisen. Die Grundschichtschicht kann im Bereich der Überlappungszone zur Katalysatorschicht, der ersten Schicht, selbst katalytisch aktiv sein. Sie dient zur besseren flächigen elektrischen Anbindung des Elektrokatalysators und kann aufgrund der hohen Porosität die Verfügbarkeit von Gas, z.B. die CO₂-Verfügbarkeit, verbessern. Mit Hilfe dieser Methode kann gemäß bestimmten Ausführungsformen die benötigte Menge an Katalysator um den Faktor 20-30 verringert werden. Eine entsprechende Elektrokatalysator bzw. Metall M/Binder, z.B. PTFE/Ionenaustauscher Mischung kann in einem nachfolgenden Schritt auf die Grundschicht aufgesiebt und ebenfalls kalandriert werden. Die Präparation kann auch mit der Herstellung der Katalysatorschicht beginnen und die Auftragung von Binder, z.B. PTFE, auf der Netz-Rückseite nachträglich erfolgen. Der verwendete Binder, z.B. PTFE, kann ggf. vorher ebenfalls in einer Messermühle vorbehandelt werden, um eine Faserbildung zu erreichen. Eine beispielhafte Herstellung der Gasdiffusionselektrode mit Binder, z.B. PTFE, basierter Diffusionsbarriere kann auf mehreren Schichten basieren, die nicht isoliert voneinander zu betrachten sind, sondern in den Grenzbereichen eine möglichst breite Überlappungszone, z.B. von 1-20 µm aufweisen. Die Gesamtschichtdicke der Gasdiffusionselektrode kann im Bereich von 100-800 µm, z.B. 200-500 µm, liegen.

Herstellung einer Gasdiffusionselektrode mit einschichtigem Aufbau:
Bei der Herstellung einer einschichtigen katalysatorbasierten Elektrode sollte ein Gehalt an polarem Ionenaustauscherpolymer, so vorhanden, stark verringert werden, um die Gastransporteigenschaften nicht nachteilig zu beeinflussen bzw. die Durchflutung mit Elektrolyt zu verhindern. Für diese Applikationsweise ist es daher bevorzugt, den Gehalt an polarem Ionenaustauscher auf maximal 1-20 Gew.% zu reduzieren, wenn dieser direkter Bestandteil der Pulvermischung ist. Die Herstellung kann ansonsten analog zur Herstellung einer GDE mit zweischichtigem Aufbau erfolgen.

In einem weiteren, zweiten Aspekt betrifft die vorliegende Erfindung eine Gasdiffusionselektrode umfassend ein Metall M, das ausgewählt ist aus Ag, Au, Cu und Mischungen und/oder Legierungen davon, wobei die Gasdiffusionselektrode dendritische und amorphe Strukturen umfasst, wobei die Gasdiffusionselektrode Dendriten umfasst, welche Erdalkalimetall-Kupfer-, Erdalkali-Silber- und/oder Erdalkali-Gold-Phasen enthalten, wobei die Gasdiffusionselektrode herstellbar ist durch ein Verfahren, umfassend
- Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial;
- Abtrennen, Waschen und ggf. Trocknen des Katalysatormaterials; und
- Verarbeiten des Katalysatormaterials zu einer Gasdiffusionselektrode. Das Katalysatormaterial in der erfindungsgemäßen Gasdiffusionselektrode enthält sowohl dendritische als auch amorphe Bestandteile, die in Summe die guten Eigenschaften erbringen, wobei es mit bisherigen Verfahren nicht verfügbar war. Durch das Erdalkalimetall, z.B. Magnesium, als Templat beim erfindungsgemäßen Herstellungsverfahren gelingt es, dieses Material herzustellen. Es ist nach den Verfahren des Stands der Technik nicht zugänglich. Mit dem erfindungsgemäßen Herstellungsverfahren sind Morphologien zugänglich, die nicht nur die thermodynamischen Minimumsflächen (111, 100) erzeugen. Gemäß bestimmten Ausführungsformen umfasst die erfindungsgemäße Gasdiffusionselektrode thermodynamische Minimumsflächen, z.B. {111} und/oder {100} und weitere Morphologien mit höheren Indices. So weist z.B. ein Material, das aus einer Mg₂Cu reichen Legierung erzeugt wurde, ein ausgeprägteres Vorhandensein der {111} Textur, z.B. einer Cu{111} Textur, auf. Ein solches Material zeigt eine hohe Faraday Effizienz für die Erzeugung von Ethylen >25%.

Gemäß bestimmten Ausführungsformen umfasst die erfindungsgemäße Gasdiffusionselektrode Nanostrukturen, insbesondere Nanodendrite, bevorzugt mit einem Dendritendurchmesser von mehr als 5 nm, weiter bevorzugt von mehr als 10 nm, noch weiter bevorzugt von mehr als 15 nm, z.B. 20 nm und mehr, was beispielsweise mittels Rasterelektronenmikroskop (SEM) oder Tunnelelektronenmikroskop (TEM) bestimmt werden kann. Hierbei ist nicht ausgeschlossen, dass auch Nanodendrite mit Durchmessern von 5 nm und weniger vorhanden sind, insofern die Dendriten mit einem größeren Durchmesser vorhanden sind. Die Auflösung einer erdalkalimetallhaltigen, insbesondere erdalkalimetallreichen, z.B. Mg-reichen, Legierung führt zu einer höheren Anzahl feiner Katalysatorstrukturen des Metalls M, z.B. Cu, die für z.B. Cu eine erhöhte Selektivität für die Bildung von Ethylen aufweisen können. Ein hoher Erdalkali-, z.B. Magnesiumgehalt, kann zum vollständigen Zerfall des Gefüges führen. Eine an Metall M reiche, z.B. kupferreiche, Legierung wie Cu₂Mg weist nach dem Herauslösen des Erdalkalimetalls, z.B. von Magnesium, deutlich gröbere poröse Partikel auf.

Gemäß bestimmten Ausführungsformen weist die Gasdiffusionselektrode weiterhin Cu, Ag und/oder Au in der Wertigkeit +I auf, bevorzugt als Verbindung mit O, S, Se, As, Sb, etc., weiter bevorzugt in Form eines Oxids.

Gemäß bestimmten Ausführungsformen umfasst die Gasdiffusionselektrode Dendriten, welche Erdalkalimetall-Kupfer-, Erdalkali-Silber- und/oder Erdalkali-Gold-Phasen und/oder mindestens ein Erdalkalimetalloxid, bevorzugt MgO, enthalten. So können bei einem teilweisen Reagieren im erfindungsgemäßen Herstellungsverfahren Erdalkalimetall-Kupfer-, Erdalkali-Silber- und/oder Erdalkali-Gold-Phasen verbleiben, beispielsweise wenn die Reaktion abgebrochen wird. Wenn diese dann kalziniert werden, können Erdalkalimetalloxide entstehen. Diese können dann zu einer anderen Ausrichtung der Dendriten führen, sodass diese nicht senkrecht zum Substrat oder dem Grundmaterial liegen müssen, was z.B. der Fall ist, wenn Dendriten aufgewachsen werden. Das Erdalkalimetalloxid kann hierbei dann beispielsweise auf der Oberfläche der Dendriten vorhanden sein und zur Stabilisierung dienen.

Gemäß bestimmten Ausführungsformen umfasst die Gasdiffusionselektrode mindestens ein Trägermaterial, das ausgewählt ist aus Metalloxiden, bevorzugt Al₂O₃, MgO, TiO₂, Y₂O₃, ZrO₂ und Mischungen davon, bevorzugt TiO₂, wobei der Anteil des Trägermaterials im Katalysatormaterial bevorzugt 2 bis 40 Gew.% beträgt, weiter bevorzugt 3 bis 30 Gew.%, noch weiter bevorzugt 5 bis 10 Gew.% ist.

Durch das Trägermaterial können hierbei Mischoxide mit dem Erdalkalimetall gebildet werden, welche die Gasdiffusionselektrode und/oder das Katalysatormaterial weiter stabilisieren können. So werden beispielsweise, wenn Mg im Material vorhanden ist, bei Zusatz von TiO₂ Oxide wie Mg₂TiO₄ ins Metall M, z.B. Kupfer, integriert und nicht nur beigemischt. Diese können zusätzlich die für eine Katalyse wichtige Oxidationsstufe +I des Metalls M, z.B. Cu⁺, stabilisieren.

Gemäß bestimmten Ausführungsformen umfasst die Gasdiffusionselektrode weiter mindestens einen Binder und ggf. ein Substrat, wie sie beispielsweise im Zusammenhang mit dem erfindungsgemäßen Herstellungsverfahren genannt sind und entsprechend auch in der erfindungsgemäßen Gasdiffusionselektrode vorhanden sein können.

Die erfindungsgemäße Elektrode ist eine Gasdiffusionselektrode. Die Gasdiffusionselektrode ist hierbei hinsichtlich ihrer Ausgestaltung nicht besonders beschränkt, solange wie bei Gasdiffusionselektroden üblich drei Aggregatzustände - fest, flüssig und gasförmig - miteinander in Kontakt stehen können und der Feststoff der Elektrode zumindest einen Elektronen leitenden Katalysator aufweist, welcher eine elektrochemische Reaktion zwischen der flüssigen und der gasförmigen Phase katalysieren kann. Die Gasdiffusionselektroden können hierbei sowohl in einer Flow-by- wie auch einer Flow-Through-Konfiguration betrieben werden, also von einem Gas hinterströmt oder durchströmt werden, werden bevorzugt jedoch hinterströmt. Es ist auch nicht ausgeschlossen, dass eine Gasdiffusionselektrode nicht komplett porös ist, sondern nur eine Strukturierung an der Oberfläche aufweist, durch die ein Gas diffundieren kann, beispielsweise eine Mikro- und/oder Nanostrukturierung.

Es finden sich beispielsweise gemäß bestimmten Ausführungsformen in der Gasdiffusionselektrode (GDE) auf Elektrolytseite hydrophobe Kanäle und/oder Poren bzw. Bereiche und ggf. hydrophile Kanäle und/oder Poren bzw. Bereiche, wobei sich in den hydrophilen Bereichen Katalysatorzentren befinden können. Auf einer Gasseite der Gasdiffusionselektrode kann diese hydrophobe Kanäle und/oder Poren umfassen. Insofern kann die Gasdiffusionselektrode mindestens zwei Seiten umfassen, eine mit hydrophilen und ggf. hydrophoben Bereichen und einem mit hydrophoben Bereichen.

Besonders aktive Katalysatorzentren liegen in einer GDE im Dreiphasengebiet flüssig, fest, gasförmig. Eine ideale GDE weist somit eine maximale Durchdringung des Bulkmaterials mit hydrophilen und hydrophoben Kanälen und/oder Poren auf, um möglichst viele Dreiphasengebiete für aktive Katalysatorzentren zu erhalten.

Gemäß bestimmten Ausführungsformen umfasst die erfindungsgemäße Gasdiffusionselektrode Metall M, ggf. mindestens ein Salz des Metalls M, und mindestens einen Binder, oder besteht daraus.

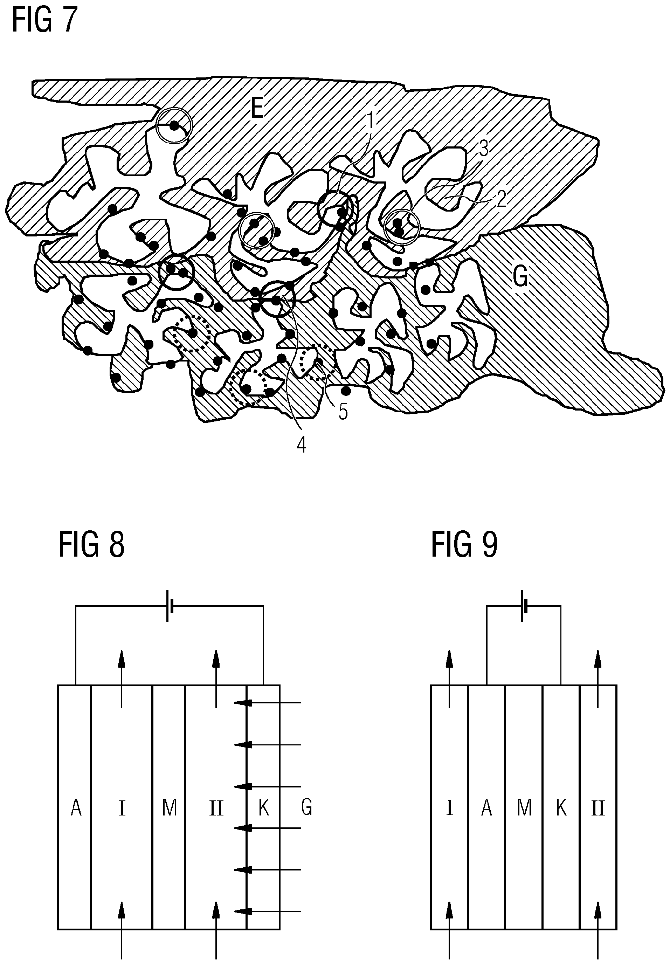

Fig. 7 illustriert die Verhältnisse zwischen hydrophilen und hydrophoben Bereichen einer beispielhaften GDE mit zwei Schichten, die eine gute Dreiphasenbeziehung flüssig, fest, gasförmig erzielen kann. Hierbei finden sich beispielsweise in der Elektrode auf Elektrolytseite E hydrophobe Kanäle bzw. Bereiche 1 und hydrophile Kanäle bzw. Bereiche 2, wobei sich in den hydrophilen Bereichen 2 Katalysatorzentren 3 geringer Aktivität befinden können, welche durch die Verbindung des Metalls M bereitgestellt werden können. Des Weiteren befinden sich inaktive Katalysatorzentren 5 auf Seiten des Gases G, welche keinen Zugang zum Elektrolyt haben.

Besonders aktive Katalysatorzentren 4 liegen im Dreiphasengebiet flüssig, fest, gasförmig. Eine ideale GDE kann somit eine maximale Durchdringung des Bulkmaterials mit hydrophilen und hydrophoben Kanälen aufweisen, um möglichst viele Dreiphasengebiete für aktive Katalysatorzentren zu erhalten.

Es sind aber erfindungsgemäß auch Gasdiffusionselektroden mit nur einer Schicht umfasst, solange die Gasdiffusionselektrode das Metall M, den mindestens einen Binder und ggf. das mindestens eine Salz des Metalls M umfasst. In einer solchen einschichtigen Ausführungsform können dann die hydrophilen und hydrophoben Bereiche, z.B. Poren und/oder Kanäle, auch in der einen Schicht vorliegen, sodass sich in der Schicht vorwiegend hydrophile und vorwiegend hydrophobe Bereiche einstellen können. Die Erläuterung der Katalysatorzentren ergibt sich dann hierbei analog dem beispielhaft dargestellten zweischichtigen Aufbau.

Gemäß bestimmten Ausführungsformen weist die Gasdiffusionselektrode Poren und/oder Kanäle mit einem Durchmesser von 10 nm bis 100 µm auf, bevorzugt von 50 nm bis 50 µm, weiter bevorzugt von 100 nm bis 10 µm, was beispielsweise durch Rasterelektronenmikroskopie, ggf. nach vorigem Schneiden der GDE, bestimmt werden kann. Als vorteilhaft haben sich mittlere Porengrößen im Bereich von 0.4-5µm und vorzugsweise im Bereich von 0.5-2µm herausgestellt.

Der Katalysator der vorliegenden GDE, welcher das Metall M und Kationen davon, bevorzugt M⁺ umfassen kann, kann dendritische Strukturen mit Feinstruktur, beispielsweise einem Abstand zwischen zwei Dendriten, mit einer Größe von 1 bis 100 nm aufweisen, bevorzugt 2 bis 20 nm, weiter bevorzugt 3 bis 10 nm.

Neben dem Metall M, ggf. dem mindestens einen Salz davon und dem mindestens einen Binder kann die erfindungsgemäße Elektrode auch noch weitere Bestandteile umfassen, beispielsweise ein Substrat, auf das das Metall M, ggf. das mindestens eine Salz davon und der zumindest eine Binder aufgebracht sein können. Es können auch mehr als eine Schicht, z.B. zwei, drei, vier oder mehr auf das Substrat aufgebracht sein.

Das Substrat ist hierbei nicht besonders beschränkt und kann beispielsweise ein Metall umfassen wie Silber, Platin, Nickel, Blei, Titan, Nickel, Eisen, Mangan, Kupfer, Gold und/oder Chrom und/oder deren Legierungen, wie Edelstähle, und/oder mindestens ein Nicht-Metall wie Kohlenstoff, Si, Bornitrid (BN), Bor-dotierten Diamant, etc., und/oder mindestens ein leitfähiges Oxid wie Indiumzinnoxid(ITO), Aluminiumzinkoxid (AZO) oder fluoriertes Zinnoxid (FTO), und/oder mindestens ein Polymer basierend auf Polyacetylen, Polyethoxythiophen, Polyanilin oder Polypyrrol, wie beispielsweise in polymerbasierten Elektroden. Nichtleitfähige Substrate wie z.B. Polymernetze sind beispielsweise bei einer ausreichenden Leitfähigkeit der Katalysatorlage möglich. Bei ausreichender Leitfähigkeit größer 0,01 m/Ohm·m² und entsprechend aufgelöster rückseitiger Kontaktierung der Elektrode beispielsweise durch ein Titanstreckmetallgitter sind auch polymere Substrate oder Netze möglich.

Gemäß bestimmten Ausführungsformen kann das Substrat jedoch im Wesentlichen durch das Metall M gebildet werden, optional mit mindestens einem Bindemittel. Ein bevorzugtes Substrat ist gemäß bestimmten Ausführungsformen ein Netz mit einer Maschenweite w von 0,3 mm < w < 2,0 mm, bevorzugt 0,5 mm < w < 1,4 mm und einem Drahtdurchmesser x von 0,05 mm < x < 0,5 mm, bevorzug 0,1 mm ≤ x ≤ 0,25 mm.

Daneben kann eine gebildete Schicht aus dem Metall M, ggf. dem mindestens einen Salz davon und dem mindestens einen Binder auch weitere Promotoren enthalten, die in Zusammenwirkung mit dem Metall M die katalytische Aktivität der GDE verbessern. Gemäß bestimmten Ausführungsformen enthält die erste Schicht mindestens ein Metalloxid, das bevorzugt ein geringeres Reduktionspotential als die Ethylenentwicklung aufweist, bevorzugt ZrO₂, Al₂O₃, CeO₂, Ce₂O₃, ZnO₂, MgO; und/oder mindestens eine metallreiche (bezogen auf M), z.B. kupferreiche und/oder silberreiche und/oder goldreiche, intermetallische Phase, beispielsweise eine Cu-reiche Phase, die ausgewählt ist aus der Gruppe der binären Systeme Cu-Al, Cu-Zr, Cu-Y, Cu-Hf, Cu-Ce, Cu-Mg und der ternäre Systeme Cu-Y-Al, Cu-Hf-Al, Cu-Zr-Al, Cu-Al-Mg, Cu-Al-Ce mit Cu-Gehalten > 60 At.-%, und oder eine entsprechende Ag-reiche Phase wie Ag-Al, Ag-Zr, Ag-Y, Ag-Hf, Ag-Ce, Ag-Mg, Ag-Y-Al, Ag-Hf-Al, Ag-Zr-Al, Ag-Al-Mg, Ag-Al-Ce mit Ag-Gehalten < 60 At.-%; und/oder Metall M enthaltende, beispielsweise silberenthaltende, goldenthaltende und/oder kupferenthaltende Perowskite und/oder Defekt-Perowskite und/oder Perowskit-verwandte Verbindungen, beispielsweise YBa₂Cu₃O_{7-δ}, YBa₂Ag₃O_{7-δ} wobei 0≤δ≤1 (entsprechend YBa₂Cu₃O_{7-δ}X_{σ}), CaCu₃Ti₄O₁₂, La_{1,85}Sr_{0,15}CuO_{3,930}Cl_{0,053}, (La, Sr)₂CuO₄, AgTaO3 oder lithiummodifiziertes Ag₁₋ₓLiₓNbO₃, etc.

Geeignete Promotoren sind auch Verbindungen des Metalls M, welche eine Löslichkeit in Wasser bei 25°C und Normaldruck von weniger als 0,1 mol/L, bevorzugt von weniger als 0,05 mol/L, weiter bevorzugt von weniger als 0,01 mol/L, noch weiter bevorzugt von weniger als 0,0001 mol/L, insbesondere bevorzugt von weniger als 1*10⁻¹⁰ mol/L, z.B. von weniger als 1*10⁻²⁰ mol/L, aufweisen. Solche Löslichkeiten von Verbindungen der Metall M können beispielsweise aus Produktdatenblättern entnommen werden und/oder auf einfache Weise mit einfachen Versuchen, z.B. Platzieren einer festen Menge der Verbindung des Metalls M in ein bestimmtes Volumen Wasser, z.B. destilliertes, bidestilliertes oder dreifach destilliertes Wasser bei 25°C und Normaldruck und Messen der Konzentration an aus der Verbindung freigesetzten Ionen über die Zeit bis zum Erreichen eines annähernd konstanten Werts, bestimmt werden, und sind folglich für den Fachmann einfach zugänglich.

Die Verbindung des Metalls M, welche eine Löslichkeit in Wasser bei 25°C und Normaldruck von weniger als 0,1 mol/L aufweist, kann eine Formel aufweisen, die ausgewählt ist aus M₁₋ₓX, M_{2-y}Y, M_{2-y}Y'_{w} und M_{3-z}Z, wobei 0≤x≤0,5; 0≤y≤1; 0≤z≤1,5; bevorzugt 0≤x≤0,4; 0≤y≤0,8; 0≤z≤1,2; weiter bevorzugt 0≤x≤0,3; 0≤y≤0,6; 0≤z≤0,9; X ausgewählt ist aus Cl, Br, Br₃, I, I₃, P₃, As₃, As₅, As₇, Sb₃, Sb₅, Sb₇, und Mischungen davon, z.B. Cl, Br, Br₃, I, I₃, P₃, und Mischungen davon; Y ausgewählt ist aus S, S, Te und Mischungen davon; Y' ausgewählt ist aus S, Se, Te und Mischungen davon, z.B. S, Se und Mischungen davon, z.B. S, Se; w ≥2, bevorzugt w≤10, z.B. w≤5; und Z ausgewählt ist aus P, As, Sb, Bi, P₃, AS₃, As₅, As₇, Sb₃, Sb₅, Sb₇, und Mischungen davon, z.B. P, As, Sb, Bi, und Mischungen davon; und/oder ausgewählt ist aus Molybdaten, Wolframaten, Selenaten, Arsenaten, Vanadaten, Chromaten, Manganaten, Niobaten des Metalls M sowie thio- und/oder seleno-Derivaten von Molybdaten, Wolframaten, Selenaten, Arsenaten, Vanadaten, Chromaten, Manganaten, Niobaten des Metalls M; und/oder Verbindungen der Formel MₐX_{b}Y_{c}Z_{d}, wobei a≥2, z.B. a≥3; 0≤b≤4, z.B. 0≤b≤3, z.B. 0≤b≤2, z.B. 0≤b≤1; 0≤c≤8, z.B. 0≤c≤6, z.B. 0≤c≤5, z.B. 0≤c≤4, z.B. 0≤c≤3, z.B. 0≤c≤2, z.B. 0≤c≤1; 0≤d≤4, z.B. 0≤d≤3, z.B. 0≤d≤2, z.B. 0≤d≤1; X ausgewählt ist aus Cl, Br, Br₃, I, I₃, P₃, As₃, Ass, As₇, Sb₃, Sb₅, Sb₇, und Mischungen davon, z.B. Cl, Br, Br₃, I, I₃, P₃, und Mischungen davon; Y ausgewählt ist aus S, S, Te und Mischungen davon; und Z ausgewählt ist aus P, As, Sb, Bi, P₃, As₃, As₅, As₇, Sb₃, Sb₅, Sb₇, und Mischungen davon, wobei mindestens zwei von b und c nicht gleichzeitig 0 sind.

Die Verbindung des Metalls M, welche eine Löslichkeit in Wasser bei 25°C und Normaldruck von weniger als 0,1 mol/L aufweist, muss hierbei also auch nicht stöchiometrisch sein und kann auch Mischphasen aufweisen. Auch sind ternäre, quaternäre, etc. Verbindungen wie beispielsweise Ag₃SbS₃, *Pyrargyrit,* bzw. Ag₃AsS₃, Xanthoconit umfasst.

Gemäß bestimmten Ausführungsformen ist die Verbindung des Metalls M, welche eine Löslichkeit in Wasser bei 25°C und Normaldruck von weniger als 0,1 mol/L aufweist, eine Verbindung der Formel Ia: M₁₋ₓX, wobei 0≤x<0,5; bevorzugt 0≤x≤0,4; weiter bevorzugt 0≤x≤0,3 und X ausgewählt ist aus Cl, Br, Br₃, I, I₃, P₃, As₃, As₅, As₇, Sb₃, Sb₅, Sb₇, und Mischungen davon, z.B. Cl, Br, Br₃, I, I₃, P₃, und Mischungen davon, z.B. auch Mischungen von Cl, Br, I, z.B. eine Verbindung der Formel I'a: Ag₁₋ₓX mit X = F, Cl, Br, Br₃, I, I₃, P₃, As₃, As₅, As₇, Sb₃, Sb₅, Sb₇, oder eine Mischung davon, z.B. X = F, Cl, Br, Br₃, I, I₃, P₃, oder eine Mischung davon, z.B. eine Mischung von Cl, Br, und/oder I. Insbesondere letztere Verbindungen des Silbers sind teilweise photosensitiv. Eine Photo-Oberflächenaktivierung der Elektrode vor dem Einbau ist jedoch nicht ausgeschlossen. Für den Betrieb ist dies jedoch üblicherweise unerheblich, da die Elektroden im Elektrolyseur keinem Tageslicht ausgesetzt sind. Unterstöchiometrische Verbindungen mit 0 < x ≤ 0,5; bevorzugt 0 < x ≤ 0,4; weiter bevorzugt 0 < x ≤ 0,3; z.B. 0 < x ≤ 0,2; 0 < x ≤ 0,1 sind ebenfalls geeignet. Gemäß bestimmten Ausführungsformen ist x = 0. Beispiele der Verbindung Ia sind z.B. AgCl, AgBr, AgI, AgP₃, CuCl, CuBr, CuI, AuCl, AuBr, AuI.

Gemäß bestimmten Ausführungsformen ist die Verbindung des Metalls M, welche eine Löslichkeit in Wasser bei 25°C und Normaldruck von weniger als 0,1 mol/L aufweist, eine chalkogen-basierte Verbindung der Formel Ib: M_{2-y}Y, bzw. I*: M_{2-y}Y'_{w}, wobei 0≤y≤1; bevorzugt 0≤y≤0,8; weiter bevorzugt 0≤y≤0,6; Y ausgewählt ist aus S, S, Te und Mischungen davon; Y' ausgewählt ist aus S, Se, Te und Mischungen davon, z.B. S, Se und Mischungen davon, z.B. S, Se; und w ≥ 2, bevorzugt w≤10, z.B. w≤5, z.B. eine Verbindung der Formel I'b: Ag_{2-y}Y bzw. I*'b: Ag_{2-y}Y'_{w} mit Y = S, Se, Te oder eine Mischung davon; Y' = S, Se, Te oder einer Mischung davon, z.B. S, Se oder einer Mischung davon, z.B. S, Se; w ≥ 2, bevorzugt w≤10, z.B. w≤5. Im Sinne der Erfindung sind also auch die polymeren bzw. oligomeren Anionen des Schwefels oder Selens Y'_{w}²⁻. Diese Verbindungen sind teilweise halbleitend, so dass eine elektrische Ankopplung an den Silberkatalysator gewährleistet werden kann. Unterstöchiometrische Verbindungen mit 0 < y ≤ 1; bevorzugt 0 < y ≤ 0,8; weiter bevorzugt 0 < y ≤ 0,6; z.B. 0 < x ≤ 0,4; 0 < x ≤ 0,2; 0 < x ≤ 0,1 sind ebenfalls geeignet. Gemäß bestimmten Ausführungsformen ist y = 0. Beispiele der Verbindung der Formel Ib sind z.B. Ag₂S, Ag₂Se, Ag₂Te, Cu₂S, Cu₂Se, Cu₂Te, Au₂S, und Beispiele der Verbindung der Formel I'b z.B. Ag₂(S₂), Ag₂(Se₂), Cu₂(S₂), Cu₂(Se₂), etc.

Gemäß bestimmten Ausführungsformen ist die Verbindung des Metalls M, welche eine Löslichkeit in Wasser bei 25°C und Normaldruck von weniger als 0,1 mol/L aufweist, eine Verbindung der Formel Ic: M_{3-z}Z, wobei 0≤z≤1,5; bevorzugt 0≤z≤1,2; weiter bevorzugt 0≤z≤0,9; und Z ausgewählt ist aus P, As, Sb, Bi, P₃, As₃, Ass, As₇, Sb₃, Sb₅, Sb₇, und Mischungen davon, z.B. eine Verbindung der Formel I'c: Ag_{3-z}Z mit Z = P, As, Sb, Bi, P₃, As₃, As₅, As₇, Sb₃, Sb₅, Sb₇, oder eine Mischung davon. Diese Verbindungen sind teilweise halbleitend oder metallisch leitend, so dass eine elektrische Ankopplung an den Silberkatalysator gewährleistet werden kann. Unterstöchiometrische Verbindungen mit 0 < z ≤ 1,5; bevorzugt 0 < z ≤ 1,2; weiter bevorzugt 0 < z ≤ 0,9; z.B. 0 < x ≤ 0,6; 0 < x ≤ 0,4; 0 < x ≤ 0,2; 0 < x ≤ 0,1 sind ebenfalls geeignet. Gemäß bestimmten Ausführungsformen ist z = 0. Beispiele der Verbindung der Formel Ic sind z.B. Ag₃P, Ag₃As, Ag₃Sb, Ag₃Bi, Cu₃P, Cu₃AS, Cu₃Sb, Cu₃Bi.

Im Sinne der Erfindung sind auch Verbindungen des Metalls M, welche eine Löslichkeit in Wasser bei 25°C und Normaldruck von weniger als 0,1 mol/L aufweisen, mit schweren Anionen wie Molybdat, Wolframat, Arsenat, Selenat, Vanadat, Chromat, Manganat in verschiedenen Oxidationsstufen Niobat bzw. thio- und/oder seleno-Abkömmlinge davon. Diese Anionen können auch polymer in Form von Polyoxometallaten vorliegen. Diese werden dann vornehmlich in Form ihrer Silbersalze eingesetzt. Ebenfalls umfasst sind mineralische Verbindungen des Metalls M, beispielsweise der Formel MₐX_{b}Y_{c}Z_{d}, wobei a≥2, z.B. a≥3; 0≤b≤4, z.B. 0≤b≤3, z.B. 0≤b≤2, z.B. 0≤b≤1; 0≤c≤8, z.B. 0≤c≤6, z.B. 0≤c≤5, z.B. 0≤c≤4, z.B. 0≤c≤3, z.B. 0≤c≤2, z.B. 0≤c≤1; 0≤d≤4, z.B. 0≤d≤3, z.B. 0≤d≤2, z.B. 0≤d≤1; X ausgewählt ist aus Cl, Br, Br₃, I, I₃, P₃, As₃, As₅, As₇, Sb₃, Sb₅, Sb₇, und Mischungen davon, z.B. Cl, Br, Br₃, I, I₃, P₃, und Mischungen davon; Y ausgewählt ist aus S, S, Te und Mischungen davon; und Z ausgewählt ist aus P, As, Sb, Bi, P₃, As₃, As₅, As₇, Sb₃, Sb₅, Sb₇, und Mischungen davon, z.B. P, As, Sb, Bi, und Mischungen davon, wobei mindestens zwei von b und c nicht gleichzeitig 0 sind, z.B. Ag₃SbS₃, *Pyrargyrit,* bzw. Ag₃AsS₃, Xanthoconit.

Die im Rahmen der Erfindung genannten Verbindungen des Metalls M, welche eine Löslichkeit in Wasser bei 25°C und Normaldruck von weniger als 0,1 mol/L aufweist, können in unterschiedlichen Modifikationen auftreten, die sich in ihrer Kristallstruktur unterscheiden können. Neben den beschriebenen Verbindungen sind beispielsweise auch folgende ternäre Verbindungen bekannt: Ag₃SbS₃, *Pyrargyrit,* Ag₃AsS₃, Xanthoconit, die in erfindungsgemäßen Gasdiffusionselektroden verwendet werden können.

Bevorzugt als Promotoren sind hierbei Metalloxide und/oder Verbindungen des Metalls M, welche eine Löslichkeit in Wasser bei 25°C und Normaldruck von weniger als 0,1 mol/L aufweisen.

Das eingesetzte Metalloxid und/oder die Verbindung des Metalls M, welche eine Löslichkeit in Wasser bei 25°C und Normaldruck von weniger als 0,1 mol/L aufweist, ist gemäß bestimmten Ausführungsformen wasserunlöslich, damit wässrige Elektrolyte in einer Elektrolyse unter Verwendung der erfindungsgemäßen Gasdiffusionselektrode verwendet werden können. Zudem kann dadurch, dass das Redoxpotential des Metalloxids geringer als das der Ethylenentwicklung ist, sichergestellt werden, dass Ethylen aus CO₂ mittels der erfindungsgemäßen GDE hergestellt werden kann. Auch sollen die Oxide gemäß bestimmten Ausführungsformen nicht bei einer Kohlendioxidreduktion reduziert werden. Nickel und Eisen sind beispielsweise ungeeignet, da sich hier Wasserstoff bildet. Weiterhin sind die Metalloxide bevorzugt nicht inert, sondern sollen bevorzugt hydrophile Reaktionszentren darstellen, die für die Bereitstellung von Protonen dienen können.

Die Promotoren, insbesondere, das Metalloxid und/oder die Verbindung des Metalls M, welche eine Löslichkeit in Wasser bei 25°C und Normaldruck von weniger als 0,1 mol/L aufweist, können hierbei die Funktion und Herstellung langzeitstabiler Elektrokatalysatoren begünstigen, indem sie katalytisch aktive Metall (M)-Nanostrukturen, z.B. von Cu und/oder Ag, stabilisieren. Die struktureller Promotoren können hierbei die hohen Oberflächenmobilitäten der Nanostrukturen und somit ihre Sinterneigung verringern.

Als Promotoren können für die elektrochemische Reduktion von CO₂ insbesondere folgende Metalloxide verwendet werden, die im elektrochemischen Fenster nicht zu Metallen reduziert werden können: ZrO₂ (E=-2, 3V), Al₂O₃ (E=-2, 4V), CeO₂ (E=-2,3V), MgO (E=-2,5). Hierbei ist zu beachten, dass die genannten Oxide nicht als Additive zugesetzt werden, sondern Teil des Katalysators selbst sind. Das Oxid erfüllt neben seiner Funktion als Promotor auch noch das Merkmal, das Metall M, z.B. Cu und/oder Ag und/oder Au, in der Oxidationsstufe I und darüber hinaus auch Intermediate bei der Kohlendioxidreduktion wie CO, C₂H₄ (bzw. OH) zu stabilisieren.

Es können die folgenden Effekte erzielt werden: Das Metalloxid kann aufgrund seiner hohen spezifischen Oberfläche zur besseren Verteilung des Katalysatormetalls M führen; hochdisperse Metallzentren können durch das Metalloxid stabilisiert werden; eine Gas, z.B. CO₂, Chemisorption kann durch das Metalloxid verbessert werden; Metalloxide des Metalls M, z.B. von Cu, Ag, können stabilisiert werden.

Nach der Fällung kann eine Trocknung mit anschließender Kalzinierung im O₂/Ar Gasstrom erfolgen. Die erzeugten Oxidprekursoren können je nach Methode auch im Anschluss direkt in einem H₂/Ar Gasstrom reduziert werden. Der Aktivierungsschritt kann auch im Nachhinein elektrochemisch erfolgen. Um die elektrische Leitfähigkeit der aufgebrachten Schicht vor der elektrochemischen Aktivierung zu verbessern, können auch teilweise Oxidprekursoren und aktivierten Prekursoren gemischt werden.

Es ist erfindungsgemäß ebenfalls nicht ausgeschlossen, dass die fertig kalandrierte Elektrode einer nachträglichen Kalzinierung / thermischen Behandlung unterworfen wird, bevor die elektrochemische Aktivierung durchgeführt wird.

Eine weitere Herstellungsmöglichkeit geeigneter Elektrokatalysatoren basiert auf dem Ansatz der Erzeugung von an Metall M reichen intermetallischen Phasen wie z.B. Cu₅Zr, Cu₁₀Zr₇, Cu₅₁Zr₁₄, Ag₅Zr, Ag₁₀Zr₇, Ag₅₁Zr₁₄, die aus der Schmelze hergestellt werden können. Entsprechende Ingots können im Nachhinein gemahlen und vollständig bzw. teilweise im O₂/Argon-Gasstrom kalziniert und in die Oxidform überführt werden. Beispielhafte an Metall M reiche Phasen sind binäre Systeme Cu-Al, Cu-Zr, Cu-Y, Cu-Hf, Cu-Ce, Cu-Mg sowie entsprechende ternäre Systeme mit Gehalten an Metall M >60at% : CuYAl, CuHfAl, CuZrAl, CuAlMg, CuAlCe und oder entsprechende Ag-reiche Phasen wie Ag-Al, Ag-Zr, Ag-Y, Ag-Hf, Ag-Ce, Ag-Mg, Ag-Y-Al, Ag-Hf-Al, Ag-Zr-Al, Ag-Al-Mg, Ag-Al-Ce mit Ag-Gehalten < 60 At.-%. Kupferreiche Phasen sind beispielsweise aus E. Kneller, Y. Khan, U. Gorres, The Alloy System Copper-Zirconium, Part I. Phase Diagram and Structural Relations, Zeitschrift für Metallkunde 77 (1), S. 43-48, 1986 für Cu-Zr-Phasen, aus Braunovic, M.; Konchits, V. V.; Myshkin, N.K.: Electrical contacts, fundamentals, applicationsand technology; CRC Press 2007 für Cu-Al-Phasen, aus Petzoldt, F.; Bergmann, J.P.; Schürer, R.; Schneider, 2013, 67 Metall, 504-507 für Cu-Al-Phasen, aus Landolt-Börnstein - Group IV Physical Chemistry Volume 5d, 1994, S. 1-8 für Cu-Ga-Phasen, und aus P.R. Subramanian, D.E. Laughlin, Bulletin of Alloy Phase Diagrams, 1988, 9,1, 51-56 für Cu-Hf-Phasen bekannt, auf die bezüglich dieser Phasen hiermit Bezug genommen wird und deren Inhalt zumindest diesbezüglich hiermit durch Bezug in diese Anmeldung aufgenommen wird.

Bevorzugt ist der Anteil an Metall M, z.B. Cu, Ag, größer als 40 At.%, weiter bevorzugt größer als 50 At.%, besonders bevorzugt größer als 60 At.%.

Hierbei ist jedoch nicht ausgeschlossen, dass die intermetallischen Phasen auch Nichtmetallelemente wie Sauerstoff, Stickstoff, Schwefel, Selen und/oder Phosphor enthält, also beispielsweise Oxide, Sulfide, Selenide, Nitride, und/oder Phosphide, Arsenide, Antimonide, Bismuthide enthalten sind. Gemäß bestimmten Ausführungsformen sind die intermetallischen Phasen teilweise oxididert.

Des Weiteren können folgende kupferenthaltende Perowskit-Strukturen und/oder Defekt-Perowskite und/oder Perowskit-verwandte Verbindungen für Elektrokatalysatoren, insbesondere für die Bildung von CO oder Kohlenwasserstoffen, verwendet werden: YBa₂Cu₃O_{7-δ}, wobei 0≤δ≤1, CaCu₃Ti₄O₁₂, La_{1,85}Sr_{0,15},CuO_{3,930}Cl_{0,053}, (La, Sr)₂CuO₄, AgTaO₃ oder lithiummodifiziertes Ag₁₋ₓLiₓNbO₃. Ferner wird nicht ausgeschlossen, dass Mischungen dieser Materialen zur Elektrodenpräparation verwendet werden können bzw. je nach Bedarf nachträgliche Kalzinierungs bzw. Aktivierungsschritte durchgeführt werden.

Bezüglich von Promotoren und geeigneten Metallen M bzw. Metalloxiden und deren Strukturen wird hiermit auch Bezug genommen auf die DE 102015203245.0 bzw. DE 102015215309.6, deren Inhalt zumindest diesbezüglich hiermit durch Bezug in diese Anmeldung aufgenommen wird.

Die Erfinder haben weiterhin herausgefunden, dass besonders aktive und CO bzw. C₂H₄-selektive Gasdiffusionselektroden für eine CO₂ und/oder CO-Elektrolyse eine Vielzahl an Parametern erfüllen sollen, die für eine selektive Produktbildung vorteilhaft sind. Im Folgenden sind erfindungsspezifische Eigenschaften bestimmter Ausführungsformen einer erfindungsgemäßen Elektrode dargestellt. Darüber hinaus haben die Erfinder herausgefunden, dass spezifische Ausführungsformen des Katalysators vorteilhaft sind, damit die Elektrode selektiv Produkte bilden kann.

Es wurden die folgenden wichtigen spezifischen Parameter und Anforderungen für eine kohlenwasserstoffselektive Gasdiffusionselektrode gefunden:
- Zugänglichkeit der Katalysatorpartikel mit Eduktgas, z.B. CO₂ und/oder CO über vorwiegend hydrophobe Poren.
- Vorwiegend hydrophile Bereiche die einen Kontakt zwischen Elektrolyt und Katalysatorpartikel ermöglichen
- Ausreichend hohe elektrische Leitfähigkeit der Elektrode bzw. des Katalysators sowie eine homogene Potentialverteilung über die gesamte Elektrodenfläche (potentialabhängige Produktselektivität)
- Hohe chemische und mechanische Stabilität im Elektrolysebetrieb (Unterdrückung von Rissbildung und Korrosion)
- Definierte Porosität mit einem geeigneten Verhältnis zwischen hydrophilen und hydrophoben Kanälen bzw. Poren in unmittelbarer Nachbarschaft (Sicherstellung von CO- und/oder CO₂-Verfügbarkeit bei gleichzeitigem Vorhandensein von H⁺-Ionen)
- Gute Benetzbarkeit der Elektrodenoberfläche, damit der wässrige Elektrolyt bzw. H⁺-Ionen in Kontakt zum Katalysator treten können (H⁺ wird für Ethylen benötigt).
- Das Verhältnis zwischen hydrophilen und hydrophoben Porenvolumen sollte bevorzugt im Bereich von ca. 0,1-0,5:3 und vorzugsweise ca. 0,2:3 liegen.

Idealer Weise sollten alle enthaltenen Partikel Teil der Dreiphasengrenze sein, um hohe Stromdichten erreichen zu können. Das Porensystem sollte, insbesondere für Kupfer eine ausreichende Absorption von Zwischenprodukten aufweisen, um eine Weiterreaktion bzw. Dimerisierung / Oligomerisierung zu gewährleisten.

Darüber hinaus sind für den Elektrokatalysator aus dem Metall M und einer kationischen Form davon, insbesondere M⁺, für eine elektrochemische Reduktion, insbesondere von CO₂ zu Ethylen, die folgenden Eigenschaften vorteilhaft:
- einheitliche Partikelgröße, bevorzugt mit hoher spezifischer Oberfläche
- dendritische Morphologie, keine isolierten Zentren oder Cluster
- das Metall M, z.B. Ag, Cu, sollte nicht im reinen kubischflächenzentriertem Gitter vorliegen, sondern Strukturdefekte aufweisen
- Das Vorliegen eines einwertigen Oxids, z.B. Cu₂O für Cu, Ag₂O für Ag, des Metalls M ist für die Ethylenselektivität vorteilhaft, die Bildung von höherwertigen Oxiden ist vorteilhafterweise zu vermeiden
- zur Stabilisierung von Strukturdefekten können elektrochemisch stabile Oxide verwendet werden
- hohe Reinheit ohne Fremdmetallspuren, insbesondere an Übergangsmetallen, sowie Kohlenstoffbestandteile (Ruße, Kohlen).
- hohe Selektivität und Langzeitstabilität
- geringe Überspannung gegenüber der Gasreduktion, z.B. CO₂-Reduktion
- hohe Überspannung für die Bildung von Wasserstoff.

Für CO oder kohlenwasserstoffselektive Gasdiffusionselektroden bei einer Reduktion von CO₂ und/oder CO sind demnach mehr intrinsische Eigenschaften nötig, als bekannte Systeme bieten. Der Elektrokatalysator und die Elektrode sind demnach in einem engen Zusammenspiel.

Gemäß bestimmten Ausführungsformen umfasst die erfindungsgemäße Gasdiffusionselektrode ein Substrat, bevorzugt in Form eines Flächengebildes, und eine Schicht umfassend das Metall M, ggf. mindestens ein Salz davon und mindestens einen Binder, wobei die Schicht hydrophile und hydrophobe Poren und/oder Kanäle umfasst. Es ist hierbei nicht ausgeschlossen, dass die Schicht weitere Bestandteile enthalten wie beispielsweise ein Ionentransportmaterial.

Gemäß bestimmten Ausführungsformen umfasst die erfindungsgemäße Gasdiffusionselektrode ein Substrat, bevorzugt in Form eines Flächengebildes,
eine erste Schicht umfassend das Metall M, ggf. mindestens ein Salz davon und optional mindestens einen Binder, wobei die erste Schicht hydrophile und optional hydrophobe Poren und/oder Kanäle umfasst, und
weiter eine zweite Schicht umfassend das Metall M, ggf. mindestens ein Salz davon und mindestens einen Binder, wobei die zweite Schicht sich auf dem Träger befindet und die erste Schicht auf der zweiten Schicht, wobei der Gehalt an Binder in der ersten Schicht bevorzugt kleiner ist als in der zweiten Schicht, wobei die zweite Schicht hydrophobe Poren und/oder Kanäle umfasst, weiter bevorzugt wobei die zweite Schicht 3 - 30 Gew.% Binder, bevorzugt 4 - 28 Gew.% Binder, weiter bevorzugt 5 - 20 Gew.%, z.B. 10 - 20 Gew.% Binder, bezogen auf die zweite Schicht, und die erste Schicht bevorzugt 0 - 20 Gew.% Binder, weiter bevorzugt 0,1 - 15 Gew.% Binder, weiter bevorzugt 1 - 12 Gew.% Binder, noch weiter bevorzugt 5 - 10 Gew.% Binder (z.B. PTFE), bezogen auf die erste Schicht, aufweist. In der ersten und zweiten Schicht kann sich beispielsweise gemäß bestimmten Ausführungsformen der Anteil an Metall M, ggf. Salz davon und Binder auf jeweils 100 Gew.% ergänzen. Es ist hierbei nicht ausgeschlossen, dass die Schichten weitere Bestandteile enthalten wie beispielsweise ein Ionentransportmaterial, bevorzugt enthält zumindest die zweite Schicht, welche der Gasseite zugewandt ist, jedoch kein Ionentransportmaterial.

Die vorliegende Erfindung betrifft eine durch das erfindungsgemäße Verfahren hergestellte Gasdiffusionselektrode. Diese weist hierbei insbesondere die Eigenschaften auf, die die Gasdiffusionselektrode des zweiten Aspekts aufweist. Durch die Verwendung des kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon, kann eine Gasdiffusionselektrode mit dendritischen und amorphen Strukturen erhalten werden.

In einem weiteren Aspekt betrifft die vorliegende Erfindung eine Elektrolysezelle umfassend die erfindungsgemäße Gasdiffusionselektrode. Es ist eine Elektrolysezelle offenbart, umfassend eine erfindungsgemäße Gasdiffusionselektrode als Kathode, eine Anode und ggf. mindestens eine Membran und/oder mindestens ein Diaphragma zwischen der Kathode und Anode.

Gemäß bestimmten Ausführungsformen umfasst die erfindungsgemäße Elektrolysezelle weiter eine Anode und mindestens eine Membran und/oder mindestens ein Diaphragma zwischen der Kathode und Anode.

Die weiteren Bestandteile der Elektrolysezelle wie etwa die Anode, ggf. eine Membran und oder ein Diaphragma, Zuleitung(en) und Ableitung(en), die Spannungsquelle, etc., sowie weitere optionale Vorrichtungen wie Kühl- oder Heizeinrichtungen sind erfindungsgemäß nicht besonders beschränkt, wie auch nicht Anolyten und/oder Katholyten, die in einer solchen Elektrolysezelle verwendet werden, wobei die Elektrolysezelle gemäß bestimmten Ausführungsformen auf Kathodenseite zur Reduktion von Kohlendioxid und/oder CO verwendet wird.

Im Rahmen der Erfindung ist ebenso die Ausgestaltung des Anodenraums und des Kathodenraums nicht besonders beschränkt.

Erste beispielhafte Ausgestaltungen für einen exemplarischen Aufbau von generellen Elektrolysezellen sowie von möglichen Anoden- und Kathodenräumen sind in Figuren 8 bis 11 dargestellt.

Eine elektrochemische Reduktion von beispielsweise CO₂ und/oder CO findet in einer Elektrolysezelle statt, welche üblicherweise aus einem Anoden und einem Kathodenraum besteht. In den nachfolgenden Figuren 8 bis 11 sind Beispiele einer möglichen Zellanordnung dargestellt. Für jede dieser Zellanordnungen kann eine erfindungsgemäße Gasdiffusionselektrode verwendet werden, beispielsweise als Kathode K. In Figuren 8 bis 11 sind beispielhaft Membranen M, z.B. Ionenselektive Membranen, zur Trennung von Katholyt und Anolyt dargestellt, welche aber auch beispielsweise durch Diaphragmen ergänzt oder ersetzt werden können.

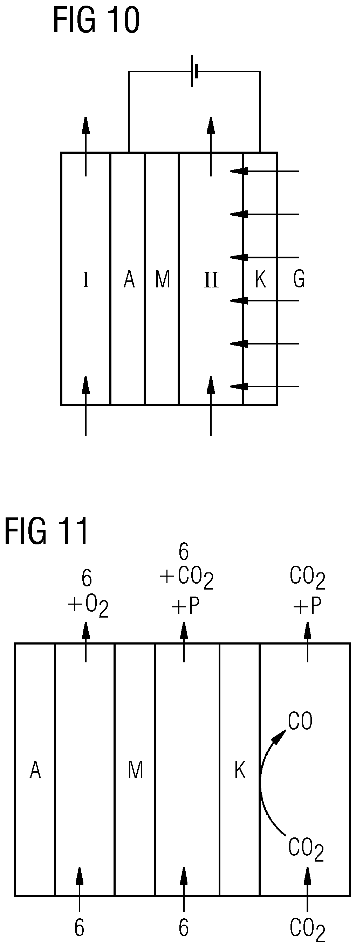

Beispielhaft ist der Kathodenraum II in Figur 8 so ausgestaltet, dass ein Katholyt von unten zugeführt wird, wobei dieser nach oben den Kathodenraum II verlässt. Alternativ kann der Katholyt aber auch von oben zugeführt werden, wie beispielsweise bei Fallfilmelektroden. Über die Gasdiffusionselektrode K kann beispielsweise CO2 und/oder CO zugeführt werden, wobei dieses durch die poröse Gasdiffusionselektrode als Kathode K - wie dargestellt - in den Kathodenraum II zur Reduktion gefördert werden kann. An der Anode A, welche mit der Kathode K mittels einer Stromquelle zur Bereitstellung der Spannung für die Elektrolyse elektrisch verbunden ist, findet im Anodenraum I die Oxidation eines Stoffes statt, der von unten beispielsweise mit einem Anolyt zugeführt wird, und der Anolyt mit dem Produkt der Oxidation dann den Anodenraum verlässt. Obgleich nicht dargestellt sind aber auch Ausführungsformen mit poröser Anode denkbar. In Figur 8 sind die Räume I und II durch eine Membran M getrennt. Im Gegensatz hierzu liegen im PEM (Protonen- bzw. IonenAustauscher-Membran) -Aufbau der Figur 9 eine poröse Kathode K und eine poröse Anode A direkt an der Membran M, wodurch der Anodenraum I vom Kathodenraum II getrennt wird. Der Aufbau in Figur 10 entspricht einer Mischform aus dem Aufbau aus Figur 8 und dem Aufbau aus Figur 9, wobei auf Katholytseite ein Aufbau mit Gasdiffusionselektrode vorgesehen ist, wie in Figur 8 dargestellt, wohingegen auf Anolytseite ein Aufbau wie in Figur 9 vorgesehen ist. Selbstverständlich sind auch Mischformen oder andere Ausgestaltungen der beispielhaft dargestellten Elektrodenräume denkbar. Weiterhin denkbar sind Ausführungsformen ohne Membran. Gemäß bestimmten Ausführungsformen können der kathodenseitige Elektrolyt und der anodenseitige Elektrolyt somit identisch sein, und die Elektrolysezelle/Elektrolyseeinheit kann ohne Membran auskommen. Eine ausreichende Gastrennung kann dann beispielsweise durch entsprechende Konstruktion der Elektrolysezelle erreicht werden. Es ist jedoch nicht ausgeschlossen, dass die Elektrolysezelle in solchen Ausführungsformen eine Membran und/oder ein Diaphragma oder mehrere Membranen und/oder Diaphragmen, z.B. 2, 3, 4, 5, 6 oder mehr Membranen und/oder Diaphragmen, welche gleich oder verschieden sein können, aufweist, jedoch ist dies ggf. mit zusätzlichem Aufwand verbunden hinsichtlich der Membran wie auch der angelegten Spannung. Katholyt und Anolyt können auch außerhalb der Elektrolysezelle optional wieder gemischt werden. Auch ein Flow-by-Betrieb ist in einer erfindungsgemäßen Elektrolysezelle möglich, wobei die erfindungsgemäße Elektrolysezelle dann auch einen wie in Fig. 11 gezeigten Aufbau haben kann. In Figur 11 kann hierbei dann das beispielhaft dargestellte CO2 durch die Gasdiffusionselektrode durchdiffundieren und zum Katholyten gelangen, wobei hier beispielhaft Kathlolyt und Anolyt als Elektrolyt 6 idenlisch dargestellt sind und auch der Austrag von Produkten P dargestellt ist.

Figuren 8 bis 11 sind schematische Darstellungen. Die Elektrolysezellen aus Figuren 8 bis 11 können auch zu gemischten Varianten zusammengefügt werden. Beispielsweise kann der Anodenraum als PEM-Halbzelle, wie in Figur 9, ausgeführt sein, während der Kathodenraum aus einer Halbzelle besteht, die ein gewisses Elektrolytvolumen zwischen Membran und Elektrode beinhaltet.

Gemäß bestimmten Ausführungsformen ist der Abstand zwischen Elektrode und Membran und/oder Diaphragma sehr klein bzw. 0, wenn die Membran und/oder das Diaphragma porös ausgeführt ist und eine Zufuhr des Elektrolyten beinhaltet. Die Membran und/oder das Diaphragma kann auch mehrschichtig ausgeführt sein, sodass getrennte Zuführungen von Anolyt bzw. Katholyt ermöglicht wird. Trenneffekte können bei wässrigen Elektrolyten beispielsweise durch die Hydrophobizität von Zwischenschichten und/oder eine entsprechende Einstellung der vorherrschenden Kapillarkräfte erreicht werden. Leitfähigkeit kann trotzdem gewährleistet werden, wenn leitfähige Gruppen in derartige Trennschichten integriert sind. Die Membran und/oder das Diaphragma kann eine ionenleitende Membran und/oder ein ionenleitendes Diaphragma sein, bzw. ein Separator, der nur eine mechanische Trennung bewirkt und für Kationen und Anionen durchlässig ist.

Die erfindungsgemäße Elektrode ist eine Gasdiffusionselektrode, die es ermöglicht, eine Dreiphasen-Elektrode aufzubauen. Beispielsweise kann ein Gas von hinten an die elektrisch aktive Vorderseite der Elektrode geführt werden, um dort die elektrisch-chemische Reaktion durchzuführen. Gemäß bestimmten Ausführungsformen kann die Gasdiffusionselektrode auch nur hinterströmt sein, d.h. ein Gas wie CO₂ und/oder CO wird an der Hinterseite der Gasdiffusionselektrode im Verhältnis zum Elektrolyten vorbeigeführt, wobei das Gas dann durch die Poren der Gasdiffusionselektrode dringen kann und das Produkt hinten abgeführt werden kann. Es wurde herausgefunden, dass, obwohl ein Gas wie CO₂ nicht durch den Elektrolyt "blubbert", trotzdem ähnlich hohe Faraday-Effizienzen (FE) an Produkten zu finden sind. Beispielsweise kann der Gasfluss beim Hinterströmen auch umgekehrt zum Fluss des Elektrolyten sein, damit eventuell durchgedrückte Flüssigkeit abtransportiert werden kann. Hierbei ist ein Spalt zwischen der Gasdiffusionselektrode und der Membran als Elektrolytreservoir vorteilhaft.

Die Zufuhr eines Gases lässt sich darüber hinaus auch auf andere Weise für die in Figur 9 dargestellte Gasdiffusionselektrode bewerkstelligen, beispielsweise bei einer Zufuhr von CO₂ und/oder CO. Dadurch dass das Gas, z.B. CO₂, gezielt durch die Elektrode geführt wird, können wiederum die Reduktionsprodukte schnell ausgetragen werden.

In bestimmten Ausführungsformen weist die Elektrolysezelle eine Membran und/oder ein Diaphragma auf, welche den Kathodenraum und den Anodenraum der Elektrolysezelle trennt, um eine Vermischung der Elektrolyten zu verhindern. Die Membran und/oder das Diaphragma sind hierbei nicht besonders beschränkt, sofern sie den Kathodenraum und den Anodenraum trennt. Insbesondere verhindert sie im Wesentlichen einen Übertritt der an Kathode und/oder Anode entstehenden Gase zum Anoden- bzw. Kathodenraum. Eine bevorzugte Membran ist eine Ionenaustauschmembran, beispielsweise auf Polymerbasis. Ein bevorzugtes Material einer Ionenaustauschmembran ist ein sulfoniertes Tetrafluorethylen-Polymer wie Nafion®, beispielsweise Nafion® 115. Neben Polymermembranen können auch keramische Membranen Verwendung finden, z.B. die in EP 1685892 A1 erwähnten und/oder mit Zirkoniumoxid beladene Polymere, z.B. Polysulfone. Gemäß bestimmten Ausführungsformen umfasst die erfindungsgemäße Elektrolysezelle 2 oder mehr, z.B. 3, 4, 5, 6 oder mehr Membranen und/oder Diaphragmen, wobei zwischen den verschiedenen Membranen und/oder Diaphragmen und/oder den Membranen und/oder Diaphragmen und den Elektroden Elektrolyträume vorgesehen sein können.

Darüber hinaus ist das Material der Anode nicht besonders beschränkt und hängt in erster Linie von der erwünschten Reaktion ab. Beispielhafte Anodenmaterialien umfassen Platin bzw. Platinlegierungen, Palladium bzw. Palladiumlegierungen und Glaskohlenstoff. Weitere Anodenmaterailien sind auch leitfähige Oxide wie dotiertes bzw. undotiertes TiO2, Indiumzinnoxid (ITO), Fluor dotiertes Zinnoxid (FTO), Aluminium dotiertes Zinkoxid (AZO), Iridiumoxid, etc. Ggf. können diese katalytisch aktiven Verbindungen auch nur in Dünnfilmtechnologie oberflächlich aufgebracht sein, beispielsweise auf einem Titan und/oder Kohlenstoffträger.

Die beschriebene Herstellungstechnik kann die Grundlage für die Produktion von Elektroden in größerem Maßstab darstellen, die Stromdichten >200mA/cm² je nach Betriebsweise erzielen können. Bisher bekannte Methoden zur Herstellung ethylenselektiver Cu-Elektroden sind üblicherweise nicht für ein scale-up geeignet bzw. sind nicht formstabil, aber ebenso andere Elektrolysezellen zur Reduktion von CO₂ und/oder CO. Die erfindungsgemäße Gasdiffusionselektrode GDE ermöglicht einen langzeitstabilen Elektrolysebetrieb einer katalysatorbasierten GDE in den in Fig. 8 bis 11 dargestellten Zellanordnungen bei hohen Stromdichten in salzhaltigen Elektrolyten.

Die Anodenreaktion in der erfindungsgemäßen Elektrolysezelle ist keineswegs auf eine Sauerstoffproduktion beschränkt. Weitere Beispiele sind die Peroxodisulfatbildung oder die Chlorherstellung.

Beschrieben ist eine Elektrolyseanlage, umfassend die erfindungsgemäße Gasdiffusionselektrode oder die erfindungsgemäße Elektrolysezelle.

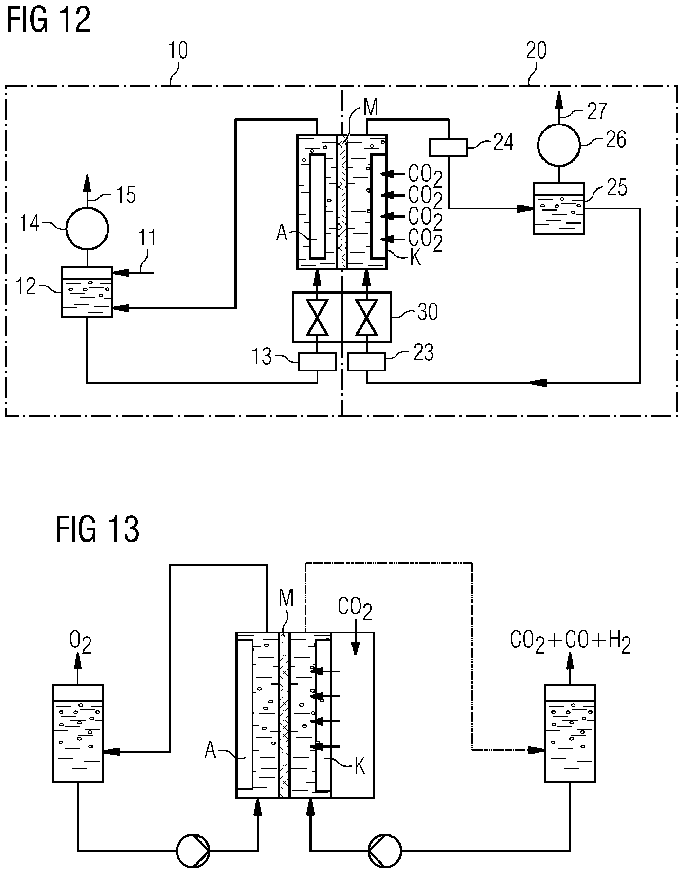

Eine abstrakte Darstellung einer Elektrolyseanlage ist in Figur 12 gezeigt.

In Figur 12 ist beispielhaft eine Elektrolyse dargestellt, bei der auf Seiten der Kathode Kohlendioxid und/oder CO reduziert wird und auf Seiten der Anode A Wasser oxidiert wird, obgleich auch andere Reaktionen ablaufen können, beispielsweise auf Anodenseite. Auf Seiten der Anode könnte gemäß weiteren Beispielen eine Reaktion von Chlorid zu Chlor, Bromid zu Brom, Sulfat zu Peroxodisulfat (mit oder ohne Gasentwicklung), etc. stattfinden. Als Anode A eignet sich beispielsweise Platin oder Iridiumoxid auf einem Titanträger, und als Kathode K die erfindungsgemäße Gasdiffusionselektrode zur Reduktion von CO₂ und/oder CO, beispielsweise basierend auf Cu. Die beiden Elektrodenräume der Elektrolysezelle sind durch eine Membran M, beispielsweise aus Nafion®, getrennt. Die Einbindung der Zelle in ein System mit Anolytkreislauf 10 und Katholytkreislauf 20 ist in der Figur 12 schematisch gezeigt.

Anodenseits wird gemäß dieser beispielhaften Ausführungsform in einen Elektrolyt-Vorratsbehälter 12 Wasser mit Elektrolytzusätzen über einen Einlass 11 zugeführt. Es ist jedoch nicht ausgeschlossen, dass Wasser zudem oder anstelle des Einlasses 11 an einer anderen Stelle des Anolytkreislaufs 10 zugeführt wird, da gemäß Figur 12 der Elektrolyt-Vorratsbehälter 12 auch zur Gastrennung verwendet wird. Aus dem Elektrolyt-Vorratsbehälter 12 wird das Wasser mittels der Pumpe 13 in den Anodenraum gepumpt, wo es oxidiert wird. Das Produkt wird dann wieder in den Elektrolyt-Vorratsbehälter 12 gepumpt, wo es in den Produktgasbehälter 14 abgeführt werden kann. Über einen Produktgasauslass 15 kann das Produktgas dem Produktgasbehälter 14 entnommen werden. Selbstverständlich kann die Abtrennung des Produktgases auch an anderer Stelle erfolgen, beispielsweise auch im Anodenraum. Es ergibt sich somit ein Anolytkreislauf 10, da der Elektrolyt anodenseits im Kreis geführt wird.

Auf der Kathodenseite wird im Katholytkreislauf 20 Kohlendioxid und/oder CO über die Kathode K, die hier als die erfindungsgemäße Gasdiffusionselektrode ausgestaltet ist, eingebracht. Hierbei kann die Zufuhr des CO₂ und/oder CO beispielsweise durch Hinterströmen oder Durchströmen der Gasdiffusionselektrode erfolgen. Mittels einer Pumpe 23 wird Katholyt in den Kathodenraum gebracht, wobei das Kohlendioxid und/oder CO an der Kathode K reduziert wird. Eine optionale weitere Pumpe 24 pumpt dann die an der Kathode K erhaltene Lösung beispielsweise weiter zu einem Behälter zur Gastrennung 25 - beispielsweise wenn die Kathode durchströmt wird, in dem ein Produktgas in einen Produktgasbehälter 26 abgeführt werden kann. Über einen Produktgasauslass 27 kann das Produktgas dem Produktgasbehälter 26 entnommen werden. Der Elektrolyt wird wiederum aus dem Behälter zur Gastrennung zurück zum Kathodenraum gepumpt, wo erneut Kohlendioxid und/oder CO reagiert werden kann. Auch hier ist nur eine beispielhafte Anordnung eines Katholytkreislaufs 20 angegeben, wobei die einzelnen Vorrichtungskomponenten des Katholytkreislaufs 20 auch anders angeordnet sein können, beispielsweise indem die Gastrennung bereits im Kathodenraum erfolgt. Das Gas, das aus dem Kathodenraum austritt, kann gemäß bestimmten Ausführungsformen zu einem überwiegenden Anteil aus Produktgas bestehen, da CO2 und/oder CO selbst gelöst bleiben können und/oder verbraucht wurden und somit die Konzentration im Elektrolyten etwas geringer ist.

Die Elektrolyse erfolgt in Figur 12 durch Zugabe von Strom über eine nicht dargestellte Stromquelle.

Um den Fluss des Wassers und des Katholyten steuern zu können, können im Anolytkreislauf 10 und Katholytkreislauf 20 optional Ventile 30 eingebracht sein.

Die Ventile 30 sind in der Figur vor dem Einlass in die Elektrolysezelle dargestellt, können aber auch beispielsweise nach dem Auslass der Elektrolysezelle und/oder an anderen Stellen des Anolyt- oder Katholytkreislaufs vorgesehen sein. Auch kann beispielsweise ein Ventil 30 im Anolytkreislauf vor dem Einlass in die Elektrolysezelle liegen, während das Ventil im Katholytkreislauf hinter der Elektrolysezelle liegt, oder umgekehrt. Auch können verschiedene Elektrolysezellen verwendet werden, beispielsweise die in Figuren 8 bis 11 gezeigten.

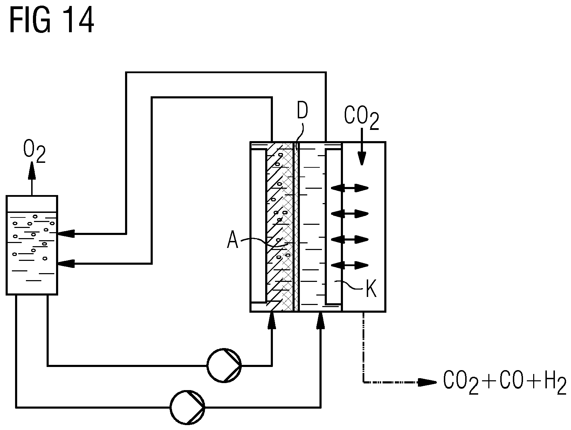

Weitere beispielhafte erfindungsgemäße Vorrichtungen mit durchströmten und hinterströmten Gasdiffusionselektroden als Kathoden sind in Figuren 13 und 14 gezeigt, wobei hier das Kohlenstoffdioxid und/oder CO im Gegenstrom geführt wird. In Figur 14 ist auch anstelle einer Membran M ein Diaphragma D vorgesehen.

Auch hier sind Vorrichtungen mit gemischten Anolyten und Katholyten möglich durch Verwendung entsprechender Elektrolysezellen, wie auch beispielhaft oben beschrieben.

Die Zusammensetzung einer Flüssigkeit oder Lösung, beispielsweise einer Elektrolytlösung, die der Elektrolyseeinrichtung zugeführt wird, ist hierbei nicht besonders beschränkt, und kann alle möglichen Flüssigkeiten oder Lösungsmittel umfassen, wie beispielsweise Wasser, in denen ggf. zusätzlich Elektrolyten wie Leitsalze, ionische Flüssigkeiten, Stoffe zur elektrolytischen Umsetzung wie Kohlendioxid und/oder CO, welches beispielsweise in Wasser gelöst sein kann, Additive zur Verbesserung der Löslichkeit und/oder des Benetzungsverhaltens, Entschäumer, etc. enthalten sein können. Im Katholyten kann beispielsweise auch Kohlendioxid und/oder CO umfasst sein.

Die Flüssigkeiten oder Lösungsmittel, ggf. zusätzliche Elektrolyte wie Leitsalze, ionische Flüssigkeiten, Stoffe zur elektrolytischen Umsetzung, Additive zur Verbesserung der Löslichkeit und/oder des Benetzungsverhaltens, Entschäumer, etc. können zumindest in einem Elektrodenraum oder in beiden Elektrodenräumen vorhanden sein. Es können auch jeweils zwei oder mehr der genannten Stoffe bzw. Gemische davon umfasst sein. Diese sind erfindungsgemäß nicht besonders beschränkt und können anodenseitig und/oder kathodenseitig verwendet werden.

Anstelle des in Figuren 12 bis 14 dargestellten Aufbaus einer Elektrolyseanlage mit einer Elektrolysezelle umfassend einen Anodenraum mit Anode A, eine Membran M oder ein Diaphragma D und einen Kathodenraum mit Gasdiffusionselektrode K können auch beispielsweise die in Fig. 8 bis 11 gezeigte Elektrolysezellen in einer Elektrolyseanlage zur Anwendung kommen.

Die erfindungsgemäße Elektrolysezelle bzw. die Elektrolyseanlage kann beispielsweise bei einer Elektrolyse von Kohlendioxid und/oder CO zum Einsatz kommen.

Ebenfalls offenbart ist die Verwendung einer erfindungsgemäßen Gasdiffusionselektrode, einer erfindungsgemäßen Elektrolysezelle oder einer Elektrolyseanlage bei der Elektrolyse von CO₂ und/oder CO.

Weiterhin ist die vorliegende Erfindung auf ein Verfahren zur Elektrolyse von CO₂ und/oder CO gerichtet, wobei eine erfindungsgemäße Gasdiffusionselektrode, bevorzugt als Kathode, verwendet wird, oder wobei eine erfindungsgemäße Elektrolysezelle oder eine Elektrolyseanlage verwendet wird.

Gemäß bestimmten Ausführungsformen findet das Verfahren bei einer Temperatur von 40 °C oder mehr, beispielsweise 50°C oder mehr, statt. Gemäß bestimmten Ausführungsformen wird ein wässriger Elektrolyt verwendet.

Die elektrochemische Reduktion von CO₂ und/oder CO kann in einer Elektrolysezelle stattfinden, welche üblicherweise aus einem Anoden- und einem Kathodenraum besteht. Anodenraum und Kathodenraum werden typischerweise mit mindestens einer Ionen-selektiven Membran und/oder einem Diaphragma voneinander getrennt gehalten. In den Fig. 8 bis 11 sind Beispiele von möglichen Zellanordnungen von Elektrolysezellen zur erfindungsgemäßen Elektrolyse von CO₂ und/oder CO dargestellt, welche im Detail auch oben beschrieben sind. Mit jeder dieser Zellanordnungen ist das erfindungsgemäße Elektrolyseverfahren durchführbar. Gemäß bestimmten Ausführungsformen erfolgt die elektrochemische Reduktion von CO₂ und/oder CO im Flow-By Modus.

Insbesondere betrifft die vorliegende Erfindung somit auch ein Verfahren und ein Elektrolysesystem zur elektrochemischen Kohlenstoffdioxid- und/oder Kohlenstoffmonoxidverwertung. Kohlenstoffdioxid (CO₂) und/oder Kohlenstoffmonoxid (CO) kann hierbei beispielsweise in eine Elektrolysezelle eingeleitet und an einer Kathode mithilfe einer Gasdiffusionselektrode (GDE) auf der Kathodenseite reduziert werden.

Um eine genügend hohe Leitfähigkeit im Kathodenraum zu gewährleisten, sollte insbesondere im Fall einer CO₂ Reduktion der wässrige Elektrolyt ein gelöstes "Leitsalz" enthalten, welches nicht besonders beschränkt ist.

Auch beschrieben ist ein Katalysatormaterial umfassend ein Metall M, das ausgewählt ist aus Ag, Au, Cu und Mischungen und/oder Legierungen und/oder Salzen davon, wobei das Katalysatormaterial dendritische und amorphe Strukturen umfasst.

Die Eigenschaften des Katalysatormaterials entsprechen dabei denen, die im Zusammenhang mit dem erfindungsgemäßen Herstellungsverfahren des ersten Aspekts bereits genannt sind, da dieses durch die Schritte:
Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial; und ggf.
- Abtrennen, Waschen und ggf. Trocknen des Katalysatormaterials
erhalten werden kann. Insoweit entspricht das Katalysatormaterial auch dem Katalysatormaterial in der erfindungsgemäßen Gasdiffusionselektrode.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiele

### Referenzbeispiele zur Erzeugung des Katalysatormaterials

Für die Erzeugung vorteilhafter Kupfernanodendrite auf chemischen Weg, wurde eine Kupfermagnesiumlegierung in Salzsäure unter Anwesenheit von gelösten Kupferionen behandelt. Hierbei wurden beispielhafte Elementzusammensetzungen über den gesamten Bereich des Phasendiagrams ausgewählt (1 At.% Mg -99 At.% Mg. Als vorteilhafte Ausgangslegierung wurde eine solche gefunden, welche hauptsächlich aus der intermetallischen Lavesphase Mg₂Cu besteht. Es konnten ebenfalls Spuren der Lavesphase Cu₂Mg gemäß des Phasendiagramms in Fig. 1 nachgewiesen werden.

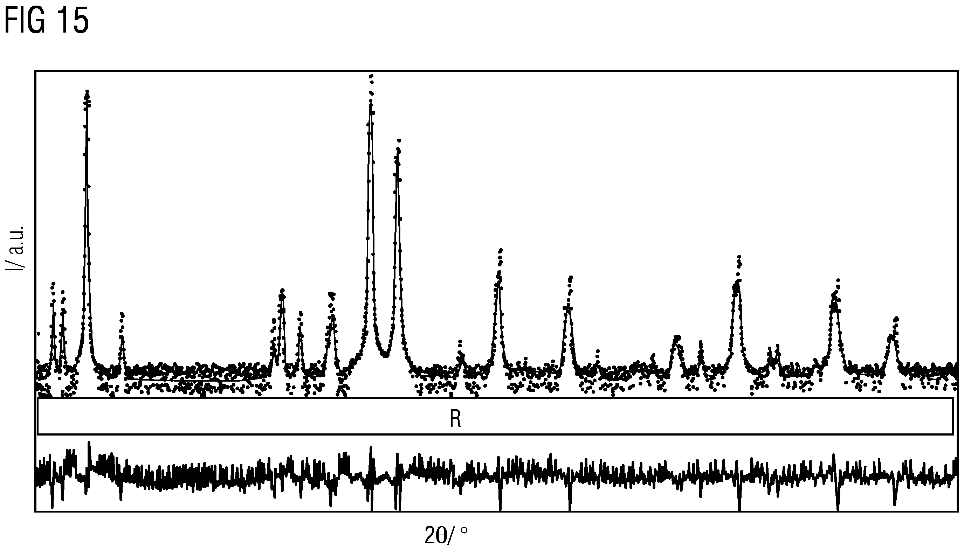

Neben den stabilen intermetallischen Phasen Cu₂Mg und Mg₂Cu ist eine dritte metastabile Cu₃Mg Phase bekannt, die durch schnelles Quenchen der Schmelze erhalten werden kann. Durch Rascherstarrung kann ebenfalls eine amorphe Legierung mit einem Magnesiumgehalt von 14.5 At.% erhalten werden, in der die Nahordnung der Cu-Atome denen der vorteilhaften Mg₂Cu-Phase entspricht und die ebenfalls für die Synthese der Kupferdendrite verwendet werden kann. In der folgenden Fig. 15 ist ein Pulverdiffraktogramm, aufgenommen mit Pulverdiffraktormeter Bruker Phaser D2 2^{nd} Gen, einer Cu₂Mg reichen (90 Gew.%) Legierung gezeigt. Fig. 15 zeigt somit eine quantitative Phasenanalyse einer Ausgangslegierung des erfindungsgemäßen Verfahrens (Cu₂Mg reiche Legierung).

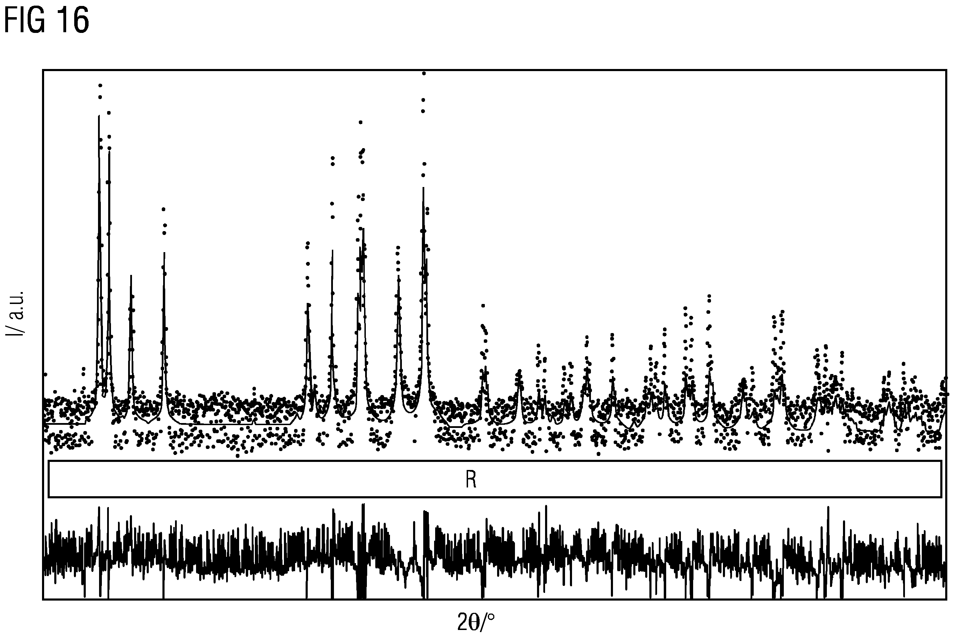

Das Ausgangsmaterial eignet sich zur Herstellung eines Ethylen-selektiven Katalysators, jedoch hat sich gezeigt, dass magnesiumreiche Legierungen Katalysatoren mit höherer Selektivität liefern. Das Diffraktogramm in Fig. 16 zeigt eine vorteilhafte magnesiumreiche Legierung mit einem Mg₂Cu-Phasenanteil von (86 Gew.%). Fig. 15 zeigt eine quantitative Phasenanalyse einer weiteren Ausgangslegierung des erfindungsgemäßen Verfahrens (Mg₂Cu reiche Legierung).

Es hat sich herausgestellt, dass die ausgewählten Legierungen zur Herstellung einer Gasdiffusionselektrode vorzugsweise mit einer Korngröße <75µm eingesetzt werden, wobei auch gröbere Körnungen von 75 µm - 200 µm können verwendet werden.

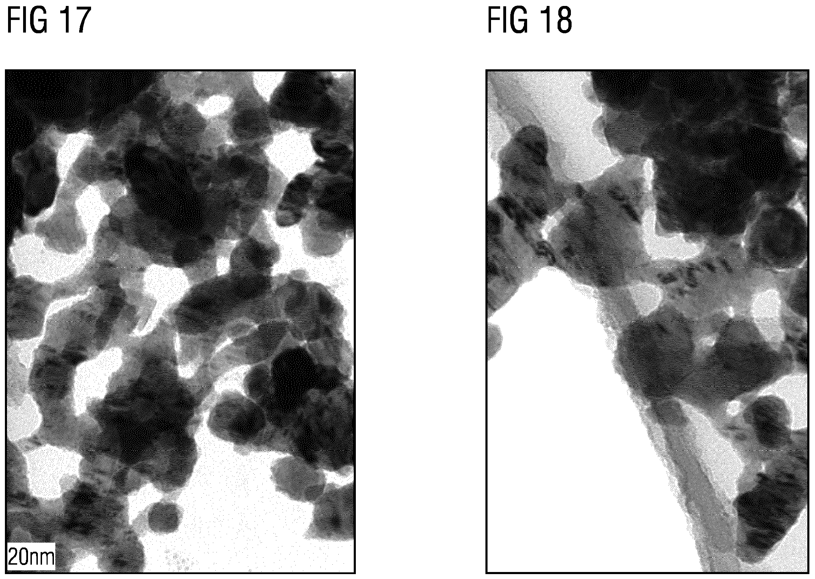

Figuren 17 und 18 zeigen TEM-Bilder (JEOL JEM-2200FS) der erzeugten Raney-Struktur durch reines Herauslösen von Mg aus der Mg₂Cu-reichen Legierung mit Salzsäure (5g Legierung in einer Lösung aus 140ml 32%iger Salzsäure und 800 ml dest. Wasser).

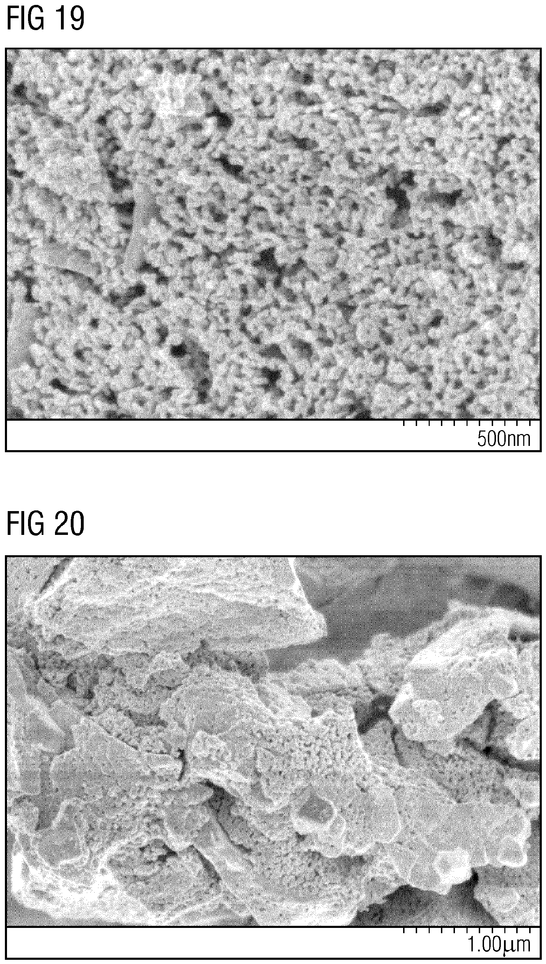

Der strukturelle Unterschied bei der Verwendung von Mg₂Cu und Cu₂Mg beim Lösen mit Salzsäure (im obigen Verhältnis) ist in Figuren 19 und 20(Jeol JSM 6610-La) gezeigt. Fig. 19 zeigt hierbei die Herstellung aus Mg₂Cu, und Fig. 20 die Herstellung aus Cu₂Mg. Für Mg₂Cu kann eine Strukturierung mit einer Vielzahl an Dendriten beobachtet werden

Die Auflösung der magnesiumreichen Legierung führt zu einer höheren Anzahl feiner Cu-Strukturen, die eine erhöhte Selektivität für die Bildung von Ethylen aufweisen. Ein hoher Magnesiumgehalt führt letztlich zum vollständigen Zerfall des Gefüges. Die kupferreiche Legierung Cu₂Mg weist nach dem Herauslösen von Magnesium deutlich gröbere poröse Partikel auf.

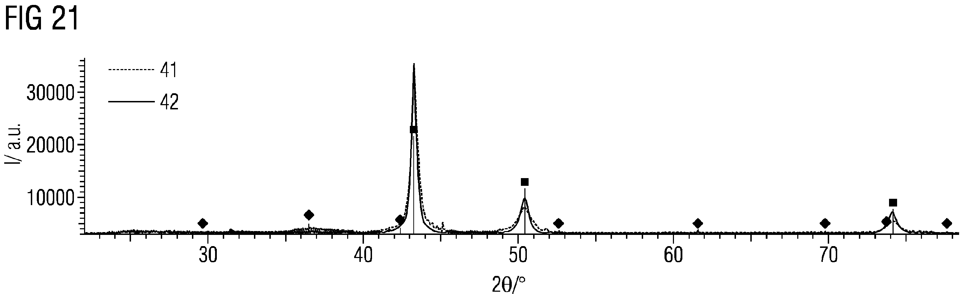

In Fig. 21 sind die Pulverdiffraktogramme der beiden erzeugten Raney-Strukturen basierend auf den zwei verschiedenen Ausgangslegierungen gezeigt. Gegenübergestellt sind die Struktur 41 aus der Cu₂Mg reichen Legierung und die Struktur 42 aus der Mg₂Cu reichen Legierung, wobei mit der Raute Cu₂O Cuprit und mit dem Quadrat Kupfer Cu gezeigt ist.

Es ergeben sich die folgenden Peaks mit den Millerschen Indizes gemäß Tabelle 2.

**Tabelle 2: Peak-Positionen**

| Peak Position 2Θ | HKL |
|---|---|
| 43.6 | (111) |
| 50.8 | (200) |
| 74.4 | (220) |

Das Material, das aus der Mg₂Cu reichen Legierung erzeugt wurde, weist ein ausgeprägteres Vorhandensein der Cu{111} Textur auf. Das Material zeigt bei Herstellung zu einer GDE eine hohe Faraday Effizienz für die Erzeugung von Ethylen >25%. Die starke Peakverbreiterung weist eindeutig auf Nanopartikel hin.

Es konnte nachgewiesen werden, dass magnesiumreichere Legierungen bzw. intermetallische Phasen (Mg₂Cu) zu defektreicheren Kupferstrukturen führen, die eine höhere Faradayeffizienz für Ethylen ermöglichen.

Neben strukturellen Aspekten fördert eine dünne Schicht an Cu₂O auf der Oberfläche die Ethylenselektivität des Katalysators, wie es bestimmt wurde. Die Herstellung unter der Anwesenheit von Luftsauerstoff ist dafür ausreichend.

Findet die Säurebehandlung in Anwesenheit von gelösten Kupferionen statt, erfolgt zusätzlich zu der Erzeugung einer defektreichen Raneystruktur ein simultanes Aufwachsen von dedritischen Kupferstrukturen; s. auch Ausführungsbeispiel 2. Bei diesem Prozess wirken gebildete Wasserstoffblasen als Templat für das Kupferwachstum. Dieser Effekt wurde bereits bei der elektrochemischen Abscheidung von Kupfer bei hohen Potentialen nachgewiesen. Für diesen Ansatz hat sich ebenfalls die magnesiumreiche Phase Mg₂Cu als vorteilhaft erwiesen. Mg₂Cu weist ein deutlich stärkeres Hydrolyseverhalten als Cu₂Mg auf, da die Bindungsstärke der Cu-Cu Bindung deutlich geringer ist. Ein Hydrolyseverhalten wird somit schon in reinem Wasser beobachtet. [Materials Letters 2008, 62, 19, S. 3331-3333]

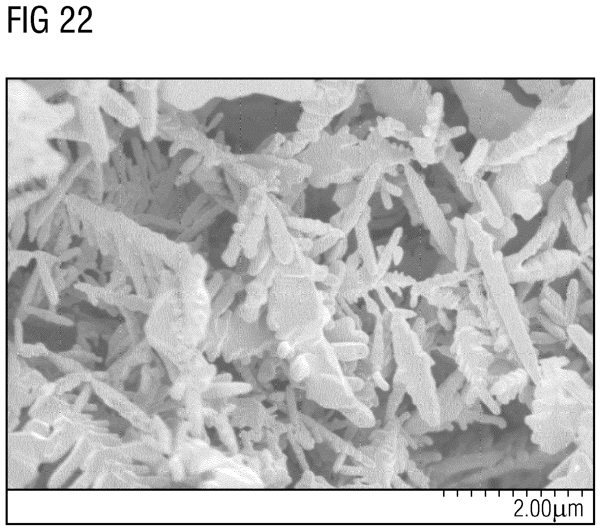

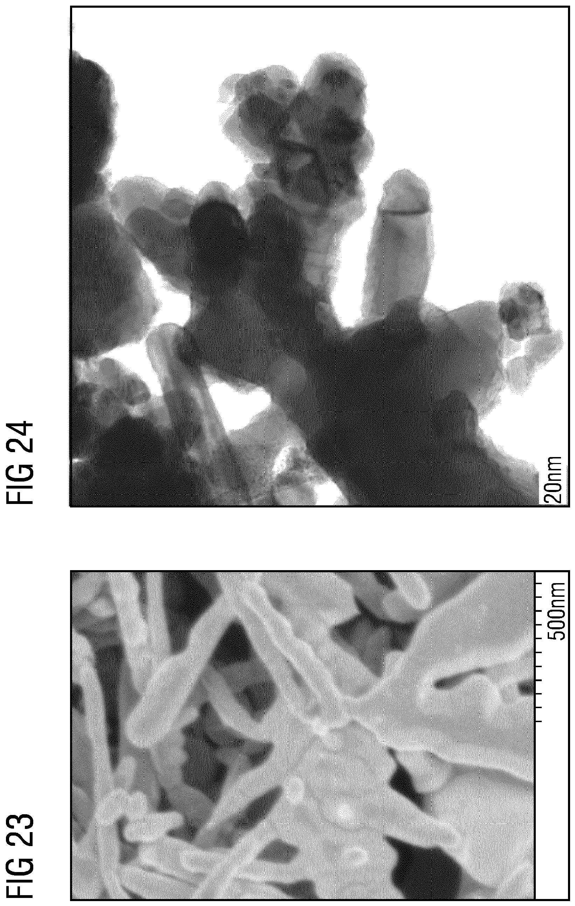

Figuren 22 - 24 (SEM-Aufnahmen) zeigen die Bildung von 20 nm Dendriten durch simultanes Aufwachsen von Kupfer bei der Auflösung einer Mg₂Cu-reichen Phase unter der Anwesenheit gelöster Cu²⁺-Ionen
Der hergestellte Katalysator weist darüber hinaus eine erhöhte Selektivität für die Bildung von Ethylen (<20% für die Cu₂Mg-reiche Legierung und >25% für die Mg₂Cu reiche Legierung) nach Herstellung einer Gasdiffusionselektrode auf, wie nachstehend noch gezeigt. Neben der erhöhten Selektivität wurde eine sehr niedrige Überspannung bei der elektrochemischen Reduktion bei J=150 mA/cm² beobachtet, sodass die Gesamtzellspannung von U=2.8V bei d=1cm Elektrodenabstand und 1M KHCO₃ erreichbar wurde. Das Material ist aufgrund seiner dendritischen Struktur ebenfalls durch eine sehr gute elektrische Leitfähigkeit gekennzeichnet. Es konnte ebenfalls nachgewiesen werden, dass die erzeugten nano-Dendrite durch einen dünnen Magnesiumoxidfilm stabilisiert werden. Die beschriebenen Verfahren ermöglichen eine Herstellung sehr reiner Katalysatoren, die keine nachteiligen Verunreinigungen an anderen Übergangsmetallen aufweisen.

Zur Herstellung von oxidstabilisierten Katalysatoren kann das Herauslösen unter Anwesenheit von elektrochemisch stabilen Trägeroxiden (γ-Al₂O₃, MgO, TiO₂, Y₂O₃, ZrO₂) durchgeführt werden, wobei dies beispielhaft für TiO₂ in den nachfolgenden Ausführungsbeispielen 3 und 4 gezeigt ist. Als weniger vorteilhaft hat sich hier die Herstellung unter der Anwesenheit eines gelösten Kupfersalzes gezeigt, da durch die Imprägnierung eine Bildung geträgerten Cu-Clustern erzeugt wird, die eine Faraday Effizienz >45% für CO aufweisen können, s. Ausführungsbeispiel 3. Exemplarisch wurde TiO₂ (Hombikat) als oxidisches Trägermaterial mit einer spezifischen Oberfläche von 65 m²/g ausgewählt. Die geträgerten Katalysatoren weisen einen Oxidgehalt von 5-30 Gew.%, bevorzugt 5-10 Gew.%, auf, bezogen auf den Katalysator. Es wurde beobachtet, dass bei der Synthese auch ein geringer Anteil (<2 Gew.%) eines inversen Mg₂TiO₄ Spinells entstehen kann. Grundvoraussetzung ist das Erreichen der Kupfer-Perkolationsbarriere, sodass eine elektrische Leitfähigkeit des Materials gegeben ist. Es wird ebenfalls nicht ausgeschlossen, dass ein Teil des im Katalysator vorkommenden Kupfers als Kupfer-(I)-Oxid vorliegt. Das Vorkommen von Kupfer-(II)-Oxid ist zu verhindern.

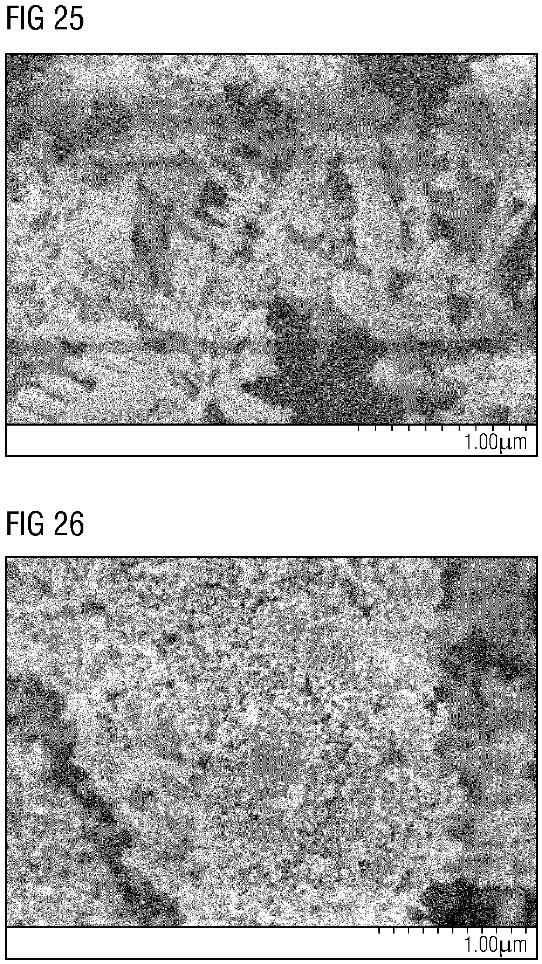

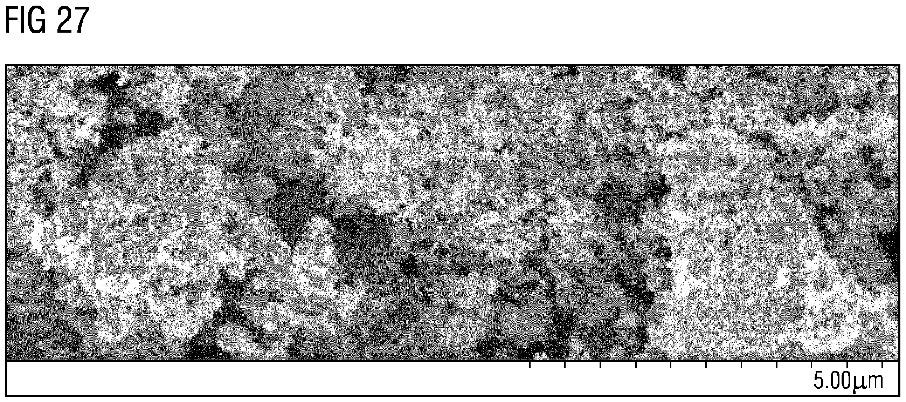

Figuren 25 - 27 zeigen SEM Bilder eines TiO₂-stabilisierten dendritischen Cu-Katalysators hergestellt aus der Mg₂Cu-reichen Ausgangslegierung, welche in Ausführungsbeispiel 3 verwendet wird.

Die hergestellten Katalysatoren eigenen sich aufgrund ihrer Morphologie zur Herstellung einer Membran-ElektrodenAnordnung (MEA) auf Basis einer Anionenaustauschermembran. Mit Hilfe dieses Konzeptes konnte eine Faraday Effizienz >30% für Ethylen erzielt werden.

### Ausführungsbeispiel 1: Herstellung eines Katalysators auf der Basis einer CuMg-Legierung ohne dendritische Abscheidung

5g Legierung bestehend aus der dominierenden Phase Mg₂Cu werden in einer Lösung aus 140ml 32%iger Salzsäure und 800 ml dest. Wasser rasch überführt. Nach dem Abklingen der Reaktion erfolgt das Waschen der erhaltenden Partikel mittels einer Nutsche (3xmit 50ml dest. Wasser, 3x mit 50ml Ethanol.

Es erfolgt die weitere Zugabe von 5oo mg (7,2 Gew.%) PTFE Pulver (Dyneon TF 2021) mit einer 3 min andauernden Mischperiode in einer IKA A10 Messermühle. Die Mischung wird auf ein KupferneLz (LxB=10cmx4cm) mittels einer 0.5mm dicken Schablone aufgesiebt und das überschüssige Material mit einem Spachtel oder Rakel entfernt, sodass eine einheitlich dicke Pulverschicht entsteht.Das Netz mit der aufgesiebten Pulverschicht wird in einem 2-Walzen Kalander auf eine Dicke von 500 µm gewalzt. Vorzugweise werden die Walzen in diesem Schritt auf eine Temperatur von 60-80°C temperiert.

Zur elektrochemischen Charakterisierung wurde ein Versuchsaufbau verwendet, der im Wesentlichen dem der oben beschriebenen Elektrolysezelle bzw. einer entsprechenden Anlage der Figur 8 mit Durchflusszellen für die Elektrolyse entspricht.

In der Flusszelle wurde als Kathode die jeweilige Gasdiffusionselektrode (GDE) mit einer aktiven Fläche von 3,3 cm² verwendet, die Gaszufuhrrate von Kohlendioxid auf Kathodenseite betrug 50 mL/min, und der Elektrolytfluss auf beiden Seiten 130 ml/min. Die Anode war Iridiumoxid auf einem Titanträger mit einer aktiven Fläche von 10 cm². Der Katholyt war eine 1M KHCO₃-Lösung mit KHCO₃ in einer 1M Konzentration, und der Anolyt war 1M KHCO₃, jeweils in deionisiertem Wasser (18 MΩ), jeweils in einer Menge von 100 mL, und die Temperatur betrug 25°C.

Der erhaltenden Katalysator liefert eine hohe Faraday Effizienz für Ethylen >25% bei einer Stromdichte von 150mA/cm². Wird die Reaktion in Anwesenheit von Luftsauerstoff durchgeführt, so kann an der Oberfläche der Nanopartikel eine dünne Cu₂O-Schicht nachgewiesen werden.

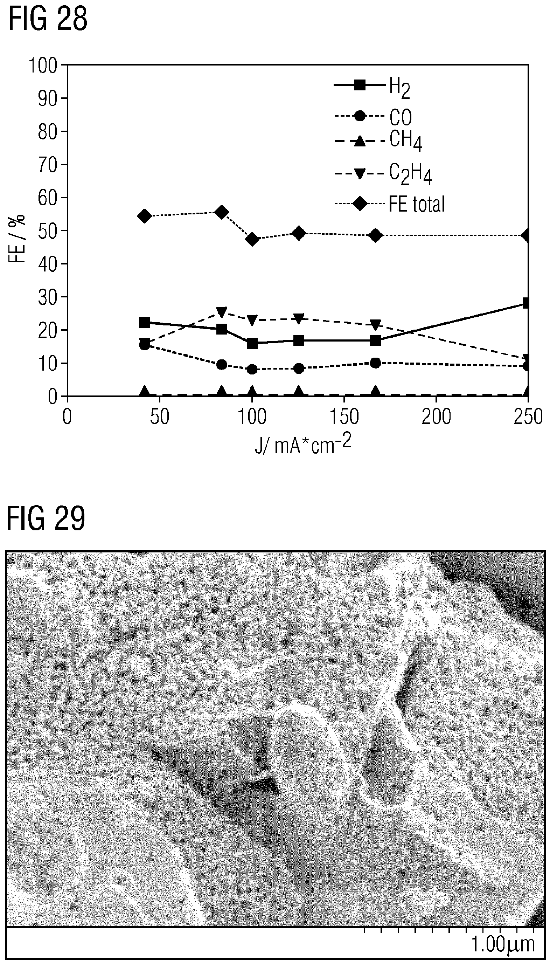

Fig. 28 zeigt die elektrochemische Charakterisierung der Zelle aus Ausführungsbeispiel 1. Angegeben ist in der Figur die Faraday Effizienz (FE) in Abhängigkeit von der Stromdichte J.

Der nicht gezeigte Anteil der FE kann nicht gemessenen Flüssiganteilen (z.B. Ethanol + andere C2, C3 Bausteinen) zugeordnet werden.

Fig. 29 zeigt darüber hinaus eine SEM-Aufnahme der Oberfläche der erhaltenen GDE. Es wurde beobachtet, dass sich die Morphologie der Dendriten über einen Zeitraum von zwei Stunden im Wesentlichen nicht ändert.

### Ausführungsbeispiel 2: Herstellung eines Katalysators auf der Basis von Cu-Mg mit dendritischer Abscheidung

Kupferdendriten aus einer CuMg-Legierung
400ml dest. Wasser werden mit 70ml 32% Salzsäure in einem 11 Erlenmeyerkolben vermischt. Anschließend werden 2.5g CuCl₂ hinzugegeben. Es erfolgt die portionsweise Zugabe von 2.5g einer Mg₂Cu-reichen Legierung unter Schwenken. Nach dem Abklingen der Reaktion (Blasenbildung) wird das Material schnellstmöglich mit einer Nutsche abfiltriert und 3x mit 50ml Wasser und 3x mit 50ml Ethanol gewaschen werden. Die Lagerung der Partikel erfolgt unter Inertgas. Im Anschluss erfolgt die Herstellung einer Elektrode sowie die elektrochemische Charakterisierung wie in Ausführungsbeispiel 1.

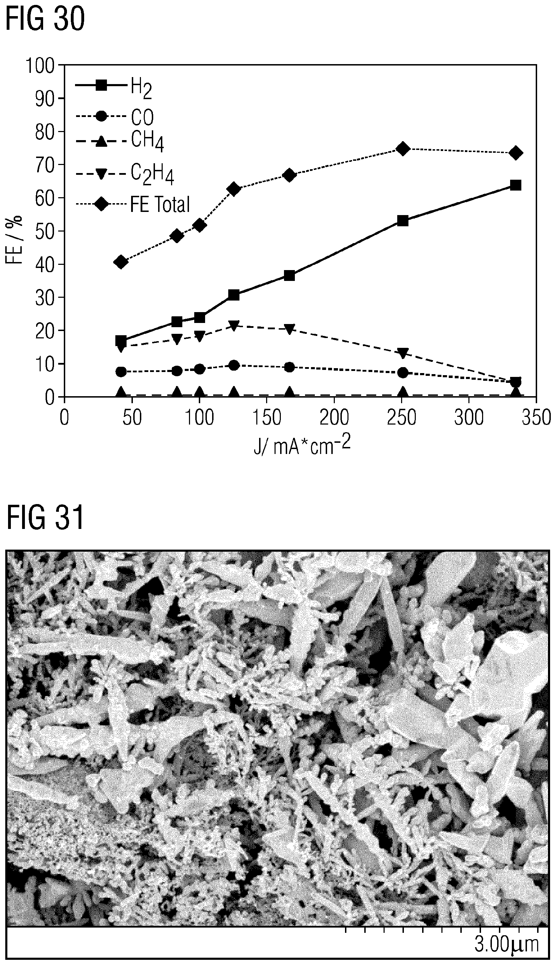

Fig. 30 zeigt die elektrochemische Charakterisierung der Zelle aus Ausführungsbeispiel 2. Angegeben ist in der Figur wiederum die Faraday Effizienz (FE) in Abhängigkeit von der Stromdichte J. Fig. 31 zeigt darüber hinaus eine SEM-Aufnahme der Oberfläche der erhaltenen GDE.

### Ausführungsbeispiel 3: Herstellung eines Katalysators auf der Basis von Cu-Mg mit dendritischer Abscheidung und Oxidträgerung auf TiO₂

800ml dest. Wasser werden mit 140ml 32% Salzsäure in einem 21 Erlenmeyerkolben vermischt. Anschließend erfolgt unter starkem Rühren die Zugabe von TiO₂ (Hombikat-Nanopowder nach Ansatz, s. Tabelle 3). Danach erfolgt die Zugabe von 5g CuCl₂. Nach 10 Minuten Rühren erfolgt die portionsweise Zugabe von 5g der CuMg-Legierung aus Ausführungsbeispiel 1 und 2. Nach dem Abklingen der Reaktion (Blasenbildung) wird das Material schnellstmöglich mit einer Nutsche abfiltriert und 3x mit 50ml dest. H₂O und 2x mit 50ml Ethanol gewaschen werden und unter Inertgas aufbewahrt. Die Einwaagen für verschieden hergestellte GDE sind in Tabelle 3 gezeigt.

**Tabelle 3:**

| **Einwaage CuMg (g)<75um** | **Einwaage CuCl₂ (g)** | **Einwaage TiO₂ (g)** | **Masse Cu total (G)** | **Anteil TiO₂ (wt%)** |
|---|---|---|---|---|
| **5** | 5 | **0.25** | 4.7 | 5 |
| **5** | **5** | **0.5** | **4.7** | **10** |
| **5** | 5 | **1.25** | 4.7 | 20 |
| **5** | 5 | **2** | 4.7 | 30 |

Das erhaltene Katalysatorpulver wird mit destilliertem Wasser und im Anschluss mit Ethanol gewaschen und am Vakuum getrocknet. Die Lagerung des Materials erfolgt unter Argonatmosphäre. Im Anschluss erfolgt die Herstellung einer Elektrode sowie die elektrochemische Charakterisierung wie in Ausführungsbeispiel 1.

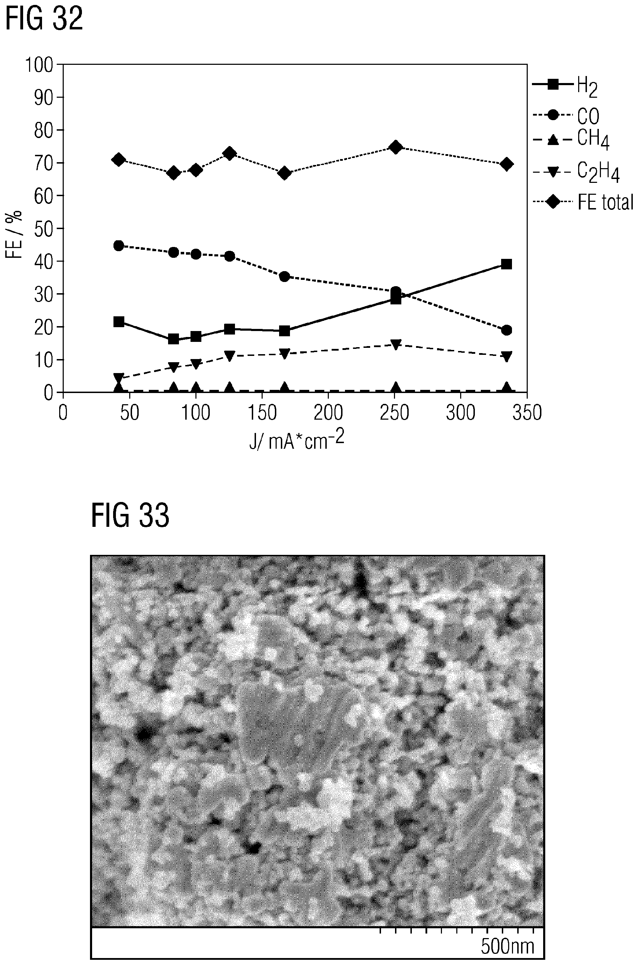

Fig. 32 zeigt die elektrochemische Charakterisierung der Zelle aus Ausführungsbeispiel 3 für eine Trägerung mit 10 Gew.% TiO₂. Angegeben ist in der Figur wiederum die Faraday Effizienz (FE) in Abhängigkeit von der Stromdichte J. Fig. 33 zeigt darüber hinaus eine SEM-Aufnahme der Oberfläche der erhaltenen GDE. Es zeigt sich ein nachteiliger Effekt durch die Imprägnierung mit Kupfersalz.

Durch die Oxidträgerung konnte eine erhöhte Stabilität des Katalysators bei Stromdichten >250mA/cm² nachgewiesen werden.

### Ausführungsbeispiel 4: Herstellung eines Katalysators auf der Basis von Cu-Mg ohne dendritische Abscheidung und Oxidträgerung auf TiO₂

Die Herstellung erfolgte wie in Ausführungsbeispiel 3, außer dass anstelle von 5g CuCl₂ und 5g der CuMg-Legierung 5 g der Cu-Mg-Legierung aus Ausführungsbeispiel 1 verwendet wurden. Dies ist auch aus der folgenden Tabelle 4 ersichtlich.

**Tabelle 4**

| Einwaage CuMg (g)<75um | Einwaage CuCl₂ (g) | Anteil TiO₂ (wt%) |
|---|---|---|
| 5 | 0 | 5 |
| 5 | 0 | 10 |
| 5 | 0 | 20 |
| 5 | 0 | 30 |

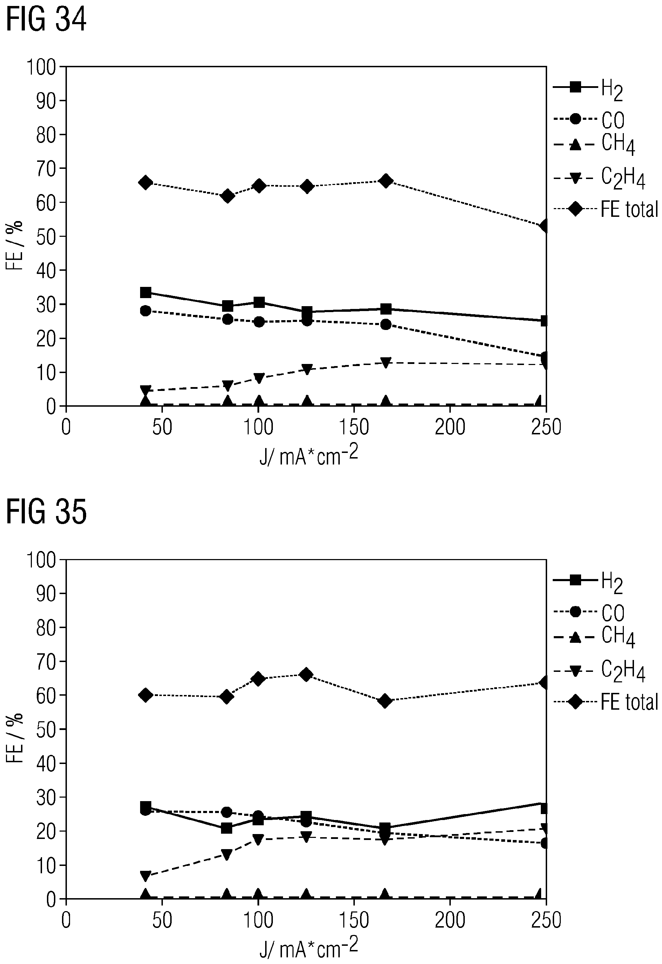

Figuren 34 und 35 zeigen die elektrochemische Charakterisierung der Zellen aus Ausführungsbeispiel 4 für eine Trägerung mit 5 Gew.% TiO₂ (Fig. 34) und 10 Gew.% TiO₂ (Fig. 35). Angegeben ist in der Figur wiederum die Faraday Effizienz (FE) in Abhängigkeit von der Stromdichte J.

Die Verwendung von Oxidträgern wie TiO₂ führt zu einer erhöhten Bildung von CO, da kleinere Cu-Cluster bzw. nanoPartikel stabilisiert werden, die bevorzugt CO bilden und keine Weiterreaktion ermöglichen.

### Ausführungsbeispiel 5: Herstellung von Cu-Dendriten aus Cu-Al Legierung (Vergleichsbeispiel)

Die Herstellung erfolgte wie in Ausführungsbeispiel 1, außer dass anstelle der Legierung bestehend aus der dominierenden Phase Mg₂Cu eine Cu₄₀Al₆₀-Legierung verwendet wurde. Die Herstellung von Kupferdendriten auf der Basis der Cu-Aluminiumlegierung führt nicht zu dem erwünschten Ergebnis. Der Kupferkatalysator weist nach dem Herauslösen von Aluminium Verunreinigungen an den säurestabilen Phasen AlCu und Al₂Cu auf. Diese intermetallischen Phasen weisen eine niedrige Überspannung für die Bildung von Wasserstoff auf. Es konnte somit nur eine geringe Faraday Effizienz für Ethylen erhalten werden.

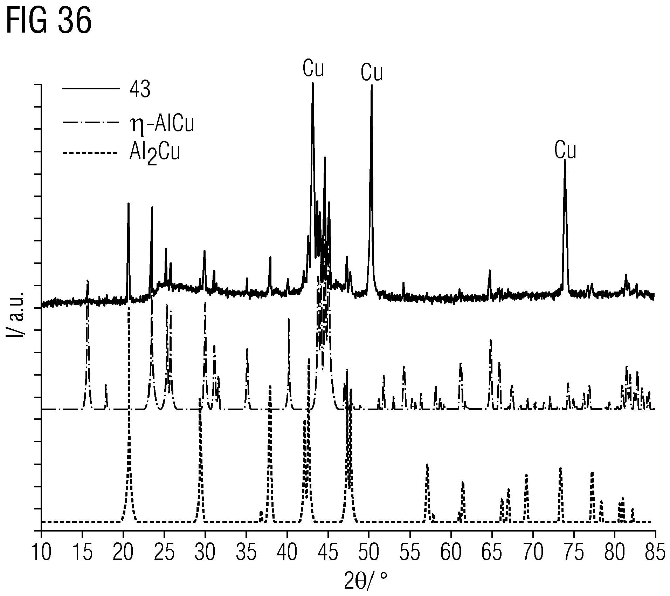

Fig. 36 zeigt hierbei die Identifikation der präparierten Probe mittels Pulverdiffraktormeter Bruker Phaser D2 2^{nd} Gen, insbesondere die säurestabilen Phasen Al₂Cu und AlCu.

### Ausführungsbeispiel 6: Vergleich der Verwendung einer kristallinen und einer amorphen Legierung.

Als Ausgangsmaterial wurde jeweils eine magnesiumhaltige Ausgangslegierung mit der Zusammensetzung 51,9 mol% Mg₂Cu und 48,1 mol% Mg verwendet, wobei zum einen eine kristalline Legierung, zum anderen eine amorphe Legierung verwendet wurde.

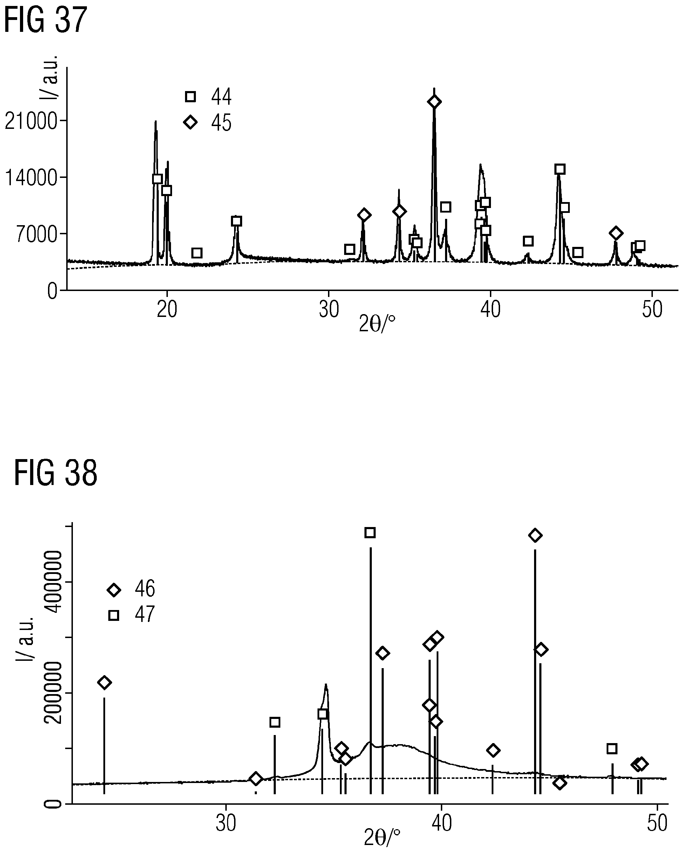

Beide Legierungen weisen dabei ein ähnliches Cu:Mg-Verhältnis auf, und beide Legierungen haben kristalline Magnesiumanteile, wie aus den PXRD-Diagrammen (Pulverdiffraktormeter Bruker Phaser D2 2^{nd} Gen) in Fig. 37 und 38 ersichtlich ist, wobei Fig. 37 die kristalline Legierung mit Mg₂Cu-Anteil 44 und Mg-Anteil 45 zeigt und Fig. 38 die amorphe Legierung mit Mg₂Cu-Anteil 46 und Mg-Anteil 47. Das enthaltene Magnesium kann hierbei zur Bildung eines MgO Oxidsupports beitragen. Die amorphe Legierung wurde verwendet, um besonders feine Cu-Strukturen herzustellen. Die amorphe Legierung weist kristalline Anteile der Mg₂Cu intermetallischen Phase auf.

Aus den beiden Ausgangsmaterialien wurde entsprechend den Vorschriften in Ausführungsbeispiel 1 ein Katalysatormaterial hergestellt.

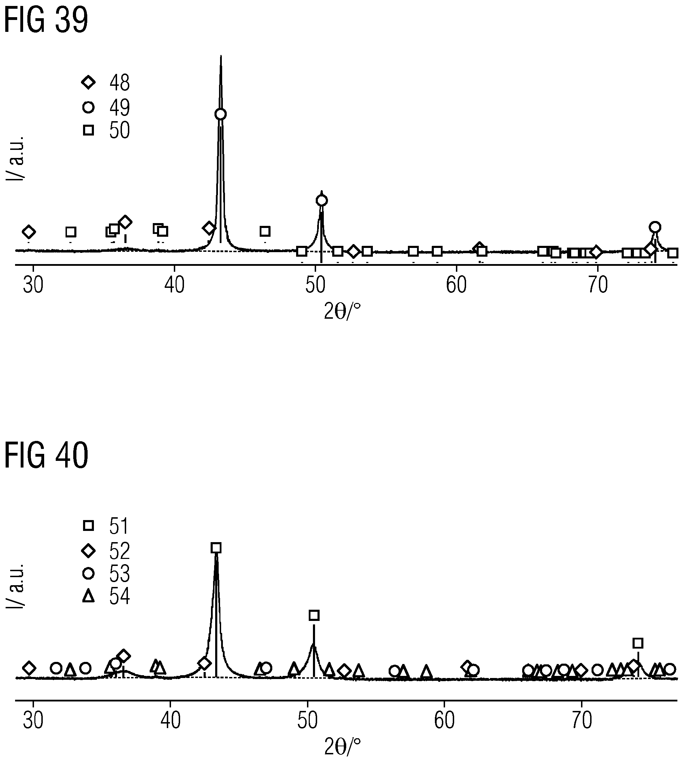

Für dieses sind PXRD-Spektren (Pulverdiffraktormeter Bruker Phaser D2 2^{nd} Gen) in Figuren 39 und 40 gezeigt, wobei Fig. 39 wiederum die kristalline Legierung mit Cu₂O-Anteil 48 (Cuprit), Cu 49 und CuO-Anteil 50 (Tenorit) zeigt und Fig. 40 die amorphe Legierung mit Cu-Anteil 51, Cu₂O-Anteil 52 (Cuprit), Mg-Anteil 53 und CuO-Anteil 54 (Tenorit).

Der Katalysator aus der kristallinen Legierung weist hierbei Cu-Kristallite >20nm auf, wohingegen der Katalysator aus der amorphen Legierung Cu-Kristallite <5nm aufweist. Beide Katalysatoren weisen Cu₂O im Bereich von 1-3 Gew.% auf, und beide Katalysatoren weisen CuO im Bereich <1 Gew.% auf. Der Katalysator aus der amorphen Legierung ist mit Magnesiumrückständen <0.5 Gew.% verunreinigt. Die Katalysatormorphologie kann somit durch die Wahl der Ausgangslegierung bzw. durch ihre Zusammensetzung stark beeinflusst werden. Das dendritische Wachstum kann durch den Anteil an Mg beeinflusst werden.

### Ausführungsbeispiel 7: Herstellung eines Katalysators auf der Basis einer CuMg-Legierung ohne dendritische Abscheidung

5g Legierung bestehend aus der dominierenden Phase Mg₂Cu (Hauner Metallische Werkstoffe) (51,9 mol% Mg₂Cu und 48,1 mol% Mg) werden in einer Lösung aus 140ml 32%iger Salzsäure und 800 ml dest. Wasser rasch überführt. Nach dem Abklingen der Reaktion erfolgt das Waschen der erhaltenden Partikel mittels einer Nutsche 3x mit 50ml dest. Wasser und 3x mit 50ml Ethanol. Die weitere Herstellung einer GDE sowie einer Elektrolysezelle erfolgte wie in Ausführungsbeispiel 1.

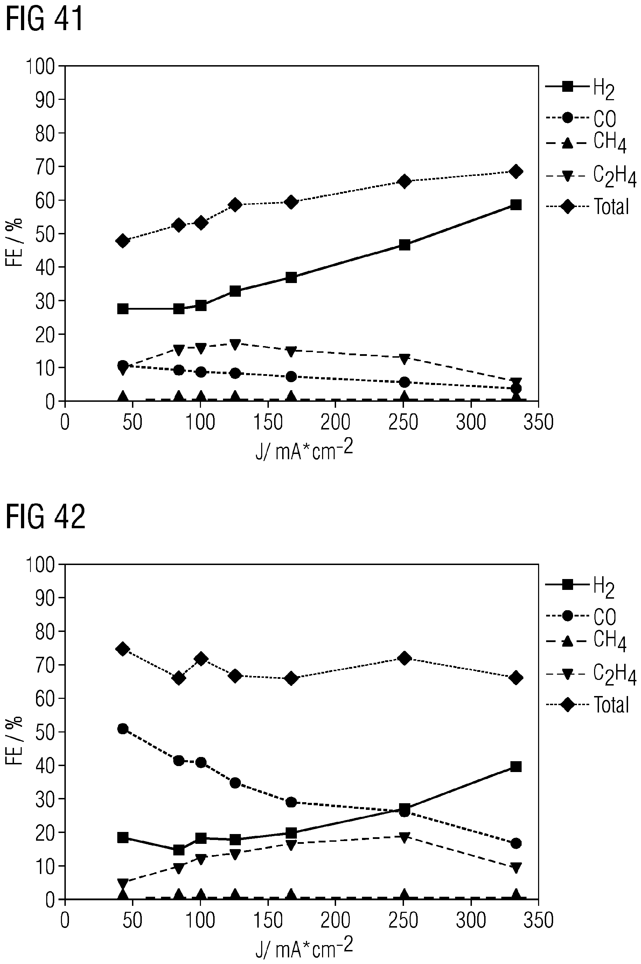

Fig. 41 zeigt die elektrochemische Charakterisierung der Zelle aus Ausführungsbeispiel 7. Angegeben ist in der Figur wiederum die Faraday Effizienz (FE) in Abhängigkeit von der Stromdichte J.

Nach dem Herauslösen von Magnesium aus der kristallinen Ausgangslegierung wird die Bildung nanoskaliger Cu-Kristallite >20nm beobachtet. Die elektrische Charakterisierung zeigt, dass Cu-Kristallite im mittleren Nanometerbereich zu einer geringeren CO Bildung neigen. Eine Magnesium-beinhaltende Ausgangslegierung ist für die Katalysatorherstellung nicht vorteilhaft. Vorzugsweise wird daher mit einer reinen Mg₂Cu Ausgangsphase gearbeitet.

### Ausführungsbeispiel 8: Herstellung eines Katalysators auf der Basis einer CuMg-Legierung ohne dendritische Abscheidung mit einer amorphen magnesiumreichen Legierung

5g Legierung bestehend aus der dominierenden Phase Mg₂Cu (51,9 mol% Mg₂Cu und 48,1 mol% Mg) werden in einer Lösung aus 140ml 32%iger Salzsäure und 800 ml dest. Wasser rasch überführt. Nach dem Abklingen der Reaktion erfolgt das Waschen der erhaltenden Partikel mittels einer Nutsche 3x mit 50ml dest. Wasser und 3x mit 50ml Ethanol. Die weitere Herstellung einer GDE sowie einer Elektrolysezelle erfolgte wie in Ausführungsbeispiel 1.

Fig. 42 zeigt die elektrochemische Charakterisierung der Zelle aus Ausführungsbeispiel 8. Angegeben ist in der Figur wiederum die Faraday Effizienz (FE) in Abhängigkeit von der Stromdichte J.

Durch die regellose Verteilung der Cu- und Magnesiumatome im Metallgitter der Ausgangslegierung (amorpher Zustand) wird nach dem Herauslösen von Magnesium die Bildung nanoskaliger Cu Kristallite <5nm beobachtet. Die elektrische Charakterisierung zeigt auch hier das Ergebnis, dass Cu-Kristallite im unteren Nanometerbereich zu einer verstärkten CO-Bildung neigen. Eine Magnesium-beinhaltende Ausgangslegierung ist also wiederum für die Katalysatorherstellung nicht vorteilhaft. Vorzugsweise wird daher mit einer reinen Mg₂Cu Ausgangsphase gearbeitet.

Die hier gezeigte Methode liefert die Möglichkeit, formstabile Gasdiffusionselektroden auf Katalysatorpulverbasis herzustellen, die in einer großtechnischen Elektrolyseur-Anwendung im Rahmen der elektrochemischen CO₂-Reduktion eingesetzt werden können und die eine verbesserte Langzeitstabilität des Elektrolysebetriebs ermöglichen.

## Patentansprüche

1. Gasdiffusionselektrode umfassend ein Metall M, das ausgewählt ist aus Ag, Au, Cu und Mischungen und/oder Legierungen davon, wobei die Gasdiffusionselektrode dendritische und amorphe Strukturen umfasst, wobei die Gasdiffusionselektrode Dendriten umfasst, welche Erdalkalimetall-Kupfer-, Erdalkali-Silber- und/oder Erdalkali-Gold-Phasen enthalten, wobei die Gasdiffusionselektrode herstellbar ist durch ein Verfahren, umfassend
- Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial;
- Abtrennen, Waschen und ggf. Trocknen des Katalysatormaterials; und
- Verarbeiten des Katalysatormaterials zu einer Gasdiffusionselektrode.

2. Gasdiffusionselektrode nach Anspruch 1, wobei die Gasdiffusionselektrode weiterhin Cu, Ag und/oder Au in der Wertigkeit +I aufweist, bevorzugt als Verbindung mit O, S, Se, As, Sb, weiter bevorzugt in Form eines Oxids.

3. Gasdiffusionselektrode nach Anspruch 1 oder 2, weiter umfassend mindestens ein Trägermaterial, das ausgewählt ist aus Metalloxiden, bevorzugt Al₂O₃, MgO, TiO₂, Y₂O₃, ZrO₂ und Mischungen davon, bevorzugt TiO₂.

4. Gasdiffusionselektrode nach einem der Ansprüche 1 bis 3, weiter umfassend mindestens einen Binder und ggf. ein Substrat.

5. Verfahren zur Herstellung einer Gasdiffusionselektrode nach einem der Ansprüche 1 bis 4, umfassend
- Bereitstellen eines kupfer-, silber- und/oder goldhaltigen Ausgangsmaterials, welches mindestens eine Erdalkalimetall-Kupfer-, Erdalkali-Silber- und/oder Erdalkali-Gold-Phase umfasst, wobei das Erdalkalimetall ausgewählt ist aus Mg, Ca, Sr, Ba und Mischungen davon;
- Einbringen des Ausgangsmaterials in eine Lösung mit einem pH von weniger als 5 und Reagieren zu einem Katalysatormaterial;
- Abtrennen, Waschen und ggf. Trocknen des Katalysatormaterials; und
- Verarbeiten des Katalysatormaterials zu einer Gasdiffusionselektrode.

6. Verfahren nach Anspruch 5, wobei das Ausgangsmaterial das Erdalkalimetall in einer Menge von 1 bis 99 At.%, bevorzugt 55 bis 98 At.%, weiter bevorzugt 60 bis 95 At.%, noch weiter bevorzugt 62 bis 90 At.% umfasst, bevorzugt wobei das Ausgangsmaterial mindestens eine Phase aufweist, die ausgewählt ist aus
Mg₂Cu, CaCu₅, SrCu₅, CuSr, BaCu, BaCu₁₃, Ca₂Ag₉, Ca₂Ag₇, CaAg₂, Ca₅Ag₃, MgAg, Mg₂₅Ag₈, SrAg₅, SrAg₂, SrAg, Sr₃Ag₂, BaAg₅, BaAg₂, BaAg, CaAu₅, CaAu₃, CaAu₂, CaAu, CasAu₄, Ca₇Au₃, MgAu, Mg₂Au, Mg₃Au, SrAu₅, SrAu₂, SrAu, Sr₃Au₂, Sr₇Au₃, Sr₉Au, BaAu₅, BaAu₂, Ba₃Au₂, BaAu und Mischungen davon, bevorzugt Mg₂Cu, Mg₂₅Ag₈ und/oder Mg₂Au, weiter bevorzugt Mg₂Cu, wobei M bevorzugt Cu ist.

7. Verfahren nach einem der Ansprüche 5 und 6, wobei das Katalysatormaterial nach dem Abtrennen, Waschen und ggf. Trocknen des Katalysatormaterials kalziniert wird, bevorzugt wobei das Ausgangsmaterial beim Einbringen des Ausgangsmaterials in eine Lösung mit einem pH von weniger als 5 und Reagieren zu einem Katalysatormaterial nicht komplett reagiert wird.

8. Verfahren nach einem der Ansprüche 5 bis 7, wobei beim Einbringen des Ausgangsmaterials weiter mindestens eine Verbindung von Cu, Ag und/oder Au, bevorzugt von Cu⁺, Ag⁺ und/oder Au⁺, eingebracht wird, und/oder wobei beim Einbringen des Ausgangsmaterials weiter mindestens ein Trägermaterial eingebracht wird, das ausgewählt ist aus Metalloxiden, bevorzugt Al₂O₃, MgO, TiO₂, Y₂O₃, ZrO₂ und Mischungen davon, bevorzugt TiO₂, wobei der Anteil des Trägermaterials im Katalysatormaterial bevorzugt 2 bis 40 Gew.% beträgt, weiter bevorzugt 3 bis 30 Gew.%, noch weiter bevorzugt 5 bis 10 Gew.%.

9. Verfahren nach einem der Ansprüche 5 bis 8, wobei das Verarbeiten des Katalysatormaterials zu einer Gasdiffusionselektrode die folgenden Schritte umfasst:
- Herstellung einer Mischung umfassend das Katalysatormaterial und mindestens einen Binder,
- Auftragen der Mischung umfassend das Katalysatormaterial und mindestens einen Binder auf ein Substrat, bevorzugt in Form eines Flächengebildes, und
- trockenes oder angefeuchtetes Aufwalzen der Mischung auf den Träger zum Bilden einer Schicht; oder
- Auftragen des Katalysatormaterials auf ein Substrat, bevorzugt in Form eines Flächengebildes, und
- trockenes oder angefeuchtetes Aufwalzen des Katalysatormaterials auf den Träger zum Bilden einer Schicht.

10. Elektrolysezelle, umfassend eine Gasdiffusionselektrode nach einem der Ansprüche 1 bis 4 als Kathode, eine Anode und ggf. mindestens eine Membran und/oder mindestens ein Diaphragma zwischen der Kathode und Anode.

11. Verfahren zur Elektrolyse von CO₂ und/oder CO, wobei eine Gasdiffusionselektrode nach einem der Ansprüche 1 bis 4 als Kathode verwendet wird, oder wobei eine Elektrolysezelle nach Anspruch 10 verwendet wird.

## Claims

1. Gas diffusion electrode comprising a metal M selected from Ag, Au, Cu and mixtures and/or alloys thereof, wherein the gas diffusion electrode comprises dendritic and amorphous structures, wherein the gas diffusion electrode comprises dendrites containing alkaline earth metal-copper, alkaline earth metal-silver and/or alkaline earth metal-gold phases, wherein the gas diffusion electrode is producible by a process comprising
- providing a copper-, silver- and/or gold-containing starting material comprising at least one alkaline earth metal-copper, alkaline earth metal-silver and/or alkaline earth metal-gold phase, where the alkaline earth metal is selected from Mg, Ca, Sr, Ba and mixtures thereof;
- introducing the starting material into a solution having a pH of less than 5 and reacting to give a catalyst material;
- removing, washing and optionally drying the catalyst material; and
- processing the catalyst material to give a gas diffusion electrode.

2. Gas diffusion electrode according to Claim 1, wherein the gas diffusion electrode further comprises Cu, Ag and/or Au in the +I valency, preferably as a compound with O, S, Se, As, Sb, further preferably in the form of an oxide.

3. Gas diffusion electrode according to Claim 1 or 2, further comprising at least one carrier material selected from metal oxides, preferably Al₂O₃, MgO, TiO₂, Y₂O₃, ZrO₂ and mixtures thereof, preferably TiO₂.

4. Gas diffusion electrode according to any of Claims 1 to 3, further comprising at least one binder and optionally a substrate.

5. Process for producing a gas diffusion electrode according to any of Claims 1 to 4, comprising
- providing a copper-, silver- and/or gold-containing starting material comprising at least one alkaline earth metal-copper, alkaline earth metal-silver and/or alkaline earth metal-gold phase, where the alkaline earth metal is selected from Mg, Ca, Sr, Ba and mixtures thereof;
- introducing the starting material into a solution having a pH of less than 5 and reacting to give a catalyst material;
- removing, washing and optionally drying the catalyst material; and
- processing the catalyst material to give a gas diffusion electrode.

6. Process according to Claim 5, wherein the starting material comprises the alkaline earth metal in an amount of 1 to 99 at.%, preferably 55 to 98 at.%, further preferably 60 to 95 at.%, even further preferably 62 to 90 at.%, preferably wherein the starting material has at least one phase selected from
Mg₂Cu, CaCu₅, SrCu₅, CuSr, BaCu, BaCu₁₃, Ca₂Ag₉, Ca₂Ag₇, CaAg₂, Ca₅Ag₃, MgAg, Mg₂₅Ag₈, SrAg₅, SrAg₂, SrAg, Sr₃Ag₂, BaAg₅, BaAg₂, BaAg, CaAu₅, CaAu₃, CaAu₂, CaAu, Ca₅Au₄, Ca₇Au₃, MgAu, Mg₂Au, Mg₃Au, SrAu₅, SrAu₂, SrAu, Sr₃Au₂, Sr₇Au₃, SrgAu, BaAu₅, BaAu₂, Ba₃Au₂, BaAu and mixtures thereof, preferably Mg₂Cu, Mg₂₅Ag₈ and/or Mg₂Au, further preferably Mg₂Cu, where M is preferably Cu.

7. Process according to either of Claims 5 and 6, wherein the catalyst material, after the removal, washing and optionally drying of the catalyst material, is calcined, preferably wherein the starting material, on introduction of the starting material into a solution having a pH of less than 5 and reacting to give a catalyst material, is not completely reacted.

8. Process according to any of Claims 5 to 7, wherein, on introduction of the starting material, at least one compound of Cu, Ag and/or Au, preferably of Cu⁺, Ag⁺ and/or Au⁺, is also introduced, and/or wherein, on introduction of the starting material, at least one carrier material selected from metal oxides, preferably Al₂O₃, MgO, TiO₂, Y₂O₃, ZrO₂ and mixtures thereof, preferably TiO₂, is also introduced, wherein the proportion of the carrier material in the catalyst material is preferably 2% to 40% by weight, further preferably 3% to 30% by weight, even further preferably 5% to 10% by weight.

9. Process according to any of Claims 5 to 8, wherein the processing of the catalyst material to give a gas diffusion electrode comprises the following steps:
- producing a mixture comprising the catalyst material and at least one binder,
- applying the mixture comprising the catalyst material and at least one binder to a substrate, preferably in the form of a sheetlike structure, and
- dry or moistened rolling of the mixture onto the carrier to form a layer; or
- applying the catalyst material to a substrate, preferably in the form of a sheetlike structure, and
- dry or moistened rolling of the catalyst material onto the carrier to form a layer.

10. Electrolysis cell comprising a gas diffusion electrode according to any of Claims 1 to 4 as cathode, an anode and optionally at least one membrane and/or at least one diaphragm between the cathode and anode.

11. Method of electrolysis of CO₂ and/or CO, wherein a gas diffusion electrode according to any of Claims 1 to 4 is used as cathode, or wherein an electrolysis cell according to Claim 10 is used.

## Revendications

1. Electrode à diffusion de gaz, comprenant un métal M choisi parmi Ag, Au, Cu et leurs mélanges et/ou alliages, l'électrode à diffusion de gaz comprenant des structures dendritiques et amorphes, l'électrode à diffusion de gaz comprenant des dendrites, qui contiennent des phases métal alcalino-terreux-cuivre, alcalino-terreux-argent et/ou alcalino-terreux-or, l'électrode à diffusion de gaz pouvant être produite par un procédé, dans lequel
- on se procure une matière de départ contenant du cuivre, de l'argent et/ou de l'or, qui comprend au moins une phase métal alcalino-terreux-cuivre, alcalino-terreux-argent et/ou alcalino-terreux-or, le métal alcalino-terreux étant choisi parmi Mg, Ca, Sr, Ba et leurs mélanges ;
- on introduit la matière de départ dans une solution ayant un pH de moins de 5 et on la transforme par réaction en une matière de catalyseur ;
- on sépare, lave et éventuelle sèche la matière de catalyseur ; et
- on transforme la matière de catalyseur en une électrode à diffusion de gaz.

2. Electrode à diffusion de gaz suivant la revendication 1, dans laquelle l'électrode à diffusion de gaz a, en outre, Cu, Ag et/ou Au à la valence +I, de préférence sous la forme d'un composé avec O, S, Se, As, Sb, d'une manière encore plus préférée sous la forme d'un oxyde.

3. Electrode à diffusion de gaz suivant la revendication 1 ou 2, comprenant, en outre, au moins une matière support choisie parmi des oxydes métalliques, de préférence Al₂O₃, MgO, TiO₂, Y₂O₃, ZrO₂ et leurs mélanges, de préférence TiO₂.

4. Electrode à diffusion de gaz suivant l'une des revendications 1 à 3, comprenant, en outre, au moins un liant et, le cas échéant, un substrat.

5. Procédé de production d'une électrode à diffusion de gaz suivant l'une des revendications 1 à 4, dans lequel
- on se procure une matière de départ contenant du cuivre, de l'argent et/ou de l'or, qui comprend au moins une phase métal alcalino-terreux-cuivre, alcalino-terreux-argent et/ou alcalino-terreux-or, le métal alcalino-terreux étant choisi parmi Mg, Ca, Sr, Ba et leurs mélanges ;
- on introduit la matière de départ dans une solution ayant un pH de moins de 5 et on la transforme par réaction en une matière de catalyseur ;
- on sépare, lave et éventuelle sèche la matière de catalyseur ; et
- on transforme la matière de catalyseur en une électrode à diffusion de gaz.

6. Procédé suivant la revendication 5, dans lequel la matière de départ comprend le métal alcalino-terreux en une quantité de 1 à 99% en atomes, de préférence de 55 à 98% en atomes, d'une manière encore préférée de 60à 95% en atomes, d'une manière encore plus préférée de 62 à 90% en atomes, de préférence la matière de départ a au moins une phase choisie parmi Mg₂Cu, CaCu₅, SrCu₅, CuSr, BaCu₁₃, Ca₂Ag₉, Ca₂Ag₇, CaAg₂, Ca₅Ag₃, MgAg, Mg₂₅Ag₈, SrAg₅, SrAg₂, SrAg, Sr₃Ag₂, BaAg₅, BaAg₂, BaAg, CaAu₅, CaAu₃, CaAu₂, CaAu, Ca₅Au₄, Ca₇Au₃, MgAu, Mg₂Au, Mg₃Au, SrAu₅, SrAu₂, SrAu, Sr₃Au₂, Sr₇Au₃, SrgAu, BaAu₅, BaAu₂, Ba₃Au₂, BaAu et leurs mélanges, de préférence Mg₂Cu, Mg₂₅Ag₈ et/ou Mg₂Au, d'une manière encore préférée Mg₂Cu, M étant de préférence Cu.

7. Procédé suivant l'une des revendications 5 et 6, dans lequel on calcine la matière du catalyseur après la séparation, le lavage et, le cas échéant, le séchage de la matière du catalyseur, dans lequel, de préférence, on ne fait pas réagir complètement la matière de départ lors de l'introduction de la matière de départ dans une solution ayant un pH de moins de 5 et de la transformation par réaction en une matière de catalyseur.

8. Procédé suivant l'une des revendications 5 à 7, dans lequel, lors de l'introduction de la matière de départ, on introduit, en outre, au moins un composé de Cu, Ag et/ou Au, de préférence de Cu⁺, Ag⁺ et/ou Au⁺, et/ou dans lequel, lors de l'introduction de la matière de départ, on introduit, en outre, au moins une matière support choisie parmi des oxydes métalliques, de préférence Al₂O₃, MgO, TiO₂, Y₂O₃, ZrO₂ et leurs mélanges, de préférence TiO₂, la proportion de la matière support dans la matière de catalyseur étant de préférence de 2 à 40% en poids, d'une manière encore préférée de 3 à 30% en poids, d'une manière encore plus préférée de 5 à 10% en poids.

9. Procédé suivant l'une des revendications 5 à 8, dans lequel la transformation de la matière de catalyseur en une électrode à diffusion de gaz comprend les stades suivants :
- la préparation d'un mélange comprenant la matière de catalyseur et au moins un liant,
- le dépôt du mélange comprenant la matière de catalyseur et au moins un liant sur un substrat, de préférence sous la forme d'une structure en nappe, et
- le calandrage à l'état sec ou à l'état humide du mélange sur le support pour former une couche ; ou
- le dépôt de la matière de catalyseur sur un substrat, de préférence sous la forme d'une structure en nappe, et
- le cylindrage à l'état sec ou à l'état humide de la matière de catalyseur sur le support pour former une couche.

10. Cellule d'électrolyse, comprenant une électrode à diffusion de gaz suivant l'une des revendications 1 à 4 comme cathode, une anode, et, le cas échéant, au moins une membrane et/ou au moins un diaphragme entre la cathode et l'anode.

11. Procédé d'électrolyse de CO₂ et/ou de CO, dans lequel on utilise une électrode à diffusion de gaz suivant l'une des revendications 1 à 4 comme cathode ou dans lequel on utilise une cellule d'électrolyse suivant la revendication 10.
